Europäisches Patentamt

European Patent Office

Office européen des brevets

(19)

(11) **EP 1 199 696 A1**

(12) **EUROPEAN PATENT APPLICATION**
published in accordance with Art. 158(3) EPC

(43) Date of publication:
24.04.2002 Bulletin 2002/17

(51) Int Cl.⁷: **G09F 9/40**, G02B 26/08

(21) Application number: 01917505.8

(22) Date of filing: 27.03.2001

(86) International application number:
**PCT/JP01/02499**

(87) International publication number:
**WO 01/73730 (04.10.2001 Gazette 2001/40)**

(84) Designated Contracting States:
**DE FR GB IT NL**

(30) Priority: 27.03.2000 JP 2000087624

(71) Applicant: **NGK INSULATORS, LTD.**
**Nagoya-City, Aichi Prefecture 467-8530 (JP)**

(72) Inventors:
• **TAKEUCHI, Yukihisa,**
**c/o NGK INSULATORS, LTD**
**Nagoya-city, Aichi 467-8530 (JP)**
• **TSUJI, Hiroyuki, c/o NGK INSULATORS, LTD**
**Nagoya-city, Aichi 467-8530 (JP)**
• **NANATAKI, Tsutomu,**
**c/o NGK INSULATORS, LTD**
**Nagoya-city, Aichi 467-8530 (JP)**

• **OHWADA, Iwao, c/o NGK INSULATORS, LTD**
**Nagoya-city, Aichi 467-8530 (JP)**
• **TOYAMA, Nobutoshi,**
**c/o NGK INSULATORS, LTD**
**Nagoya-city, Aichi 467-8530 (JP)**
• **NOGUCHI, Nobuchika,**
**c/o NGK INSULATORS, LTD**
**Nagoya-city, Aichi 467-8530 (JP)**

(74) Representative: **Paget, Hugh Charles Edward et al**
**MEWBURN ELLIS**
**York House**
**23 Kingsway**
**London WC2B 6HP (GB)**

(54) **DISPLAY DEVICE AND METHOD OF MANUFACTURE THEREOF**

(57) A display device comprises a main display device body (102) incorporated into a frame (100) constructed by assembling transparent plate members (100a, 100b, 100c), (100d). Specifically, a plurality of display blocks (110) are arranged in a matrix configuration in an opening (122) of the frame (100). Further, a substance (130) having a light-transmitting property adjusted for its refractive index, for example, a flexible type adhesive (130) made of an acrylic material is allowed to intervene at end surface portions of the respective display blocks (110) and between the display blocks (110) and the inner wall of the frame (100).

FIG. 14

EP 1 199 696 A1

## Description

### TECHNICAL FIELD

The present invention relates to a display device and a method for producing the same. In particular, the present invention relates to a display device and a method for producing the same to be preferably used for producing a large screen display device by arranging a large number of display components having an optical waveguide plate for introducing light from a light source thereinto.

### BACKGROUND ART

Those hitherto known as the display device include, for example, cathode ray tubes (CRT) and liquid crystal display devices.

Those known as the cathode ray tube include, for example, ordinary television receivers and monitor units for computers. Although the cathode ray tube has a bright screen, it consumes a large amount of electric power. Further, the cathode ray tube involves a problem such that the depth of the entire display device is large as compared with the size of the screen.

On the other hand, the liquid crystal display device is advantageous in that the entire device can be miniaturized, and the display device consumes a small amount of electric power. However, the liquid crystal display device involves problems in that it is inferior in brightness of the screen, and the field angle of the screen is narrow.

In the case of the cathode ray tube and the liquid crystal display device, it is necessary for a color screen to use a number of picture elements (image pixels) which is three times a number of picture elements used in a black-and-white screen. For this reason, other problems occur, for example, the device itself is complicated, a great deal of electric power is consumed, and it is inevitable to cause the increase in cost.

In order to solve the problems described above, the present applicant has suggested a novel display device (see, for example, Japanese Laid-Open Patent Publication No. 7-287176). As shown in FIG. 73, this display device includes actuator elements 400 arranged for respective picture elements. Each of the actuator elements 400 comprises a main actuator element 408 including a piezoelectric/electrostrictive layer 402 and an upper electrode 404 and a lower electrode 406 formed on upper and lower surfaces of the piezoelectric/electrostrictive layer 402 respectively, and a substrate 414 including a vibrating section 410 and a fixed section 412 disposed under the main actuator element 408. The lower electrode 406 of the main actuator element 408 contacts with the vibrating section 410. The main actuator element 408 is supported by the vibrating section 410.

The substrate 414 is composed of ceramics in which the vibrating section 410 and the fixed section 412 are integrated into one unit. A recess 416 is formed in the substrate 414 so that the vibrating section 410 is thin-walled.

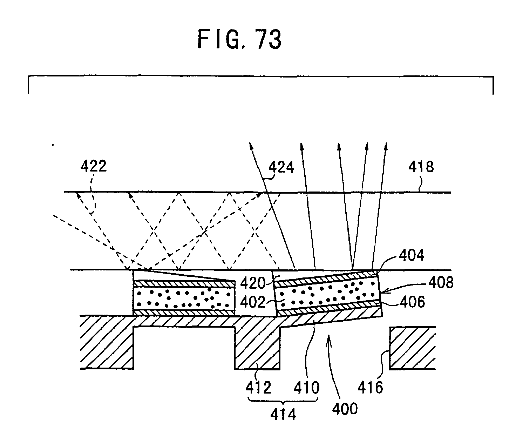

A displacement-transmitting section 420 for obtaining a predetermined size of contact area with respect to an optical waveguide plate 418 is connected to the upper electrode 404 of the main actuator element 408. In the illustrative display device shown in FIG. 73, the displacement-transmitting section 420 is arranged such that it is located closely near to the optical waveguide plate 418 in the OFF selection state or the unselection state in which the actuator element 400 stands still, while it contacts with the optical waveguide plate 418 in the ON selection state at a distance of not more than the wavelength of the light.

The light 422 is introduced, for example, from a lateral end of the optical waveguide plate 418. In this arrangement, all of the light 422 is totally reflected at the inside of the optical waveguide plate 418 without being transmitted through front and back surfaces thereof by controlling the magnitude of the refractive index of the optical waveguide plate 418. In this state, a voltage signal corresponding to an attribute of an image signal is selectively applied to the actuator element 400 by the aid of the upper electrode 404 and the lower electrode 406 so that the actuator element 400 is allowed to make a variety of displacement actions in conformity with the ON selection, the OFF selection, and the unselection. Thus, the displacement-transmitting section 420 is controlled for its contact and separation with respect to the optical waveguide plate 418. Accordingly, the scattered light (leakage light) 424 is controlled at a predetermined portion of the optical waveguide plate 418, and a picture image corresponding to the image signal is displayed on the optical waveguide plate 418.

When a color picture is displayed by using the display component, the following operation is performed. That is, for example, light sources for the three primary colors are switched to control the light emission time for the three primary colors, while synchronizing the contact time between the optical waveguide plate 418 and the displacement-transmitting section 420 with the cycle of color development. Alternatively, the contact time between the optical waveguide plate 418 and the displacement-transmitting section 420 is controlled, while synchronizing the light emission time for the three primary colors with the color development cycle.

Therefore, the illustrative display component suggested by the present applicant is advantageous in that it is unnecessary to increase the number of picture elements as compared with the black-and-white screen, even when the display device is applied to the color display system.

Recently, a display device has been also suggested, in which the light emission and the light off of the picture element are controlled on the basis of the displacement action of the actuator element as described above. In this display device, a color filter or a color scattering element is formed for each of the picture elements. Accordingly, it is unnecessary to perform the operation for switching the light sources for the three primary colors, and thus the color image is displayed more vividly.

A large number of techniques have been hitherto suggested and practically used in order to produce a large screen display component by arranging a large number of display components (see, for example, Japanese Utility Model Publication No. 4-53675 and Japanese Laid-Open Patent Publication No. 8-17086).

However, when the large screen display device is produced by arranging a large number of display components having the optical waveguide plate 418 as described above, the following problem arises. That is, if the display components are merely assembled with an adhesive or the like, then the light leaks at a boundary portion (juncture portion) of the optical waveguide plate 418, and the juncture portion is conspicuous.

It is also necessary that the design is made while considering such a feature that any disabled display component can be easily replaced with new one.

Further, when a large screen display device is installed in a variety of districts, the production cost is effectively reduced if constitutive parts are transported to a working site, and the large screen display device is successfully assembled at the working site, as compared with a case in which the large screen display device is assembled in a factory, and it is transported therefrom.

DISCLOSURE OF THE INVENTION

The present invention has been made taking the foregoing problems into consideration, an object of which is to provide a display device and a method for producing the same which make it possible to allow a juncture portion between display blocks to be scarcely conspicuous when a large screen display device is produced by arranging the plurality of display blocks.

Another object of the present invention is to provide a display device excellent in repair performance and a method for producing the same which make it possible to easily exchange a disabled display block with new one, in addition to the requirement described above.

Still another object of the present invention is to provide a display device and a method for producing the same which make it possible to assemble the display device at a working site and effectively reduce the production cost.

According to the present invention, there is provided a display device comprising two or more arranged display blocks, wherein a substance having a light-transmitting property adjusted for its refractive index exists at least at end surface portions of the respective display blocks.

When the refractive index of the substance is adjusted to be approximately the same as the refractive index of the light-transmitting portion of the display block, it is possible to obtain a large screen display device in which the juncture portion between the display blocks is scarcely conspicuous when the large screen display device is produced by arranging the plurality of display blocks.

When the large screen display device is produced by arranging the plurality of display blocks, the display blocks are preferably stacked while allowing the substance to intervene between the end surface portions of the display blocks. Therefore, when the large screen display device is installed in a variety of districts, then the plurality of display blocks are transported to a working site, and the display blocks are successfully stacked at the working site to produce the large screen display device. Accordingly, it is possible to reduce the production cost and the cost required for the transport, as compared with a case in which the large screen display device itself is transported.

The display block may be an optical guide plate for introducing light from a light source thereinto with its first principal surface on which display components are fixed. In this arrangement, the following method may be adopted. That is, a large optical guide plate is produced by arranging a plurality of optical guide plates. Assuming that one or more display components constitute one unit, a plurality of units are fixed on the first principal surface of the large optical guide plate, for example, with an adhesive to produce the large screen display device.

Also, the display block may include an optical guide plate for introducing light from a light source thereinto, and one or more display components fixed to a first principal surface of the optical guide plate. In this arrangement, it is possible to adopt a method in which one or more display components are secured, for example, with an adhesive to the optical guide plate to produce one display block, and a large screen display device is produced by arranging a plurality of display blocks.

In the methods as described above, it is preferable to use a display component described, for example, especially in Japanese Laid-Open Patent Publication Nos. 10-78549 and 11-194723. That is, the display component described in these patent documents comprises an optical waveguide plate for introducing light from a light source thereinto, a ceramic substrate provided opposingly to a back surface of the optical waveguide plate, and a large number of picture element assemblies arranged between the optical waveguide plate and the ceramic substrate. Any warpage occurs in the ceramic substrate in some cases due to the shrinkage phenomenon during the sintering. Any warpage also occurs in the entire display component resulting therefrom in some cases.

However, when the method of the present invention described above is used, the display components are secured to the optical guide plate with the adhesive. Therefore, for example, the entire first principal surface (display surface) of the optical waveguide plate of each of the display components is secured to the optical guide plate with the adhesive intervening therebetween. At this stage, the warpage, which has occurred in the display component, is absorbed by the adhesive. Thus, the display component is tightly secured to the optical guide plate.

The substance having the light-transmitting property adjusted for its refractive index will now be explained. At first, as for the refractive index of the substance, it is preferable that the difference between the refractive index of the display block and the refractive index of the substance is decreased to be as small as possible, in order to avoid any sense of incongruity at the juncture of the display blocks. The allowable difference in refractive index also relates to the thickness of the display block. However, assuming that the refractive index of the optical guide plate of the display block is $N_1$, the sense of incongruity can be generally avoided at the juncture if the refractive index $N_2$ of the substance satisfies the following expression:

$$0.9N_1 \leq N_2 \leq 1.1N_1$$

In addition to the effect described above, the thickness of the optical guide plate can be increased, and the assembling performance and the stability of the structure after the assembling are improved, if the refractive index $N_2$ of the substance satisfies the following expression:

$$0.99N_1 \leq N_2 \leq 1.01N_1$$

On the other hand, the juncture of the display blocks involves a structural problem such that the display blocks are arranged. For this reason, the pitch of the picture element ranging over the juncture is larger than the ordinary pitch of the picture element, and the juncture is conspicuous in many cases. Accordingly, the refractive index is preferably adjusted to satisfy the following expression:

$$N_1 < N_2 \leq 1.01N_1$$

Accordingly, when the light emitted from the picture element passes through the juncture portion, the light is refracted in accordance with the relationship of the refractive indexes adjusted as described above. At the stage that the light outgoes from the display surface, the pitch of the picture element ranging over the juncture consequently approaches the ordinary pitch of the picture element. Thus, it is possible to mitigate the sense of incongruity at the juncture.

The light-transmitting property of the substance is preferably determined in order that the light is successfully introduced up to the display component in an efficient manner, and the electric power consumption is suppressed. That is, it is preferable that the transmittance is not less than 50 % for the incident light at the right angle at the wavelength in the visible light region. It is more preferable that the transmittance is not less than 70 %.

The form of the substance may be any one of gas, liquid, and solid, or it may be a mixture thereof, provided that the substance satisfies the foregoing conditions.

Next, the optical guide plate of the display block will be explained. The shape of the optical guide plate may be any one including, for example, rectangular parallelepiped, prism, column, and truncated pyramid, provided that the display component can be secured thereto, and the display component can be stacked in a stable manner. However, the shape is preferably rectangular parallelepiped in view of the machining performance and the assembling performance.

In view of the assembling performance and the repair performance, the size of the optical guide plate is preferably a size having a length of 40 mm to 500 mm and a width of 40 mm to 500 mm. The thickness is preferably 2 mm to 40 mm in order to satisfy both of the assembling performance and the disappearance of the sense of incongruity at the juncture.

The material for the optical guide plate may be either an inorganic material or an organic material, provided that the light-transmitting property is satisfactory at the wavelength in the visible light region. Specifically, it is possible to use a simple substance or a combined material composed of, for example, glass, quartz, light-transmitting alumina, acrylic resin, methacrylic resin, polycarbonate, vinyl chloride resin, phenol resin, vinyl acetate resin, ABS, fluororesin, and unsaturated polyester resin. Especially, in view of the cost and the machining performance, it is preferable to use glass, acrylic resin, and methacrylic resin. As for the glass, it is preferable to use, for example, Vycor glass, 96 % silicate glass, alumino silicate glass, borosilicate glass, zinc borosilicate glass, and barium borosilicate glass. As for the light-transmitting property, it is preferable that the transmittance is not less than 50 % for the perpendicular incident light at the wavelength in the visible light region. It is more preferable that the transmittance is not less than 70 %.

It is also preferable that the substance having the light-transmitting property adjusted for its refractive index, which exists at the end surface portions of the respective display blocks, is an adhesive.

Explanation will now be made for the adhesive for securing the display component to the optical waveguide plate and the adhesive as the substance. The adhesive herein intends to include adhesive, glue or sticker, adhesive to be solidified after curing, adhesive to be flexible after curing, rubber-like adhesive, and gel-like adhesive.

The curing method is not specifically limited, including, for example, those of the types of UV setting, hot setting, cold setting, condensation setting, addition setting, and two-part setting.

The material may be either an inorganic material or an organic material, provided that the light-transmitting property is satisfactory at the wavelength in the visible light region. It is preferable to use those which have high insulating performance and low ignitability. It is more preferable to use those which are excellent in wettability with respect to the optical guide plate and which are stable for a long period of time, for example, against heat, light, and moisture.

Specifically, it is possible to use a simple substance or a combined material based on, for example, ureaformaldehyde resin, phenol resin, epoxy resin, acrylic resin, methacrylic resin, cyanoacrylate, polyurethane, emulsion, hot melt, synthetic rubber, and natural rubber.

Especially, as for the adhesive for securing the display component to the optical waveguide plate, it is preferable to use the adhesive to be solidified after curing, in order to avoid any securing discrepancy of the display component. In order to mitigate the thermal expansion, it is preferable to use the adhesive to be flexible after curing and the rubber-like adhesive. As for the adhesive as the substance having the light-transmitting property adjusted for its refractive index, it is preferable to use the adhesive to be flexible after curing, the rubber-like adhesive, and the gel-like adhesive, in order to effect the mitigation of the thermal expansion and the detachment performance upon repair.

In other words, when those to be completely solidified are used as the adhesive, the respective display blocks are tightly secured with the adhesive. Therefore, it is possible to obtain the large screen display device having high mechanical strength. However, it is difficult to exchange any disabled display block with new one. Therefore, such an adhesive is preferably adopted to the large screen display device which assumes the collective exchange all at once.

When those having flexibility are used as the adhesive, then it is possible to obtain the large screen display device having high mechanical strength, and it is easy to perform cutting. Therefore, it is easy to exchange any disabled display block with new one. Therefore, such an adhesive is excellent in the repair performance. Further, such an adhesive is effective to mitigate the thermal stress generated by the thermal expansion.

It is preferable that the surface of the optical guide plate is coated with a hard coating material. Accordingly, it is possible to avoid any scratch on the surface of each of the optical guide plates. For example, it is possible to previously avoid such a phenomenon that the white dot locally appears when the black is displayed, or the brightness is increased as a whole.

The coating of the hard coating material referred to herein means the formation of a film or coating of a material having a hardness higher than that of the material for the optical guide plate on the surface of the optical guide plate. The coating on the front and back surfaces of the optical guide plate is important to avoid the scratch. However, it is not necessarily indispensable to apply the coating to the end surfaces. Specifically, those usable as the hard coating material include, for example, acrylic hard coating materials and silicone hard coating materials.

It is preferable that the end surface of the optical waveguide plate or the display block to serve as the optical waveguide plate of the display component is mirror-finished. Accordingly, it is possible to lower, up to the level of no sense of incongruity, the leakage of light from the juncture between the optical waveguide plates. Thus, the juncture is scarcely conspicuous. Further, it is also possible to ensure a desired angle of visibility. In the mirror-finishing, in order to avoid any sense of incongruity at the juncture, it is preferable that Rmax is not more than 0.3, and it is more preferable that Rmax is not more than 0.05.

Further, it is preferable that when the optical waveguide plate or the display block to serve as the optical waveguide plate of the display component is machined, then the dimensional accuracy of the display block or the optical waveguide plate is not more than $\pm 0.1$ mm with respect to the reference dimension of 100 mm, the perpendicularity between the end surfaces and between the end surface and the flat surface is not more than 0.1 mm, and the parallelism between the end surfaces and between the flat surfaces is not more than 0.1 mm. It is more preferable that the dimensional accuracy of the display block or the optical waveguide plate is not more than $\pm 0.03$ mm with respect to the reference dimension of 100 mm, the perpendicularity between the end surfaces and between the end surface and the flat surface is not more than 0.03 mm, and the parallelism between the end surfaces and between the flat surfaces is not more than 0.03 mm.

Accordingly, it is possible to decrease the cumulative pitch error of the display block during the assembling. As a result, it is possible to reduce the distortion of the image which would be otherwise caused by the discrepancy of the pitch of the picture element. It is possible to decrease the gap dispersion of the juncture, and it is possible to make the juncture to be more inconspicuous.

Alternatively, the substance having the light-transmitting property adjusted for its refractive index, which exists at the end surface portions of the respective display blocks, may be matching oil. In this arrangement, the obtained mechanical strength is not equivalent to that obtained by the adhesive. However, it is easy to exchange the disabled display block with new one. Therefore, this arrangement is advantageous in repair performance.

Of course, it is also preferable that both of the adhesive and the matching oil are used as the substance having the light-transmitting property adjusted for its refractive index. For example, a plurality of units (units of display blocks) are prepared, each of which is obtained by securing, with the adhesive, the display blocks of a number suitable for the collective exchange. When the units of the display blocks are arranged, the matching oil is allowed to intervene at end surface portions thereof. Accordingly, the mechanical strength can be ensured, and it is possible to achieve the improvement in repair performance.

In this arrangement, the matching oil is in a form of liquid or grease. The matching oil may be made of either an inorganic material or an organic material, provided that the light transmittance is satisfactory at the wavelength in the visible light region. It is preferable to use those which have high insulating performance and low ignitability. It is more preferable to use those which are excellent in wettability with respect to the optical guide plate and which are stable for a long period of time, for example, against heat, light, and moisture. Specifically, the matching oil includes, for example, dimethyl silicone oil, methyl phenyl silicone oil, glycerol, di-2-ethylhexyl phthalate, silicone grease, and optical gel.

When the matching oil in a liquid form is used, it is preferable that the viscosity is 100 to 1000 cSt, in order to simultaneously satisfy the two factors, i.e., the bubble generated upon application is easily released, and the liquid neither flow nor trickle excessively.

In the present invention, when the plurality of display blocks are arranged in the matrix configuration, it is also preferable that vertically ruled and/or horizontally ruled support members are allowed to intervene between at least two of the display blocks. In this arrangement, it is possible to adopt a method in which the vertically ruled and/or horizontally ruled support members are installed before the plurality of display blocks are arranged in the matrix configuration, and the support members are arranged so that they are interposed between at least two of the display blocks to produce the large screen display device.

Accordingly, it is possible to cancel the cumulative pitch error which would be otherwise caused during the process of stacking the display blocks, owing to the presence of the support members. Further, it is possible to absorb the dimensional dispersion of each of the display blocks. As a result, it is possible to reduce the distortion of the image which would be otherwise caused by the discrepancy of the pitch of the picture element. It is possible to decrease the gap dispersion of the juncture, and it is possible to make the juncture to be more inconspicuous.

In this arrangement, it is preferable that at least the surface of the support member, to which the end surface of the display block is opposed, is mirror-finished. Accordingly, it is possible to make the juncture to be inconspicuous, and it is possible to ensure the angle of visibility.

It is also preferable that the support member is formed to have a lattice-shaped configuration. In this arrangement, it is possible to tightly hold the display blocks. Further, it is possible to eliminate the cumulative pitch error in the vertical direction and in the horizontal direction. Furthermore, it is extremely easy to stack the display blocks, and it is possible to reduce the number of steps.

The support member may be made of either an inorganic material or an organic material, provided that the light-transmitting property is satisfactory at the wavelength in the visible light region. Specifically, it is possible to use a simple substance or a combined material composed of, for example, glass, quartz, light-transmitting alumina, acrylic resin, methacrylic resin, polycarbonate, vinyl chloride resin, phenol resin, vinyl acetate resin, ABS, fluororesin, and unsaturated polyester resin.

The support member is preferably made of the same material as that for the optical guide plate of the display block, for example, in view of the fact that the refractive index is identical, and the coefficient of thermal expansion is identical. As for the light-transmitting property, it is preferable that the transmittance is not less than 50 % for the perpendicular incident light at the wavelength in the visible light region. It is more preferable that the transmittance is not less than 70 %. The thickness of the support member is preferably 0.5 to 10 mm in order that there is no sense of incongruity at the juncture, and the support member has rigidity as a structural member.

It is also preferable that the display device of the present invention further comprises another optical guide plate arranged for a display surface formed by arranging first principal surfaces of the plurality of display blocks, wherein a substance having a light-transmitting property adjusted for its refractive index is allowed to exist between the display surface and the another optical guide plate. In this case, for example, it is possible to adopt a method in which another optical guide plate having a large size is prepared, the display surfaces of the display blocks are opposed to the first principal surface of the another optical guide plate, and the substance having the light-transmitting property adjusted for its refractive index is allowed to intervene between the surfaces, while the display blocks are arranged along the first principal surface, and thus a large screen display device is produced. This arrangement is advantageous in that the juncture of the display blocks is inconspicuous. Further, the assembling performance is satisfactory. Especially, when the matching oil is used as the substance having the light-transmitting property adjusted for its refractive index, the repair performance is also satisfactory. In this case, it is preferable to allow a seal member to intervene between the matching oil and the atmospheric air.

The seal member includes adhesive, glue or sticker, adhesive to be solidified after curing, adhesive to be flexible after curing, rubber-like adhesive, and gel-like adhesive. Alternatively, the seal member may be obtained by depositing such a material on a film-shaped member.

The material may be either an inorganic material or an organic material. It is preferable to use a material which does not cause any reaction with a substance to make contact therewith. Specifically, for example, it is possible to use those based on silicone, modified silicone, polysulfide, polyurethane, acrylic, epoxy, SBR, and butyl rubber.

It is preferable that the end of the seal member, which contacts with the atmospheric air, is subjected to surface adjustment with respect to (flushed with) the plane of the optical guide plate, in order that the light traveling in the optical guide plate is reflected at an appropriate angle. When a light-absorbing material is applied to the end, the light, which incomes at an unsuitable angle, can be absorbed. Therefore, it is possible to improve the image quality. In this case, it is unnecessary to make the surface adjustment for the end with respect to the optical guide plate. Accordingly, the degree of freedom of design is increased. Those usable as the light-absorbing material include, for example, pigments and dyes.

The another optical guide plate having the large size may be manufactured such that a plurality of divided optical guide plates are arranged in a matrix configuration, and they are secured to one another with an adhesive having a light-transmitting property adjusted for its refractive index.

The another optical guide plate may be made of either an inorganic material or an organic material, provided that the light-transmitting property is satisfactory at the wavelength in the visible light region. Specifically, it is possible to use a simple substance or a combined material composed of, for example, glass, quartz, light-transmitting alumina, acrylic resin, methacrylic resin, polycarbonate, vinyl chloride resin, phenol resin, vinyl acetate resin, ABS, fluororesin, and unsaturated polyester resin.

The another optical guide plate is preferably made of the same material as that for the optical guide plate of the display block, for example, in view of the fact that the refractive index is identical, and the coefficient of thermal expansion is identical. As for the light-transmitting property, it is preferable that the transmittance is not less than 50 % for the perpendicular incident light at the wavelength in the visible light region. It is more preferable that the transmittance is not less than 70 %. The thickness of the another optical guide plate is preferably 0.5 to 10 mm in view of the assembling performance.

It is not necessarily indispensable that the substance having the light-transmitting property adjusted for its refractive index (conveniently referred to as "first substance"), which is allowed to exist between the display surface and the another optical guide plate, is identical with the substance having the light-transmitting property adjusted for its refractive index (conveniently referred to as "second substance") which is allowed to exist at the end surface portion of the display block.

When the first and second substances are composed of different materials, it is preferable that the refractive index $N_3$ of the first substance satisfies the following expression, provided that the refractive index of the optical guide plate of the display block is $N_1$, and the refractive index of the another optical guide plate is $N_2$:

$$0.9N_1 \leq N_3 \leq 1.1N_2 \ (N_1 \leq N_2) \ or$$

$$0.9N_2 \leq N_3 \leq 1.1N_1 \ (N_2 \leq N_1)$$

Accordingly, the light can be sufficiently introduced into the display component, and it is possible to ensure the display brightness of the screen. In order to efficiently introduce the light into the display component and suppress the electric power consumption, it is preferable that the transmittance is not less than 50 % for the perpendicular incident light at the wavelength in the visible light region. It is more preferable that the transmittance is not less than 70 %.

When the first and second substances are composed of mutually different materials, and when the both are liquid, it is possible to prevent them from being mixed with each other by allowing a seal member to intervene between the both. When at least any one of them is solid or when both of them are solid, they are not mixed with each other. Therefore, it is possible to omit the installation of the seal member. When the foregoing conditions are satisfied, the first and second substances may be in any form including gas, liquid, and solid, or they may be a mixture thereof.

In the present invention, it is also preferable that the main display device body, which is constructed by arranging the plurality of display blocks, is accommodated in a vessel with its at least one surface having transparency; and a substance having a light-transmitting property adjusted for its refractive index is allowed to exist at least between a display surface formed by arranging first principal surfaces of the plurality of display blocks and the surface of the vessel having the transparency.

In this arrangement, it is possible to adopt a method in which the main display device body constructed by arranging the plurality of display blocks is accommodated in the vessel, and the vessel is filled therein with the substance having the light-transmitting property adjusted for its refractive index to produce the large screen display device.

The surface having the transparency, of the surfaces for constructing the vessel may be made of either an inorganic material or an organic material, provided that the light-transmitting property is satisfactory at the wavelength in the visible light region. Specifically, it is possible to use a simple substance or a combined material composed of, for example, glass, quartz, light-transmitting alumina, acrylic resin, methacrylic resin, polycarbonate, vinyl chloride resin, phenol resin, vinyl acetate resin, ABS, fluororesin, and unsaturated polyester resin.

The surface of the vessel is preferably made of the same material as that for the optical guide plate of the display block, for example, in view of the fact that the refractive index is identical, and the coefficient of thermal expansion is identical. As for the light-transmitting property, it is preferable that the transmittance is not less than 50 % for the perpendicular incident light at the wavelength in the visible light region. It is more preferable that the transmittance is not less than 70 %. The thickness of the surface is preferably 0.5 to 100 mm in view of the assembling performance.

It is also possible to adopt a method comprising allowing a display surface of the display block to be opposed to a first principal surface of a plate member having transparency, and allowing a substance having a light-transmitting property adjusted for its refractive index to intervene between the surfaces, wherein the display blocks are arranged along the first principal surface, and a vessel including a constitutive component of the plate member is produced, so that the vessel is filled therein with the substance having the light-transmitting property adjusted for its refractive index to produce a large screen display device.

When matching oil is used as the substance having the light-transmitting property adjusted for its refractive index, it is necessary to allow a seal member to intervene between the substance and the atmospheric air. However, in the arrangement described above, the main display device body is consequently accommodated in the vessel filled with the matching oil. Therefore, it is unnecessary to use the seal member. This arrangement is also advantageous in that the juncture between the display blocks is inconspicuous. Further, the assembling performance is satisfactory, and the repair performance is satisfactory as well.

It is also preferable to use, as the plate member having the transparency, a member obtained by arranging a plurality of divided plates in a matrix configuration, and securing them to one another with an adhesive having a light-transmitting property adjusted for its refractive index. In this arrangement, it is possible to use the plate member which is compact and inexpensive. Further, it is possible to use the plate member having a good quality having few defects such as bubbles and foreign matters at the inside.

The arrangement described above may be exemplarily modified as follows. That is, a substance, which is different from the substance having the light-transmitting property adjusted for its refractive index, is allowed to exist between the vessel and the surface of the main display device body disposed oppositely to the display surface. In this arrangement, it is possible to adopt a method comprising allowing a display surface of the display block to be opposed to a first principal surface of a plate member having transparency, and allowing a substance having a light-transmitting property adjusted for its refractive index to intervene between the surfaces, wherein the display blocks are arranged along the first principal surface, and a vessel including a constitutive component of the plate member is produced, so that the vessel is filled therein with another substance which is different from the substance having the light-transmitting property adjusted for its refractive index to produce the display device.

In the case of this arrangement, when the substance having the light-transmitting property adjusted for its refractive index is matching oil, it is preferable to allow a seal member to intervene between the matching oil and the another substance. In the case of the arrangement described above, the substance having the light-transmitting property adjusted for its refractive index tends to be expensive. However, it is possible to decrease the range of the use of the substance. Therefore, this arrangement is advantageous to reduce the production cost, and it is advantageous in that no bubble is generated in the substance having the light-transmitting property adjusted for its refractive index.

The another substance and the substance having the light-transmitting property such as the matching oil to be charged in the vessel are preferably in the form of liquid or grease. The driving circuit of the main display device body is also immersed in the substances. Therefore, it is preferable to use those which have high insulating performance and low ignitability. When the another substance to be used has a specific gravity which is equivalent to that of the substance having the light-transmitting property adjusted for its refractive index, the pressure, which is exerted on the display block, is uniform without being affected by the depth, which is preferred.

It is preferable that a light-absorbing member is provided at a circumferential portion of the display component. Accordingly, it is possible to reduce the leakage light coming into the display surface from the back of the display component through the juncture portion of the display component.

Especially, when the light-absorbing member also serves as an enclosing member for enclosing the circumferential portion of the display component, the display component is prevented from any invasion thereinto of the substance having the light-transmitting property adjusted for its refractive index existing between the display blocks. Thus, it is possible to avoid any deterioration of the image quality.

It is also preferable that a light-absorbing layer is stuck to a portion corresponding to a bright defect of the display block. The bright defect refers to a bright portion which is recognized as a white dot, for example, when the black color is displayed or when a dark background is displayed. Accordingly, the light spot caused by the bright defect is absorbed by the light-absorbing layer, and it is inconspicuous from the display surface.

When the display component is a display component comprising an optical waveguide plate for introducing light from a light source thereinto, and a driving section provided opposingly to a first plate surface of the optical waveguide plate and arranged with actuator elements of a number corresponding to a large number of picture elements, wherein a screen image corresponding to an image signal is displayed on the optical waveguide plate by controlling a displacement action of the actuator element in a direction to make contact or separation with respect to the optical waveguide plate in accordance with an attribute of the image signal to be inputted so that leakage light is controlled at a predetermined portion of the optical waveguide plate; the bright defect is based on the fact that the actuator element is always displaced in a direction to make contact with the optical waveguide plate. In another case, the bright defect is based on a defect existing in the optical waveguide plate which is one of constitutive members of the display component. In still another case, the bright defect is based on a defect existing in the optical guide plate for introducing the light from the light source thereinto. In still another case, the bright defect is based on any foreign matter with which the substance having the light-transmitting property adjusted for its refractive index is contaminated.

Especially, when the light-absorbing layer is stuck onto the optical waveguide plate of the display component, the bright defect can be repaired for each of the divided display components. Therefore, the display device itself has a small size, and it can be produced at low cost. This arrangement is advantageous also from a viewpoint of the positioning accuracy.

In the present invention, it is also preferable that a dam, which serves to prevent the substance having the light-transmitting property from being moved in a roundabout way to a back surface side of the display component, is provided on a back surface of the display component.

BRIEF DESCRIPTION OF THE DRAWINGS

FIG. 1 shows an arrangement illustrating a display component for constructing a display device according to an embodiment of the present invention;
FIG. 2 illustrates an arrangement of picture elements of the display component;
FIG. 3 shows a sectional view depicting a first illustrative arrangement of an actuator element and a picture element assembly;
FIG. 4 shows an example of a planar configuration of a pair of electrodes formed on the actuator element;

FIG. 5A illustrates an example in which comb teeth of the pair of electrodes are arranged along the major axis of a shape-retaining layer;
FIG. 5B illustrates another example;
FIG. 6A illustrates an example in which comb teeth of the pair of electrodes are arranged along the minor axis of a shape-retaining layer;
FIG. 6B illustrates another example;
FIG. 7 shows a sectional view illustrating another arrangement of a display component;
FIG. 8 shows a sectional view depicting a second illustrative arrangement of an actuator element and a picture element assembly;
FIG. 9 shows a sectional view depicting a third illustrative arrangement of an actuator element and a picture element assembly;
FIG. 10 shows a sectional view depicting a fourth illustrative arrangement of an actuator element and a picture element assembly;
FIG. 11 illustrates an arrangement obtained when crosspieces are formed at four corners of the picture element assemblies respectively;
FIG. 12 illustrates another arrangement of the crosspiece;
FIG. 13 shows a table illustrating an example of the relationship concerning the offset potential (bias potential) outputted from a row electrode-driving circuit, the electric potentials of an ON signal and an OFF signal outputted from a column electrode-driving circuit, and the voltage applied between a row electrode and a column electrode;
FIG. 14 shows an arrangement illustrating a display device according to a first embodiment;
FIG. 15 shows an arrangement illustrating an example of a display block;
FIG. 16 shows an arrangement illustrating another example of a display block;
FIG. 17 illustrates an example in which display blocks are stacked and secured in a frame;
FIG. 18 illustrates the pitch of the picture element at the juncture portion of the display blocks;
FIG. 19 shows, with partial omission, an arrangement illustrating a display device according to a first modified embodiment;
FIG. 20 shows, with partial omission, an arrangement illustrating a display device according to a second modified embodiment;
FIG. 21 shows, with partial omission, an arrangement illustrating a display device according to a third modified embodiment;
FIG. 22 shows, with partial omission, an arrangement illustrating a display device according to a fourth modified embodiment;
FIG. 23 shows, with partial omission, an arrangement illustrating a display device according to a fifth modified embodiment;
FIG. 24 shows, with partial omission, an arrangement illustrating a display device according to a second embodiment;

FIG. 25 shows, with partial omission, an arrangement illustrating a display device according to a sixth modified embodiment;

FIG. 26 shows, with partial omission, an arrangement illustrating a display device according to a seventh modified embodiment;

FIG. 27 shows, with partial omission, an arrangement illustrating a display device according to an eighth modified embodiment;

FIG. 28 shows, with partial omission, an arrangement illustrating a display device according to a ninth modified embodiment;

FIG. 29 shows, with partial omission, an arrangement illustrating a display device according to a tenth modified embodiment;

FIG. 30 shows, with partial omission, a sectional view illustrating a display device according to a third embodiment;

FIG. 31 shows, with partial omission, a plan view illustrating the display device according to the third embodiment;

FIG. 32 shows a magnified view illustrating an example of an end surface portion of a display block;

FIG. 33 shows a magnified view illustrating another example of an end surface portion of a display block;

FIG. 34 shows a magnified view illustrating still another example of an end surface portion of a display block;

FIG. 35 shows, with partial omission, a sectional view illustrating a display device according to an eleventh modified embodiment;

FIG. 36 shows, with partial omission, a plan view illustrating the display device according to the eleventh modified embodiment;

FIG. 37 illustrates the relationship concerning the thickness of the divided optical guide plate and the refractive index of the substance (matching oil);

FIG. 38 shows a characteristic curve illustrating the relationship concerning the thickness of the divided optical guide plate and the difference between the refractive index of the divided optical guide plate and the refractive index of the substance (matching oil);

FIG. 39 shows, with partial omission, a sectional view illustrating a display device according to a fourth embodiment;

FIG. 40 shows, with partial omission, a plan view illustrating the display device according to the fourth embodiment;

FIG. 41 illustrates an example of the method for fixing the display block;

FIG. 42 illustrates another example of the method for fixing the display block;

FIG. 43 shows, with partial omission, a sectional view illustrating a display device according to a twelfth modified embodiment;

FIG. 44 shows, with partial omission, a plan view illustrating the display device according to the twelfth modified embodiment;

FIG. 45 shows, with partial omission, a sectional view illustrating a display device according to a thirteenth modified embodiment;

FIG. 46 shows, with partial omission, a plan view illustrating the display device according to the thirteenth modified embodiment;

FIG. 47 shows, with partial omission, a sectional view illustrating a display device according to a fourteenth modified embodiment;

FIG. 48 shows, with partial omission, a plan view illustrating the display device according to the fourteenth modified embodiment;

FIG. 49 shows, with partial omission, a sectional view illustrating a display device according to a fifteenth modified embodiment;

FIG. 50 shows, with partial omission, a plan view illustrating the display device according to the fifteenth modified embodiment;

FIG. 51 shows a magnified view illustrating an example of an end surface portion of a display block, in the display device according to the fifteenth modified embodiment;

FIG. 52 shows, with partial omission, a sectional view illustrating a display device according to a sixteenth modified embodiment;

FIG. 53 shows, with partial omission, a plan view illustrating the display device according to the sixteenth modified embodiment;

FIG. 54 shows, with partial omission, a plan view illustrating a display device according to a seventeenth modified embodiment;

FIG. 55 shows, with partial omission, a sectional view illustrating the display device according to the seventeenth modified embodiment;

FIG. 56 shows a magnified sectional view illustrating a structure between display components;

FIG. 57A shows a plan view illustrating an example in which three projections are provided as protruding sections for an optical waveguide plate of a display component;

FIG. 57B shows a plan view illustrating an example in which band-shaped protruding sections are provided as protruding sections for an optical waveguide plate of a display component;

FIG. 57C shows a plan view illustrating an example in which a frame-shaped protruding section are provided as a protruding section for an optical waveguide plate of a display component;

FIG. 58A shows a plan view illustrating a first exemplary arrangement in which projections are provided for an optical waveguide plate;

FIG. 58B shows a plan view illustrating a second exemplary arrangement in which projections are provided for an optical waveguide plate;

FIG. 59A shows a plan view illustrating a third exemplary arrangement in which projections are provided for an optical waveguide plate;

FIG. 59B shows a plan view illustrating a fourth exemplary arrangement in which projections are provided for an optical waveguide plate;

FIG. 60 shows a sectional view illustrating an exemplary arrangement in which beads are mixed in a substance such as matching oil;

FIG. 61 shows another exemplary arrangement in which a dam is provided on a back surface of a display component;

FIG. 62 shows a sectional view illustrating a sealing structure between display components;

FIG. 63 illustrates an expansion caused by a substance such as matching oil at a lower portion of a large optical guide plate;

FIG. 64 shows a front view illustrating a first countermeasure arrangement;

FIG. 65A shows a front view illustrating a second countermeasure arrangement;

FIG. 65B shows a sectional view taken along a line XXXXXXVB-XXXXXXVB shown in FIG. 65A;

FIG. 66 shows a flow chart illustrating an example of the method for determining the arrangement of the display components;

FIG. 67A shows a table illustrating an example of the criterion for ranking the display components on the basis of characteristic values;

FIG. 67B shows a table illustrating the contents of the ranking to overall ranks;

FIG. 68A illustrates an arrangement form of the display units for the first display;

FIG. 68B illustrates an arrangement form of the display units for the second display;

FIG. 69A illustrates an example of the order used when the display units are arranged in a central portion of an arrangement area;

FIG. 69B illustrates another example;

FIG. 70A illustrates an example of the order used when the display units are arranged in a peripheral portion of an arrangement area;

FIG. 70B illustrates another example;

FIG. 71 depicts a first illustrative arrangement of the display based on the divided panel system;

FIG. 72 depicts a second illustrative arrangement of the display based on the divided panel system; and

FIG. 73 shows an arrangement illustrating a display component concerning an exemplary conventional technique.

BEST MODE FOR CARRYING OUT THE INVENTION

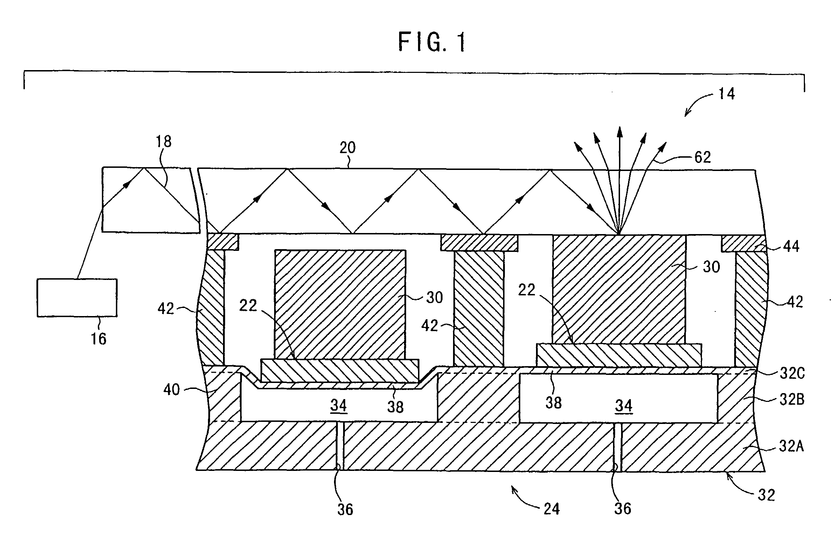

Illustrative embodiments of the display device and the method for producing the same according to the present invention will be explained below with reference to FIGS. 1 to 72.

At first, explanation will be made with reference to FIGS. 1 to 13 for an arrangement of a display component 14 which is applied to the display device according to this embodiment.

As shown in FIG. 1, the display component 14 comprises an optical waveguide plate 20 for introducing light 18 from a light source 16 thereinto, and a driving section 24 provided opposingly to the back surface of the optical waveguide plate 20 and including a large number of actuator elements 22 which are arranged corresponding to picture elements (image pixels) in a matrix configuration or in a zigzag configuration.

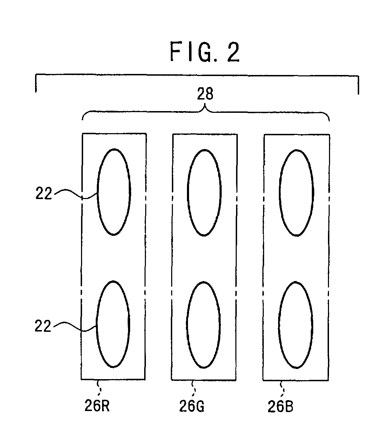

The arrangement of the picture element array is as follows, for example, as shown in FIG. 2. That is, one dot 26 is constructed by two actuator elements 22 which are aligned in the vertical direction. One picture element 28 is constructed by three dots 26 (red dot 26R, green dot 26G, and blue dot 26B) which are aligned in the horizontal direction. In the display component 14, the picture elements 28 are aligned such that sixteen individuals (48 dots) are arranged in the horizontal direction, and sixteen individuals (16 dots) are arranged in the vertical direction.

In the display component 14, a picture element assembly 30 is stacked on each of the actuator elements 22. The picture element assembly 30 functions such that the contact area with the optical waveguide plate 20 is increased to give an areal size corresponding to the picture element.

The driving section 24 includes an actuator substrate 32 composed of, for example, ceramics. The actuator elements 22 are arranged at positions corresponding to the respective picture elements 28 on the actuator substrate 32. The actuator substrate 32 has its first principal surface which is arranged to oppose to the back surface of the optical waveguide plate 20. The first principal surface is a continuous surface (flushed surface). Hollow spaces 34 for forming respective vibrating sections as described later on are provided at positions corresponding to the respective picture elements 28 at the inside of the actuator substrate 32. The respective hollow spaces 34 communicate with the outside via through-holes 36 each having a small diameter and provided at the second end surface of the actuator substrate 32.

The portion of the actuator substrate 32, at which the hollow space 34 is formed, is thin-walled. The other portion of the actuator substrate 32 is thick-walled. The thin-walled portion has a structure which tends to undergo vibration in response to external stress, and it functions as a vibrating section 38. The portion other than the hollow space 34 is thick-walled, and it functions as a fixed section 40 for supporting the vibrating section 38.

That is, the actuator substrate 32 has a stacked structure comprising a substrate layer 32A as a lowermost layer, a spacer layer 32B as an intermediate layer, and a thin plate layer 32C as an uppermost layer. The actuator substrate 32 can be recognized as an integrated structure including the hollow spaces 34 formed at the positions in the spacer layer 32B corresponding to the actuator elements 22. The substrate layer 32A functions as a substrate for reinforcement, as well as it functions as a substrate for wiring. The actuator substrate 32 may be sintered in an integrated manner, or it may be additionally attached.

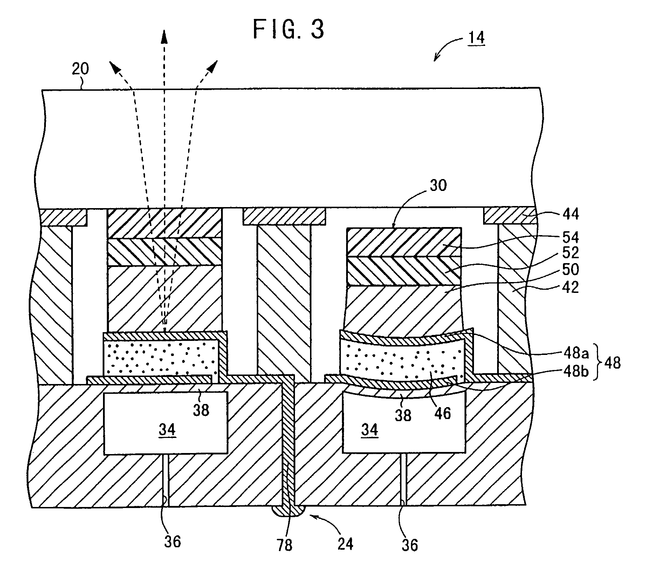

Specified embodiments of the actuator element 22 and the picture element assembly 30 will now be explained with reference to FIGS. 3 to 12. The embodiments shown in FIGS. 3 to 12 are illustrative of a case in which a gap-forming layer 44 is provided between the optical waveguide plate 20 and a crosspiece 42 as described later on. A light-shielding layer is preferably used as the gap-forming layer 44. Those usable as the light-shielding layer include, for example, metals having low light-absorbing abilities such as Cr, Al, Ni, and Ag, resins containing carbon black, black pigment, or black dye, and cured transparent resins having low light-scattering properties. In this arrangement, the light-shielding layer functions as a black matrix.

As shown in FIG. 3, each of the actuator elements 22 comprises the vibrating section 38 and the fixed section 40 described above, as well as a shape-retaining layer 46 composed of, for example, a piezoelectric/electrostrictive layer or an anti-ferroelectric layer directly formed on the vibrating section 38, and a pair of electrodes 48 (a row electrode 48a and a column electrode 48b) formed on an upper surface and a lower surface of the shape-retaining layer 46.

As shown in FIG. 3, the pair of electrodes 48 may have a structure in which they are formed on upper and lower sides of the shape-retaining layer 46, or they are formed on only one side of the shape-retaining layer 46. Alternatively, the pair of electrodes 48 may be formed on only the upper portion of the shape-retaining layer 46.

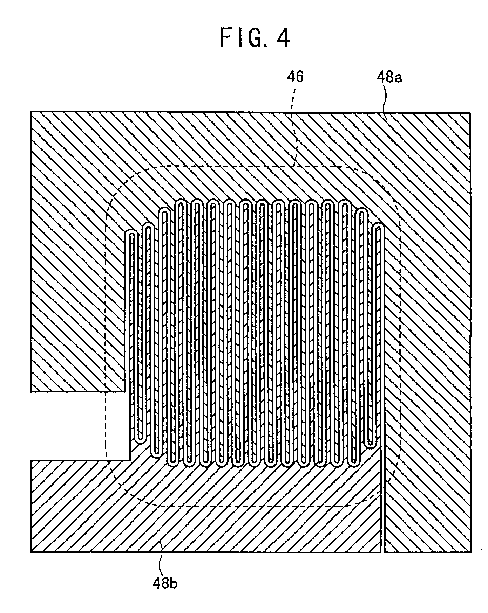

When the pair of electrodes 48 are formed on only the upper portion of the shape-retaining layer 46, the planar configuration of the pair of electrodes 48 may be a shape in which a large number of comb teeth are opposed to one another in a complementary manner as shown in FIG. 4. Alternatively, it is possible to adopt, for example, the spiral configuration and the branched configuration as disclosed in Japanese Laid-Open Patent Publication No. 10-78549 as well.

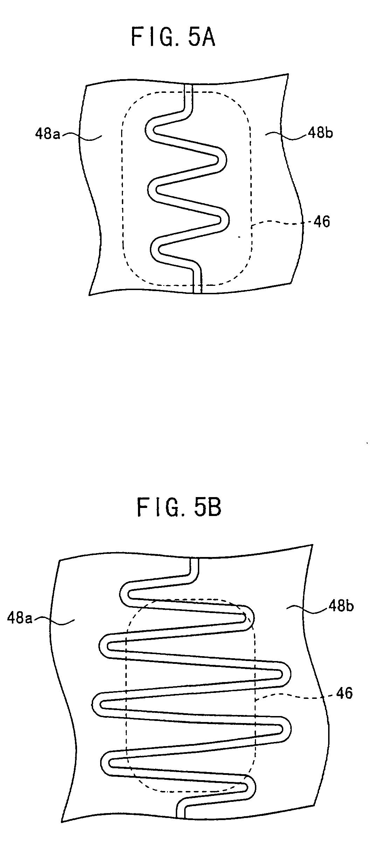

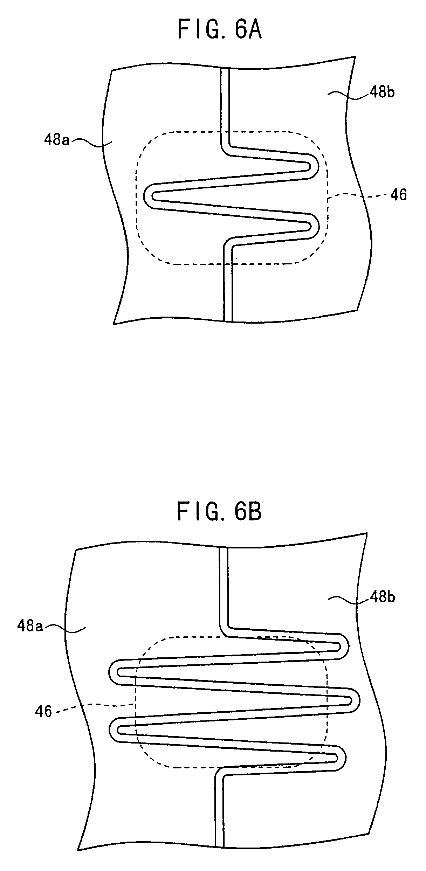

When the planar configuration of the shape-retaining layer 46 is, for example, an elliptic configuration, and the pair of electrodes 48 are formed to have a comb teeth-shaped configuration, then it is possible to use, for example, a form in which the comb teeth of the pair of electrodes 48 are arranged along the major axis of the shape-retaining layer 46 as shown in FIGS. 5A and 5B, and a form in which the comb teeth of the pair of electrodes 48 are arranged along the minor axis of the shape-retaining layer 46 as shown in FIGS. 6A and 6B.

It is possible to use, for example, the form in which the comb teeth of the pair of electrodes 48 are included in the planar configuration of the shape-retaining layer 46 as shown in FIGS. 5A and 6A, and the form in which the comb teeth of the pair of electrodes 48 protrude from the planar configuration of the shape-retaining layer 48 as shown in FIGS. 5B and 6B. The forms shown in FIGS. 5B and 6B are more advantageous to effect the bending displacement of the actuator element 22.

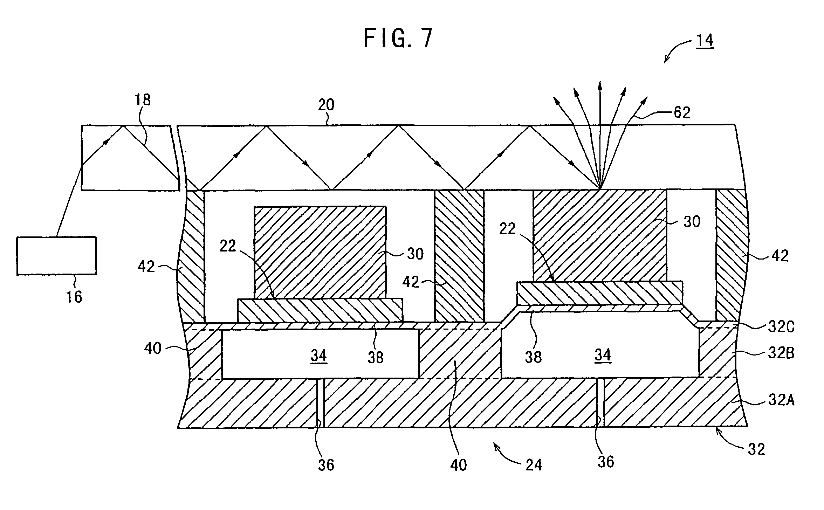

As shown in FIG. 3, for example, when the pair of electrodes 48 are constructed such that the row electrode 48a is formed on the upper surface of the shape-retaining layer 46, and the column electrode 48b is formed on the lower surface of the shape-retaining layer 46, the actuator element 22 can be subjected to bending displacement in a first direction so that it is convex toward the hollow space 34 as shown in FIG. 1. Alternatively, as shown in FIG. 7, the actuator element 22 can be subjected to bending displacement in a second direction so that it is convex toward the optical waveguide plate 20. The example shown in FIG. 7 is illustrative of a case in which the crosspiece 42 itself is allowed to have the light-shielding function, and the gap-forming layer 44 described above (see FIG. 3) is not formed.

On the other hand, as shown in FIG. 3, for example, the picture element assembly 30 can be constructed by a stack comprising a white scattering element 50 as a displacement-transmitting section formed on the actuator element 22, a color filter 52, and a transparent layer 54.

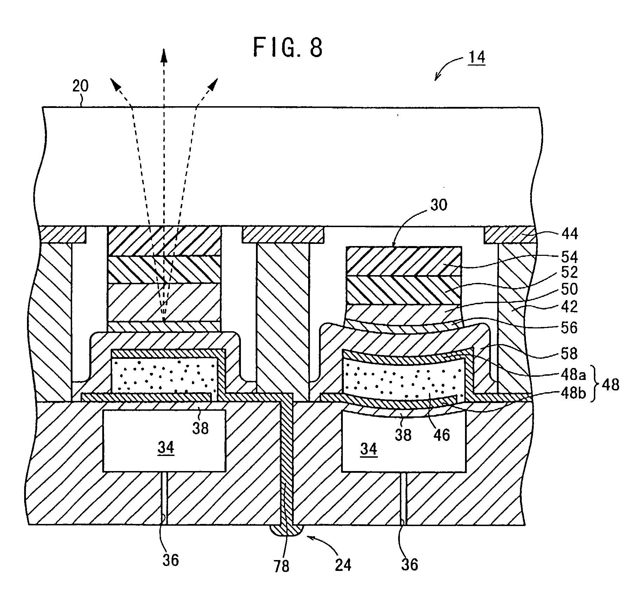

Further, as shown in FIG. 8, a light-reflective layer 56 may be allowed to intervene as a lower layer of the white scattering element 50. In this arrangement, it is desirable that an insulative layer 58 is formed between the light-reflective layer 56 and the actuator element 22.

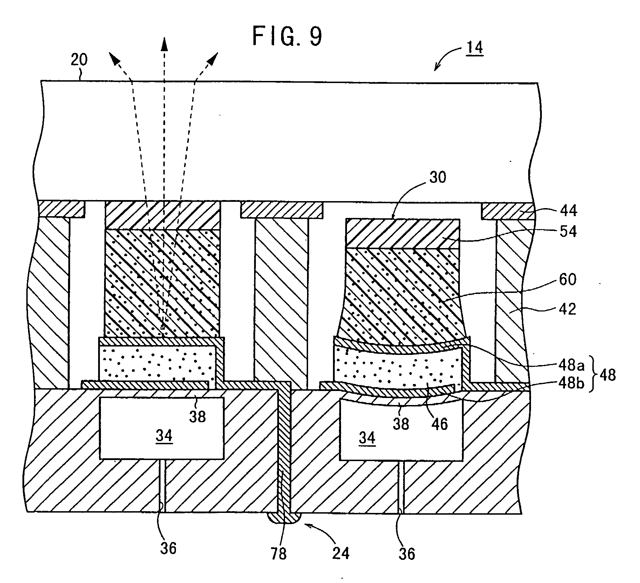

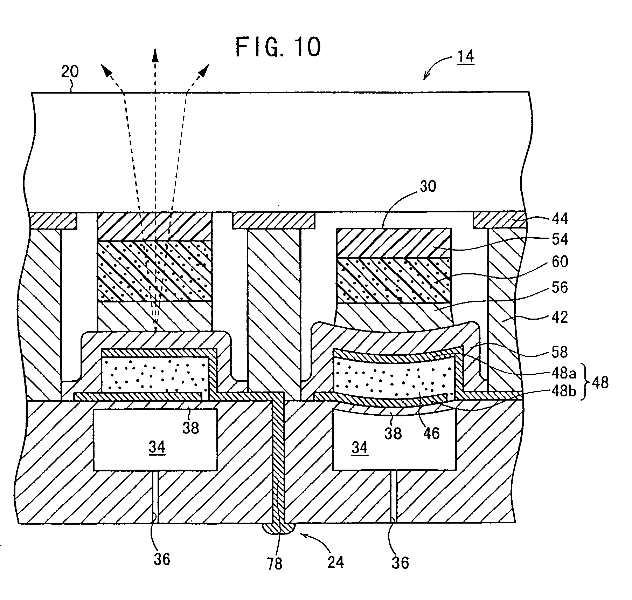

Another example of the picture element assembly 30 is, for example, as shown in FIG. 9. That is, the picture element assembly 30 can be also constructed by a stack comprising a color scattering element 60 to also serve as a displacement-transmitting section formed on the actuator element 22, and a transparent layer 54. Also in this case, as shown in FIG. 10, a light-reflective layer 56 and an insulative layer 58 may be allowed to intervene between the actuator element 22 and the color scattering element 60.

As shown in FIGS. 1, 3, and 7, the display component 14 comprises the crosspieces 42 which are formed at the portions other than the picture element assembly 30 between the optical waveguide plate 20 and the actuator substrate 32. The example shown in FIG. 7 is illustrative of a case in which the optical waveguide plate 20 is directly secured to the upper surfaces of the crosspieces 42. It is preferable that the material for the crosspiece 42 is not deformed by heat and pressure.

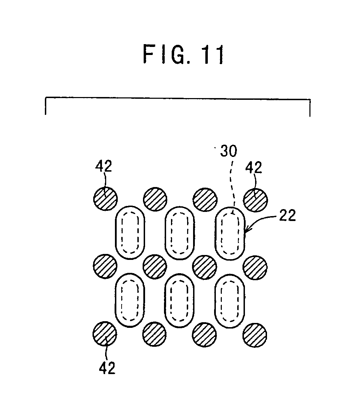

The crosspieces 42 can be formed, for example, at portions around four corners of the picture element assembly 30. The portions around four corners of the picture element assembly 30 are herein exemplified, for example, by positions corresponding to the respective corners as shown in FIG. 11, for example, when the picture element assembly 30 has a substantially rectangular or elliptic planar configuration. FIG. 11 is illustrative of a form in which one crosspiece 42 is shared by the adjoining picture element assembly 30.

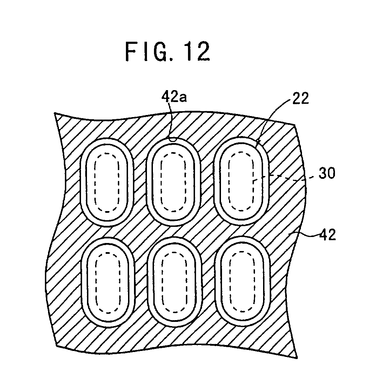

Another example of the crosspiece 42 is shown in FIG. 12. That is, the crosspiece 42 is provided with windows 42a each of which surrounds at least one picture element assembly 30. The representative illustrative arrangement is as follows. That is, for example, the crosspiece 42 itself is formed to have a plate-shaped configuration. Windows (openings) 42a, each having a shape similar to the outer configuration of the picture element assembly 30, are formed at the positions corresponding to the picture element assemblies 30. Accordingly, all of the side surfaces of the picture element assembly 30 are consequently surrounded by the crosspiece 42. Thus, the actuator substrate 32 and the optical waveguide plate 20 are secured to one another more tightly.

Explanation will now be made for the respective constitutive members of the display component 14, especially for the selection of the material or the like for the respective constitutive member.

At first, the light 18 to be introduced into the optical waveguide plate 20 may be any one of those of ultraviolet, visible, and infrared regions. Those usable as the light source 16 include, for example, incandescent lamp, deuterium discharge lamp, fluorescent lamp, mercury lamp, metal halide lamp, halogen lamp, xenon lamp, tritium lamp, light emitting diode, laser, plasma light source, hot cathode tube (or one arranged with carbon nano tube-field emitter in place of filament-shaped hot cathode), and cold cathode tube.

It is preferable that the vibrating section 38 is composed of a highly heat-resistant material, because of the following reason. That is, when the actuator element 22 has the structure in which the vibrating section 38 is directly supported by the fixed section 40 without using any material such as an organic adhesive which is inferior in heat resistance, the vibrating section 38 is preferably composed of a highly heat-resistant material in order that the vibrating section 38 is not deteriorated in quality at least during the formation of the shape-retaining layer 46.

It is preferable that the vibrating section 38 is composed of an electrically insulative material in order to electrically separate the wiring connected to the row electrode 48a of the pair of electrodes 48 formed on the actuator substrate 32, from the wiring (for example, data line) connected to the column electrode 48b.

Therefore, the vibrating section 38 may be composed of a material such as a highly heat-resistant metal and a porcelain enamel produced by coating a surface of such a metal with a ceramic material such as glass. However, the vibrating section 38 is optimally composed of ceramics.

Those usable as the ceramics for constructing the vibrating section 38 include, for example, stabilized zirconium oxide, aluminum oxide, magnesium oxide, titanium oxide, spinel, mullite, aluminum nitride, silicon nitride, glass, and mixtures thereof. Stabilized zirconium oxide is especially preferred because of, for example, high mechanical strength obtained even when the thickness of the vibrating section 38 is thin, high toughness, and small chemical reactivity with the shape-retaining layer 46 and the pair of electrodes 48. The term "stabilized zirconium oxide" includes fully stabilized zirconium oxide and partially stabilized zirconium oxide. Stabilized zirconium oxide has a crystal structure such as cubic crystal, and hence it does not cause phase transition.

On the other hand, zirconium oxide causes phase transition between monoclinic crystal and tetragonal crystal at about 1000 °C. Cracks appear during the phase transition in some cases. Stabilized zirconium oxide contains 1 to 30 mole % of a stabilizer such as calcium oxide, magnesium oxide, yttrium oxide, scandium oxide, ytterbium oxide, cerium oxide, and oxides of rare earth metals. In order to enhance the mechanical strength of the vibrating section 38, the stabilizer preferably comprises yttrium oxide. In this composition, yttrium oxide is contained preferably in an amount of 1.5 to 6 mole %, and more preferably 2 to 4 mole %. It is preferable that aluminum oxide is further contained in an amount of 0.1 to 5 mole %.

The crystal phase may be, for example, a mixed phase of cubic crystal + monoclinic crystal, a mixed phase of tetragonal crystal + monoclinic crystal, and a mixed phase of cubic crystal + tetragonal crystal + monoclinic crystal. However, among them, most preferred are those having a principal crystal phase composed of tetragonal crystal or a mixed phase of tetragonal crystal + cubic crystal, from viewpoints of strength, toughness, and durability.

When the vibrating section 38 is composed of ceramics, a large number of crystal grains construct the vibrating section 38. In order to increase the mechanical strength of the vibrating section 38, the crystal grains preferably have an average grain diameter of 0.05 to 2 $\mu$m, and more preferably 0.1 to 1 $\mu$m.

The fixed section 40 is preferably composed of ceramics. The fixed section 40 may be composed of the same ceramic material as that used for the vibrating section 38, or the fixed section 40 may be composed of a ceramic material different from that used for the vibrating section 38. Those usable as the ceramic material for constructing the fixed section 40 include, for example, stabilized zirconium oxide, aluminum oxide, magnesium oxide, titanium oxide, spinel, mullite, aluminum nitride, silicon nitride, glass, and mixtures thereof, in the same manner as the material for the vibrating section 38.

Especially, those preferably adopted for the actuator substrate 32 used in the display component 14 include, for example, materials containing a major component of zirconium oxide, materials containing a major component of aluminum oxide, and materials containing a major component of a mixture thereof. Among them, those containing a major component of zirconium oxide are more preferable.

Clay or the like is added as a sintering aid in some cases. However, it is necessary to control components of the sintering aid in order not to contain an excessive amount of those liable to form glass such as silicon oxide and boron oxide because of the following reason. That is, although the materials which are liable to form glass are advantageous to join the actuator substrate 32 to the shape-retaining layer 46, the materials facilitate the reaction between the actuator substrate 32 and the shape-retaining layer 46, making it difficult to maintain a predetermined composition of the shape-retaining layer 46. As a result, the materials make a cause to deteriorate the element characteristics.

That is, it is preferable that silicon oxide or the like in the actuator substrate 32 is restricted to have a weight ratio of not more than 3 %, and more preferably not more than 1 %. The term "major component" herein refers to a component which exists in a proportion of not less than 50 % in weight ratio.

As described above, those usable as the shape-retaining layer 46 include piezoelectric/electrostrictive layers and anti-ferroelectric layers. However, when the piezoelectric/electrostrictive layer is used as the shape-retaining layer 46, those usable as the piezoelectric/electrostrictive layer include ceramics containing, for example, lead zirconate, lead magnesium niobate, lead nickel niobate, lead zinc niobate, lead manganese niobate, lead magnesium tantalate, lead nickel tantalate, lead antimony stannate, lead titanate, barium titanate, lead magnesium tungstate, and lead cobalt niobate, or any combination of them.

It is needless to say that the major component contains the compound as described above in an amount of not less than 50 % by weight. Among the ceramic materials described above, the ceramic material containing lead zirconate is most frequently used as the constitutive material for the piezoelectric/electrostrictive layer for constructing the shape-retaining layer 46.

When the piezoelectric/electrostrictive layer is composed of ceramics, it is also preferable to use ceramics obtained by appropriately adding, to the ceramics described above, oxide of, for example, lanthanum, calcium, strontium, molybdenum, tungsten, barium, niobium, zinc, nickel, and manganese, or any combination thereof or another type of compound thereof.

For example, it is preferable to use ceramics containing a major component composed of lead magnesium niobate, lead zirconate, and lead titanate and further containing lanthanum and strontium.

The piezoelectric/electrostrictive layer may be either dense or porous. When the piezoelectric/electrostrictive layer is porous, its porosity is preferably not more than 40 %.

When the anti-ferroelectric layer is used as the shape-retaining layer 46, it is desirable to use, as the anti-ferroelectric layer, a compound containing a major component composed of lead zirconate, a compound containing a major component composed of lead zirconate and lead stannate, a compound obtained by adding lanthanum to lead zirconate, and a compound obtained by adding lead zirconate and lead niobate to a component composed of lead zirconate and lead stannate.

Especially, when an anti-ferroelectric film, which contains lead zirconate and lead stannate as represented by the following composition, is applied as a film-type element such as the actuator element 22, it is possible to perform driving at a relatively low voltage. Therefore, application of such an anti-ferroelectric film is especially preferred.

$$Pb_{0.99}Nb_{0.02}[(Zr_xSn_{1-x})_{1-y}Ti_y]_{0.98}O_3$$

wherein, $0.5 < x < 0.6$, $0.05 < y < 0.063$, $0.01 < Nb < 0.03$.

The anti-ferroelectric film may be porous. When the anti-ferroelectric film is porous, it is desirable that the porosity is not more than 30 %.

Those usable as the method for forming the shape-retaining layer 46 on the vibrating section 38 include various types of the thick film formation method such as the screen printing method, the dipping method, the application method, and the electrophoresis method, and various types of the thin film formation method such as the ion beam method, the sputtering method, the vacuum evaporation method, the ion plating method, the chemical vapor deposition method (CVD), and the plating.

In this embodiment, when the shape-retaining layer 46 is formed on the vibrating section 38, the thick film formation method is preferably adopted, based on, for example, the screen printing method, the dipping method, the application method, and the electrophoresis method, because of the following reason.

That is, in the techniques described above, the shape-retaining layer 46 can be formed by using, for example, paste, slurry, suspension, emulsion, or sol containing a major component of piezoelectric ceramic particles having an average grain size of 0.01 to 5 $\mu$m, preferably 0.05 to 3 $\mu$m, in which it is possible to obtain good piezoelectric operation characteristics.

Especially, the electrophoresis method makes it possible to form the film at a high density with a high shape accuracy, and it further has the features as described in technical literatures such as "Electrochemistry and Industrial Physical Chemistry, Vol. 53, No. 1 (1985), pp. 63-68, written by Kazuo ANZAI" and "Proceedings of First Study Meeting on Higher Order Ceramic Formation Method Based on Electrophoresis (1998), pp. 5-6 and pp. 23-24". Therefore, the technique may be appropriately selected and used considering, for example, the required accuracy and the reliability.

It is preferable that the thickness of the vibrating section 38 has a dimension identical to that of the thickness of the shape-retaining layer 46, because of the following reason. That is, if the thickness of the vibrating section 38 is extremely thicker than the thickness of the shape-retaining layer 46 (if the former is different from the latter by not less than one figure), when the shape-retaining layer 46 makes shrinkage upon sintering, the vibrating section 38 behaves to inhibit the shrinkage. For this reason, the stress at the boundary surface between the shape-retaining layer 46 and the actuator substrate 32 is increased, and consequently they are easily peeled off from each other. On the contrary, when the dimension of the thickness is in an identical degree between the both, it is easy for the actuator substrate 32 (vibrating section 38) to follow the shrinkage of the shape-retaining layer 46 upon sintering. Accordingly, such dimension of the thickness is preferred to achieve integration. Specifically, the vibrating section 38 preferably has a thickness of 1 to 100 μm, more preferably 3 to 50 μm, and much more preferably 5 to 20 μm. On the other hand, the shape-retaining layer 46 preferably has a thickness of 5 to 100 μm, more preferably 5 to 50 μm, and much more preferably 5 to 30 μm.

The row electrode 48a and the column electrode 48b formed on the upper surface and the lower surface of the shape-retaining layer 46, or the pair of electrodes 34 formed on the shape-retaining layer 46 are allowed to have an appropriate thickness depending on the use or application. However, the thickness is preferably 0.01 to 50 μm, and more preferably 0.1 to 5 μm. The row electrode 48a and the column electrode 48b are preferably composed of a conductive metal which is solid at room temperature. The metal includes, for example, metal simple substances or alloys containing, for example, aluminum, titanium, chromium, iron, cobalt, nickel, copper, zinc, niobium, molybdenum, ruthenium, rhodium, silver, stannum, tantalum, tungsten, iridium, platinum, gold, and lead. It is needless to say that these elements may be contained in an arbitrary combination.

Further, it is preferable to add, to the metal simple substance or the alloy as described above, metal oxide such as aluminum oxide, titanium oxide, zirconium oxide, cerium oxide, and copper oxide. Further, it is also preferable to use a cermet comprising the same material as the material for the vibrating section 38 and/ or the constitutive material for the shape-retaining layer (for example, the piezoelectric/electrostrictive layer) described above dispersed with respect to the metal simple substance or the alloy. Especially, when the cermet is used as the electrode, the time-dependent deterioration of the displacement action can be effectively suppressed when the shape-retaining layer 46 is operated, which is preferred.

The optical waveguide plate 20 has an optical refractive index with which the light 18 introduced into the inside thereof is totally reflected by the front and back surfaces without being transmitted to the outside of the optical waveguide plate 20. It is necessary for the optical waveguide plate 20 to use those having a large and uniform light transmittance in the wavelength region of the light 18 to be introduced. The material for the optical waveguide plate 20 is not specifically limited provided that it satisfies the foregoing characteristic. However, specifically, those generally used for the optical waveguide plate 20 include, for example, glass, quartz, light-transmissive plastics such as acrylic plastics, light-transmissive ceramics, structural materials comprising a plurality of layers composed of materials having different refractive indexes, and those having a surface coating layer.

The color layer such as the color filter 52 and the color scattering element 60 included in the picture element assembly 30 is the layer which is used to extract only the light in a specified wavelength region, and it includes, for example, those which develop the color by absorbing, transmitting, reflecting, or scattering the light at a specified wavelength, and those which convert incident light into light having a different wavelength. The transparent member, the semitransparent member, and the opaque member can be used singly or in combination.

The color layer is constructed, for example, as follows. That is, the color layer includes, for example, those obtained by dispersing or dissolving a dyestuff or a fluorescent material such as dye, pigment, and ion in rubber, organic resin, light-transmissive ceramic, glass, liquid or the like, those obtained by applying the dyestuff or the fluorescent material on the surface of the foregoing material, those obtained by sintering, for example, the powder of the dyestuff or the fluorescent material, and those obtained by pressing and solidifying the powder of the dyestuff or the fluorescent material. As for the material quality and the structure, the materials may be used singly, or the materials may be used in combination.

The difference between the color filter 52 and the color scattering element 60 lies in whether or not the luminance or brightness value of leakage light obtained by reflection and scattering effected by only the color layer is not less than 0.5-fold the brightness value of leakage light obtained by reflection and scattering effected by the entire structure including the picture element assembly 30 and the actuator element 22, when the light emission state is given by allowing the picture element assembly 30 to make contact with the optical waveguide plate 20 into which the light 18 is introduced. If the former brightness value is not less than 0.5-fold the latter brightness value, the color layer is defined to be the color scattering element 60. If the former brightness value is less than 0.5-fold the latter brightness value, the color layer is defined to be the color filter 52.

The measuring method is specifically exemplified as follows. That is, it is assumed that when the color layer is singly allowed to make contact with the back surface of the optical waveguide plate 20 into which the light 18 is introduced, A(nt) represents the front luminance or brightness of the light which passes from the color layer through the optical waveguide plate 20 and which leaks to the front surface. Further, it is assumed that when the picture element assembly 30 is allowed to make contact with the surface of the color layer on the side opposite to the side to make contact with the optical waveguide plate 20, B(nt) represents the front luminance or brightness of the light which leaks to the front surface. If $A \geq 0.5 \times B$ is satisfied, the color layer is the color scattering element 60. If $A < 0.5 \times B$ is satisfied, the color layer is the color filter 52.

The front luminance or brightness is the luminance or brightness measured by arranging a luminance meter so that the line which connects the color layer to the luminance meter for measuring the luminance or brightness is perpendicular to the surface of the optical waveguide plate 20 to make contact with the color layer (the detection surface of the luminance meter is parallel to the plate surface of the optical waveguide plate 20).

The color scattering element 60 is advantageous in that the color tone and the brightness are scarcely changed depending on the thickness of the layer. Accordingly, those applicable as the method for forming the layer includes various methods such as the screen printing which requires inexpensive cost although it is difficult to strictly control the layer thickness.

Owing to the arrangement in which the color scattering element 60 also serves as the displacement-transmitting section, it is possible to simplify the process for forming the layer. Further, it is possible to obtain a thin entire layer thickness. Therefore, the thickness of the entire display component 14 can be made thin. Further, it is possible to avoid the decrease in displacement amount of the actuator element 22, and improve the response speed.

The color filter 52 has the following advantages. That is, when the layer is formed on the side of the optical waveguide plate 20, the layer can be easily formed, because the optical waveguide plate 20 is flat, and it has high surface smoothness. Thus, the range of process selection is widened, and the cost becomes inexpensive. Further, it is easy to control the layer thickness which may affect the color tone and the brightness.

The method for forming the film of the color layer such as the color filter 52 and the color scattering element 60 is not specifically limited, to which it is possible to apply a variety of known film formation methods. Those usable include, for example, a film lamination method in which the color layer in a chip form or in a film form is directly stuck on the surface of the optical waveguide plate 20 or the actuator element 22, as well as a method for forming the color layer in which, for example, powder, paste, liquid, gas, or ion or the like to serve as a raw material for the color layer is formed into a film in accordance with the thick film formation method such as the screen printing, the photolithography method, the spray dipping, and the application, or in accordance with the thin film formation method such as the ion beam, the sputtering, the vacuum evaporation, the ion plating, CVD, and the plating or the like.

Alternatively, it is also preferable that a light emissive layer is provided for a part or all of the picture element assembly 30. Those usable as the light-emissive layer include a fluorescent layer. The fluorescent layer includes those which are excited by invisible light (ultraviolet light and infrared light) to emit visible light, and those which are excited by visible light to emit visible light. However, any of them may be used.

A fluorescent pigment may be also used for the light-emissive layer. The use of the fluorescent pigment is effective for those added with fluorescent light having a wavelength approximately coincident with the color of the pigment itself, i.e., the color of the reflected light such that the color stimulus is large corresponding thereto, and the light emission is vivid. Therefore, the fluorescent pigment is used more preferably to obtain the high brightness for the display component and the display. A general daylight fluorescent pigment is preferably used.

A stimulus fluorescent material, a phosphorescent material, or a luminous pigment is also used for the light-emissive layer. These materials may be either organic materials or inorganic materials.

Those preferably used include those formed with the light-emissive layer by using the light-emissive material singly as described above, those formed with the light-emissive layer by using the light-emissive material as described above dispersed in resin, and those formed with the light-emissive layer by using the light-emissive material as described above dissolved in resin.

The afterglow or decay time of the light-emissive material is preferably not more than 1 second, more preferably 30 milliseconds. More preferably, the afterglow or decay time is not more than several milliseconds.

When the light-emissive layer is used as a part or all of the picture element assembly 30, the light source 16 is not specifically limited provided that it includes the light having a wavelength capable of exciting the light-emissive layer and it has an energy density sufficient for excitation. Those usable include, for example, cold cathode tube, hot cathode tube (or one arranged with carbon nano tube-field emitter in place of filament-shaped hot cathode), metal halide lamp, xenon lamp, laser including infrared laser, black light, halogen lamp, incandescent lamp, deuterium discharge lamp, fluorescent lamp, mercury lamp, tritium lamp, light emitting diode, and plasma light source.

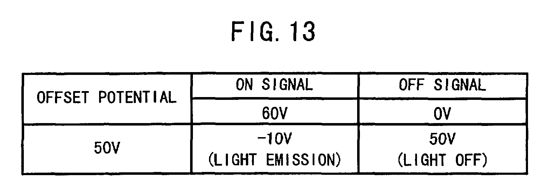

Next, the operation of the display device will be briefly explained with reference to FIG. 1. As shown in FIG. 13, the description of the operation is illustrative of a case in which as the offset potential, for example, 50 V is used and applied to the row electrode 48a of each of the actuator elements 22, and as the electric potentials of the ON signal and the OFF signal, 60 V and 0 V are used and applied to the column electrode 48b of each of the actuator elements 22, respectively.

Therefore, the low level voltage (-10 V) is applied between the column electrode 48b and the row electrode 48a in the actuator element 22 in which the ON signal is applied to the column electrode 48b. The high level voltage (50 V) is applied between the column electrode 48b and the row electrode 48a in the actuator element 22 in which the OFF signal is applied to the column electrode 48b.

At first, the light 18 is introduced, for example, from the end portion of the optical waveguide plate 20. In this embodiment, all of the light 18 is totally reflected at the inside of the optical waveguide plate 20 without being transmitted through the front and back surfaces thereof by controlling the magnitude of the refractive index of the optical waveguide plate 20, in the state in which the picture element assembly 30 does not make contact with the optical waveguide plate 20. The reflection factor n of the optical waveguide plate 20 is desirably 1.3 to 1.8, and more desirably 1.4 to 1.7.

In this embodiment, in the natural state of the actuator element 22, the end surface of the picture element assembly 30 contacts with the back surface of the optical waveguide plate 20 at the distance of not more than the wavelength of the light 18. Therefore, the light 18 is reflected by the surface of the picture element assembly 30, and it behaves as scattered light 62. A part of the scattered light 62 is reflected again in the optical waveguide plate 20. However, almost all of the scattered light 62 is not reflected by the optical waveguide plate 20, and it is transmitted through the front surface (face) of the optical waveguide plate 20. Accordingly, all of the actuator elements 22 are in the ON state, and the ON state is expressed in a form of light emission. Further, the color of the light emission corresponds to the color of the color filter 52 or the color scattering element 60 included in the picture element assembly 30, or the color of the light emissive layer described above. In this case, all of the actuator elements 22 are in the ON state. Therefore, the white color is displayed on the screen of the display component 14.

Starting from this state, when the OFF signal is applied to the actuator element 22 corresponding to a certain dot 26, the concerning actuator element 22 makes the bending displacement to be convex toward the hollow space 34 as shown in FIG. 1, i.e., it makes the bending displacement in the first direction. The end surface of the picture element assembly 30 is separated from the optical waveguide plate 20, and the concerning actuator element 22 is in the OFF state. The OFF state is can be recognized as light off.

That is, in the display component 14, the presence or absence of light emission (leakage light) at the front surface of the optical waveguide plate 20 can be controlled depending on the presence or absence of the contact of the picture element assembly 30 with the optical waveguide plate 20.

Especially, in the display component 10, one unit for making the displacement action of the picture element assembly 30 in the direction to make contact or separation with respect to the optical waveguide plate 20 is used one dot. The array of the three dots in the horizontal direction (red dot 26R, green dot 26G, and blue dot 26B) is used as one picture element. A large number of the picture elements are arranged in a matrix configuration or in a zigzag configuration concerning the respective rows. Therefore, it is possible to display a color picture image (characters and graphics) corresponding to the image signal on the front surface of the optical waveguide plate 20, i.e., on the display surface, in the same manner as in the cathode ray tube, the liquid crystal display device, and the plasma display, by controlling the displacement action in each of the picture elements in accordance with the attribute of the inputted image signal.

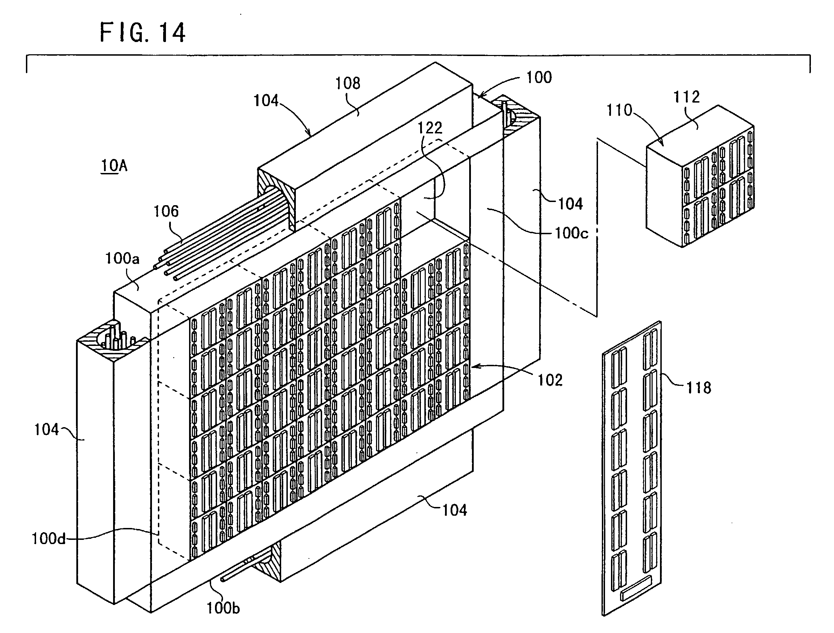

As shown in FIG. 14, a display device 10A according to a first embodiment comprises a main display device body 102 which is incorporated into a frame 100 constructed by assembling transparent plate members 100a, 100b, 100c, 100d.

The frame 100 is constructed, for example, by assembling, into a frame-shaped form, the upper plate 100a, the lower plate 100b, and the two side plates 100c, 100d each of which is made of acrylic material having a prism-shaped configuration. Each of light sources 104 is attached to respective outer side surfaces of the frame 100. Each of the light sources 104 comprises, for example, a large number of cold cathode tubes 106, and a reflector 108 for reflecting the light from the cold cathode tubes 106 toward the frame 100.

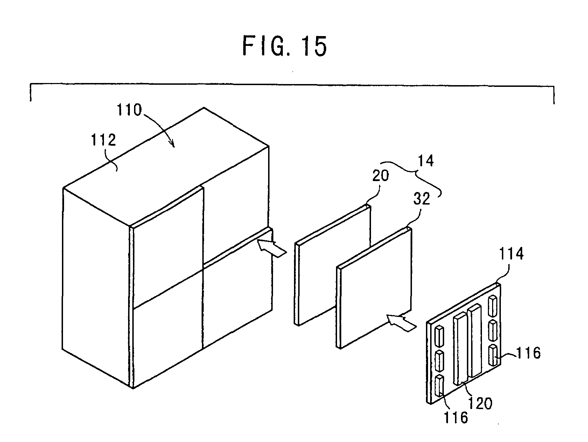

The main display device body 102 comprises a plurality of display blocks 110 which are arranged in a matrix configuration. Each of the display blocks 110 has a size (areal size) of such an extent that one or more display components 14 are secured thereto. For example, as shown in FIG. 15, each of the display blocks 110 comprises a divided optical guide plate 112 made of, for example, an acrylic material for introducing the light from the light source 104 thereinto, and one or more display components 14 secured to the first principal surface of the divided optical guide plate 112. The embodiment shown in FIG. 15 is illustrative of a case in which four display components 14 are arranged in two rows and two columns on the divided optical guide plate 112, and a circuit board 114 is attached to the back surface of the actuator substrate 32 of each of the display components 14.

The circuit board 114 includes a plurality of driving ICs 116 for driving the row electrode 48a and the column electrode 48b of the display component 14, and a connector 120 for connecting the driving ICs 116 to a driver board 118 (see FIG. 14) for processing the signal for each unit of group. Each of the driver boards 118 is connected to an unillustrated display controller for performing predetermined image data processing for the purpose of display.

The exemplary embodiment shown in FIG. 14 is illustrative of the case in which the light from the light source 104 is introduced into each of the divided optical guide plates 112 and the optical waveguide plate 20 of each of the display components 14 through the end surface of the frame 112. However, the light from the light source 104 is also introduced into each of the divided optical guide plates 112 and the optical waveguide plate 20 of each of the display components 14 through the end surface of the optical waveguide plate 20 of the display component arranged at the outer circumferential portion in some cases, in addition to the end surface of the frame 112.

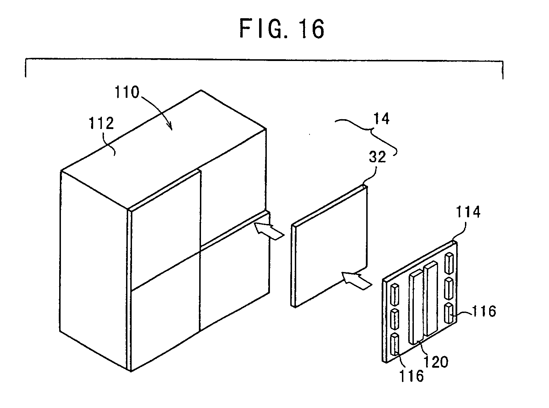

As shown in FIG. 15, the display block 110 may be constructed by sticking, to the divided optical guide plate 112, the display component 14 having the optical waveguide plate 20 and the actuator substrate 32, and the circuit board 114. Alternatively, as shown in FIG. 16, the display block 110 may be constructed by sticking, to the divided optical guide plate 112, the display component 14 from which the optical waveguide plate 20 is omitted, and the circuit board 114.

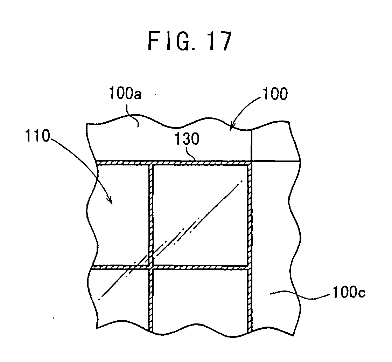

The display device 10A according to the first embodiment includes the plurality of display blocks 110 which are arranged in a matrix configuration in an opening 122 of the frame 100. Further, as shown in FIG. 17, a substance 130 having a light-transmitting property adjusted for its refractive index is allowed to intervene at end surface portions of the respective display blocks 110 and between the display blocks 110 and the inner wall of the frame 100.

As for the refractive index of the substance 130, it is preferable that the difference between the refractive index of the display block 110 and the refractive index of the substance 130 is decreased to be as small as possible, in order to avoid any sense of incongruity at the juncture of the display blocks 110. The allowable difference in refractive index also relates to the thickness of the display block 110. However, assuming that the refractive index of the divided optical guide plate 112 of the display block 110 is $N_1$, the sense of incongruity can be generally avoided at the juncture if the refractive index $N_2$ of the substance 130 satisfies the following expression:

$$0.9N_1 \leq N_2 \leq 1.1N_1$$

In addition to the effect described above, the thickness of the divided optical guide plate 112 can be increased, and the assembling performance and the stability of the structure after the assembling are improved, if the refractive index $N_2$ of the substance 130 satisfies the following expression:

$$0.99N_1 \leq N_2 \leq 1.01N_1$$

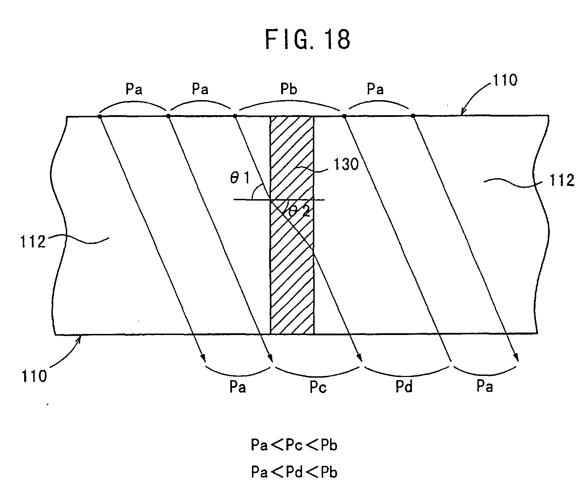

On the other hand, the juncture of the display blocks 110 involves such a structural problem that the display blocks 110 are arranged. For this reason, as shown in FIG. 18, the pitch Pb of the picture element ranging over the juncture is larger than the ordinary pitch Pa of the picture element, and the juncture is conspicuous in many cases. Accordingly, the refractive index $N_2$ of the substance 130 is preferably adjusted to satisfy the following expression:

$$N_1 < N_2 \leq 1.01N_1$$

Accordingly, when the light emitted from the picture element passes through the juncture portion, the light is refracted in accordance with the relationship of the refractive indexes $N_1$ and $N_2$ adjusted as described above. When the light outgoes from the display surface, the pitches Pc, Pd of the picture elements ranging over the juncture consequently approach the ordinary pitch Pa of the picture element (Pa < Pc < Pb, Pa < Pd < Pb). Thus, it is possible to mitigate the sense of incongruity at the juncture.

The light-transmitting property of the substance 130 is determined in order that the light is successfully introduced up to the display component 14 in an efficient manner, and the electric power consumption is suppressed. Therefore, it is preferable that the transmittance is not less than 50 % for the perpendicular incident light at the wavelength in the visible light region. It is more preferable that the transmittance is not less than 70 %.

The form of the substance 130 may be any one of gas, liquid, and solid, or it may be a mixture thereof, provided that the substance 130 satisfies the foregoing conditions.

The shape of the divided optical guide plate 112 may be any one including, for example, rectangular parallelepiped, prism, column, and truncated pyramid, provided that the display component 14 can be secured thereto, and the display component 14 can be stacked in a stable manner. However, the shape is preferably rectangular parallelepiped in view of the machining performance and the assembling performance.

In view of the assembling performance and the repair performance, the size of the divided optical guide plate 112 is preferably a size having a length of 40 mm to 500 mm and a width of 40 mm to 500 mm. The thickness is preferably 2 mm to 40 mm in order to satisfy both of the assembling performance and the disappearance of the sense of incongruity at the juncture.

The material for the divided optical guide plate 112, and the material for the upper plate 100a, the lower plate 100b, and the side plates 100c, 100d for constructing the frame 100 may be either an inorganic material or an organic material, provided that the light-transmitting property is satisfactory at the wavelength in the visible light region. Specifically, it is possible to use a simple substance or a combined material composed of, for example, glass, quartz, light-transmitting alumina, acrylic resin, methacrylic resin, polycarbonate, vinyl chloride resin, phenol resin, vinyl acetate resin, ABS, fluororesin, and unsaturated polyester resin. Especially, in view of the cost and the machining performance, it is preferable to use glass, acrylic resin, and methacrylic resin. As for the glass, it is preferable to use, for example, Vycor glass, 96 % silicate glass, alumino silicate glass, borosilicate glass, zinc borosilicate glass, and barium borosilicate glass. As for the light-transmitting property, it is preferable that the transmittance is not less than 50 % for the perpendicular incident light at the wavelength in the visible light region. It is more preferable that the transmittance is not less than 70 %.

An adhesive, which has substantially the same refractive index as that of the frame 100 or the divided optical guide plate 112, may be used as the substance 130.

Explanation will now be made for the adhesive for securing the display component 14 to the divided optical guide plate 112, for the adhesive for assembling the upper plate 100a, the lower plate 100b, and the side plates 100c, 100d into the frame 100, and for the adhesive as the substance 130.

The adhesive herein has the meaning including adhesive, glue or sticker, adhesive to be solidified after curing, adhesive to be flexible after curing, rubber-like adhesive, and gel-like adhesive.

The curing method is not specifically limited, including, for example, those of the types of UV setting, hot setting, cold setting, condensation setting, addition setting, and two-part setting.

The material may be either an inorganic material or an organic material, provided that the light-transmitting property is satisfactory at the wavelength in the visible light region. It is preferable to use those which have high insulating performance and low ignitability. It is more preferable to use those which are excellent in wettability with respect to the optical guide plate and which are stable for a long period of time, for example, against heat, light, and moisture.

Specifically, it is possible to use a simple substance or a combined material based on, for example, ureaformaldehyde resin, phenol resin, epoxy resin, acrylic resin, methacrylic resin, cyanoacrylate, polyurethane, emulsion, hot melt, synthetic rubber, and natural rubber.

Especially, as for the adhesive for securing the display component 14 to the divided optical guide plate 112, it is preferable to use the adhesive to be solidified after curing, in order to avoid any securing discrepancy of the display component 14. In order to mitigate the thermal expansion, it is preferable to use the adhesive to be flexible after curing and the rubber-like adhesive. As for the adhesive as the substance 130, it is preferable to use the adhesive to be flexible after curing, the rubber-like adhesive, and the gel-like adhesive, in order to effect the mitigation of the thermal expansion and the detachment performance upon repair.

In other words, when those to be completely solidified are used as the adhesive to be used as the substance 130, the respective display blocks 110 are tightly secured with the adhesive. Therefore, it is possible to obtain the display device 10A having high mechanical strength. However, it is difficult to exchange any disabled display block 110 with new one. Therefore, such an adhesive is preferably adopted to the display device which assumes the collective exchange all at once.

When those having flexibility are used as the adhesive, then it is possible to obtain the display device 10A having high mechanical strength, and it is easy to perform cutting. Therefore, it is easy to exchange any disabled display block 110 with new one, which is excellent in the repair performance.

As for the substance 130, the completely solidifying type may be used for all portions, or the flexible type may be used for all portions. Alternatively, for example, a plurality of display blocks 110 which are managed by one driver board 118 (three blocks in the vertical direction in the embodiment shown in FIG. 14) may be secured with an adhesive of the completely solidifying type to provide a certain unit. A flexible type adhesive 130 may be allowed to intervene at end surface portions of the plurality of units and between the units and the frame 100.

Next, explanation will be made for a method for producing the display device 10A according to the first embodiment. At first, the divided optical guide plate 112 of each of the display blocks 110 is subjected to a surface treatment. Specifically, the surface of the divided optical guide plate 112 is coated with a hard coating material. Accordingly, it is possible to avoid any scratch on the surface of the divided optical guide plate 112. For example, it is possible to previously avoid such a phenomenon that the white dot locally appears when the black is displayed, or the brightness is increased as a whole.

The coating of the hard coating material referred to herein means the formation of a film or coating of a material having a hardness higher than that of the material for the divided optical guide plate 112 on the surface of the divided optical guide plate 112. The coating on the front and back surfaces of the divided optical guide plate 112 is important to avoid the scratch. However, it is not necessarily indispensable to apply the coating to the end surfaces. Specifically, those usable as the hard coating material include, for example, acrylic hard coating materials and silicone hard coating materials.

Subsequently, the end surface of the divided optical guide plate 112 is mirror-finished. Accordingly, it is possible to lower, up to the level of no sense of incongruity, the leakage of light from the juncture of the divided optical guide plate 112. Thus, the juncture is scarcely conspicuous. When the end surface of the divided optical guide plate 112 is mirror-finished, the light from the light source 104 is sufficiently delivered over all of the display blocks 110. Therefore, it is possible to ensure a desired angle of visibility (angle of visibility corresponding to the number of the display blocks 110). In the mirror-finishing, in order to avoid any sense of incongruity at the juncture, it is preferable that Rmax is not more than 0.3, and it is more preferable that Rmax is not more than 0.05.

Especially, it is preferable that when the divided optical guide plate 112 is machined, then the dimensional accuracy of the divided optical guide plate 112 is not more than ±0.1 mm with respect to the reference dimension of 100 mm, the perpendicularity between the end surfaces and between the end surface and the flat surface is not more than 0.1 mm, and the parallelism between the end surfaces and between the flat surfaces is not more than 0.1 mm. It is more preferable that the dimensional accuracy of the divided optical guide plate 112 is not more than ±0.03 mm with respect to the reference dimension of 100 mm, the perpendicularity between the end surfaces and between the end surface and the flat surface is not more than 0.03 mm, and the parallelism between the end surfaces and between the flat surfaces is not more than 0.03 mm.

Accordingly, it is possible to decrease the cumulative pitch error when the display blocks 110 are stacked in the opening 122 of the frame 100. As a result, it is possible to reduce the distortion of the image which would be otherwise caused by the discrepancy of the pitch of the picture element, and it is possible to decrease the gap dispersion of the juncture. Further, the thickness dispersion of the divided optical guide plate 112 is also decreased. It is possible to suppress the leakage of light which would be otherwise caused by the difference in level or height. Accordingly, when the machining conditions described above are satisfied, it is possible to make the juncture to be more inconspicuous.

It is preferable that the pitch of the picture element of each of the display components 14 conforms to the distance between the picture elements at the juncture portion between the display components 14. Accordingly, it is possible to eliminate any discrepancy between the pitch of the picture element in the display component 14 and the pitch of the picture element at the juncture of the display components 14. Thus, it is possible to reduce the distortion of the image.

Subsequently, the display component 14 is secured to the first principal surface of each of the divided optical guide plates 112. In this embodiment, the divided optical guide plate 112 is opposed to the optical waveguide plate 20 of the display component 14. For example, an adhesive of the completely solidifying type (for example, BENEFIX VL or BENEFIX α produced by ADELL Co., Ltd.) is applied between the divided optical guide plate 112 and the optical waveguide plate 20. The optical guide plate 112 and the optical waveguide plate 20 are stuck to one another, and then the adhesive is cured.

Any warpage is generated in some cases in the actuator substrate 32 for constructing the display component 14, due to the shrinkage phenomenon during the sintering. Any warpage is also generated in the entire display component 14 resulting therefrom in some cases.

However, when the display component 14 is secured with the adhesive to the divided optical guide plate 112 as described above, the entire first principal surface (display surface) of the optical waveguide plate 20 is secured via the adhesive to the divided optical guide plate 112. At this stage, the warpage, which has been generated in the display component 14, is absorbed by the adhesive. Thus, the display component 14 is tightly secured to the divided optical guide plate 112.

Subsequently, the two side plates 100c, 100d are secured to the lower plate 100b, for example, with the adhesive of the completely solidifying type to produce a frame having an angular U-shaped configuration.

Subsequently, the plurality of display blocks 110 are successively stacked from the stacking base point of the upper surface of the lower plate 100b of the angular U-shaped frame. During this process, the stacking is performed while allowing, for example, the flexible type adhesive 130 (for example, XSG-1 or XVL-14SG2 produced by Kyoritsu Chemical & Co., Ltd., or 3088B produced by Threebond Co., Ltd.) to intervene between the lower plate 100b and the display blocks 110, between the side plates 100c, 100d and the display blocks 110, and between the end surfaces of the respective display blocks 110.

After stacking all of the display blocks 110, the upper plate 100a for constructing the frame 100 is stacked as shown in FIG. 14. In this process, for example, the adhesive of the completely solidifying type is applied between the upper plate 100a and the side plates 100c, 100d. For example, the flexible type adhesive is allowed to intervene between the upper plate 100a and the display blocks 110. A certain load is applied downwardly to obtain substantially uniform spacing distances between the respective display blocks 110. After that, the upper plate 100a and the side plates 100c, 100d are tightly secured to one another.

At this stage, the display surface is formed by the arrangement of the respective first principal surfaces of the plurality of display blocks 110. However, a minute difference in level or height is occasionally formed on the display surface due to the dispersion of the thickness of the divided optical guide plate 112 for constructing the display block 110. In this case, it is preferable to eliminate the minute difference in level or height, for example, by means of polishing. Accordingly, the juncture becomes inconspicuous.

The driver board 118 is attached to the circuit boards 114 of the respective display components 14 to make electric connection. Thus, the display device 10A according to the first embodiment is completed.

As described above, in the display device 10A according to the first embodiment, for example, the flexible type adhesive 130, which has substantially the same refractive index as that of the divided optical guide plate 112, is allowed to intervene at the end surface portion of each of the display blocks 110. Therefore, when the plurality of display blocks 110 are arranged to produce the display device 10A, it is possible to obtain the display device 10A in which the juncture portion between the display blocks 110 is scarcely conspicuous.

When the plurality of display blocks 110 are arranged to produce the display device 10A, the stacking is successfully performed while allowing the adhesive 130 to intervene at the end surface portions of the display blocks 110. Therefore, when the display device 10A is installed in a variety of districts, then the plurality of display blocks 110 are transported to a working site, and the display blocks 110 are successfully stacked at the working site to produce the display device 10A. Accordingly, it is possible to reduce the production cost and the cost required for the transport, as compared with a case in which the display device 10A itself is transported.

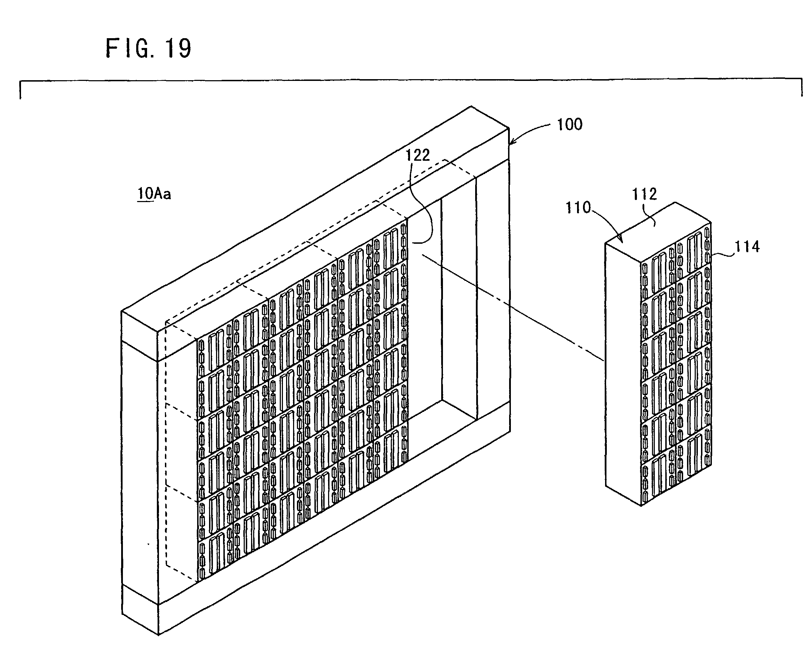

Next, explanation will be made with reference to FIGS. 19 to 23 for several modified embodiments of the display device 10A according to the first embodiment. In the explanation of the modified embodiments, the description of the light source 104 and the driver board 118 will be omitted.

At first, as shown in FIG. 19, a display device 10Aa according to a first modified embodiment is constructed in approximately the same manner as the display device 10A according to the first embodiment described above. However, the former is different from the latter in that the length of the divided optical guide plate 112 for constructing the display block 110 in the vertical direction is substantially the same as the length of the opening 122 of the frame 100 in the perpendicular direction (vertical direction).

In this arrangement, it is enough to use a small number of display blocks 110 as compared with the display device 10A according to the first embodiment. Therefore, it is possible to greatly reduce the number of assembling steps. Further, it is unnecessary to perform the stacking in the vertical direction. Therefore, it is possible to further decrease the cumulative pitch error.

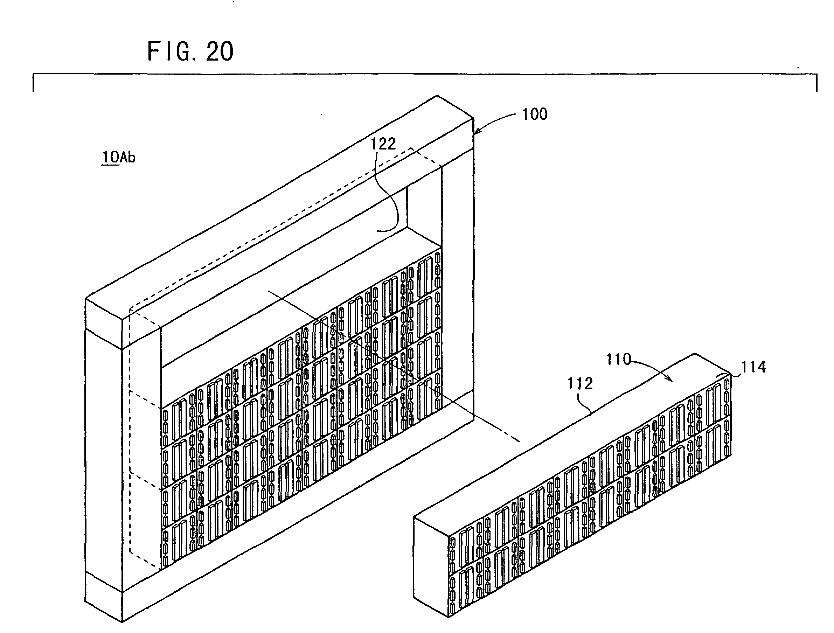

As shown in FIG. 20, a display device 10Ab according to a second modified embodiment is constructed in approximately the same manner as the display device 10A according to the first embodiment described above. However, the former is different from the latter in that the length of the divided optical guide plate 112 for constructing the display block 110 in the lateral direction is substantially the same as the length of the opening 122 of the frame 100 in the horizontal direction (lateral direction).

Also in this arrangement, it is enough to use a small number of display blocks 110 as compared with the display device 10A according to the first embodiment. Therefore, it is possible to greatly reduce the number of assembling steps. Further, the discrepancy of the arrangement in the horizontal direction is almost disappears. Thus, it is possible to further decrease the cumulative pitch error.

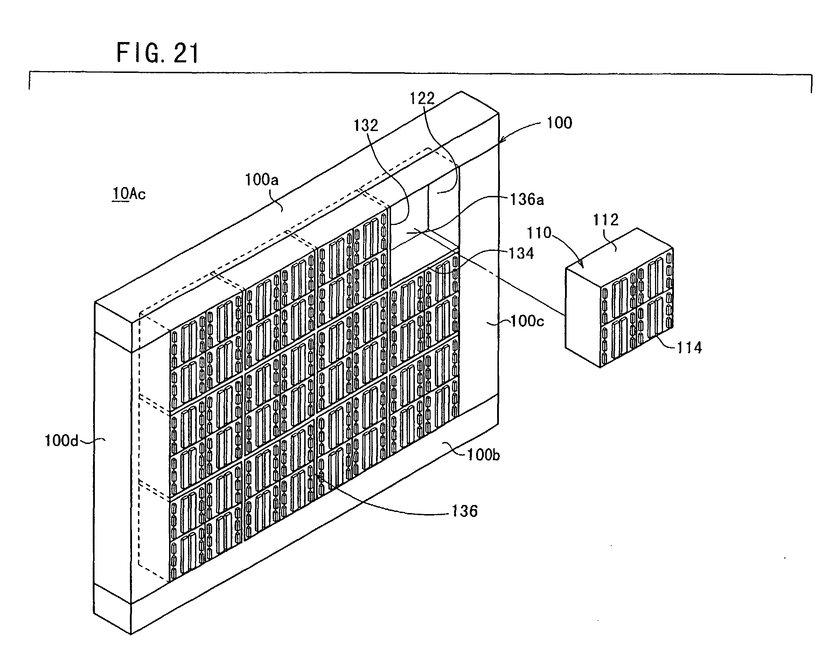

As shown in FIG. 21, a display device 10Ac according to a third modified embodiment is constructed in approximately the same manner as the display device 10A according to the first embodiment described above. However, the former is different from the latter in that a plurality of support members 132, 134 are arranged in the opening 122 of the frame 100. This embodiment is illustrative of a case in which the support members 132, 134 are assembled and arranged in a lattice-shaped configuration (lattice-shaped support member 136). One opening (lattice window 136a) of the lattice-shaped support member 136 has a size which is approximately the same as or slightly larger than the display block 110.

When the lattice-shaped support member 136 is produced, for example, it may be integrally formed with transparent resin. Alternatively, the lattice-shaped support member 136 may be constructed by forming cutouts at necessary portions of plate-shaped support members 132, 134, and inserting the cutouts of the respective support members 132, 134 while matching them to one another. The lattice-shaped support member 136 and the frame 100 may be secured to one another, for example, with the completely solidifying type adhesive or the flexible type adhesive. Alternatively, the lattice-shaped support member 136 may be in a floating state in the opening 122 without securing the lattice-shaped support member 136 to the frame 100.

Next, explanation will be made for a method for producing the display device 10Ac according to the third modified embodiment. The divided optical guide plate 112 for constructing the display block 110 is subjected to the surface treatment, and the end surface is mirror-finished. After that, the support members 132, 134 for constructing the lattice-shaped support member 136 are subjected to the surface treatment. In this process, the surface of the support members 132, 134 are coated with a hard coating material. Accordingly, it is possible to avoid any scratch on the surfaces of the support members 132, 134. For example, it is possible to previously avoid such a phenomenon that the white dot locally appears when the black is displayed, or the brightness is increased as a whole.

Subsequently, the surfaces of the support members 132, 134 are mirror-finished so that Rmax is not more than 0.3. Accordingly, the juncture is scarcely conspicuous. It is also possible to ensure a desired angle of visibility. Further, in the same manner as the divided optical guide plate 112, it is also preferable that the dimensional accuracy of the support members 132, 134 is not more than ±0.1 mm with respect to the reference dimension of 100 mm, the perpendicularity between the end surfaces and between the end surface and the flat surface is not more than 0.1 mm, and the parallelism between the end surfaces and between the flat surfaces is not more than 0.1 mm. It is more preferable that the dimensional accuracy of the support members 132, 134 is not more than ±0.03 mm with respect to the reference dimension of 100 mm, the perpendicularity between the end surfaces and between the end surface and the flat surface is not more than 0.03 mm, and the parallelism between the end surfaces and between the flat surfaces is not more than 0.03 mm.

Subsequently, the two side plates 100c, 100d are secured to the lower plate 100b, for example, with the adhesive of the completely solidifying type to produce a frame having an angular U-shaped configuration. After that, the support members 132, 134 are assembled into the lattice form to provide the lattice-shaped support member 136. The lattice-shaped support member 136 is installed in the frame 100. In this arrangement, it is also preferable that the lattice-shaped support member 136 is secured to the frame 100.

Subsequently, the plurality of display blocks 110 are successively stacked, while inserting the display blocks 110 into the lattice windows 136a of the lattice-shaped support member 136. During this process, the stacking is performed while allowing, for example, the flexible type adhesive 130 to intervene between the lower plate 100b and the display blocks 110, between the side plates 100c, 100d and the display blocks 110, and between the lattice-shaped support members 136 and the end surfaces of the respective display blocks 110.

After stacking all of the display blocks 110, the upper plate 100a for constructing the frame 100 is stacked and secured. Subsequently, the minute difference in level or height, which results from the dispersion of the thickness of the divided optical guide plates 112 formed on the display surface, is eliminated by means of polishing. After that, the driver board 118 is attached to the circuit boards 114 of the respective display components 14 to make electric connection. Thus, the display device 10Ac according to the third modified embodiment is completed.

In the display device 10Ac according to the third modified embodiment, the assembling is performed by arranging the lattice-shaped support member 136 in the opening 122 of the frame 100, and inserting the display blocks 110 into the respective lattice windows 136a of the lattice-shaped support member 136. Therefore, it is easy to perform the stacking operation for the display blocks 110. Thus, it is possible to shorten the working time. Especially, the cumulative pitch error, which is generated during the process of stacking the display blocks 110, is canceled owing to the presence of the lattice-shaped support member 136. Further, it is possible to absorb the dimensional dispersion of each of the display blocks 110. As a result, it is possible to reduce the distortion of the image which would be otherwise caused by the discrepancy of the picture element pitch, and it is possible to decrease the gap dispersion at the juncture. Thus, it is possible to make the juncture more inconspicuous.

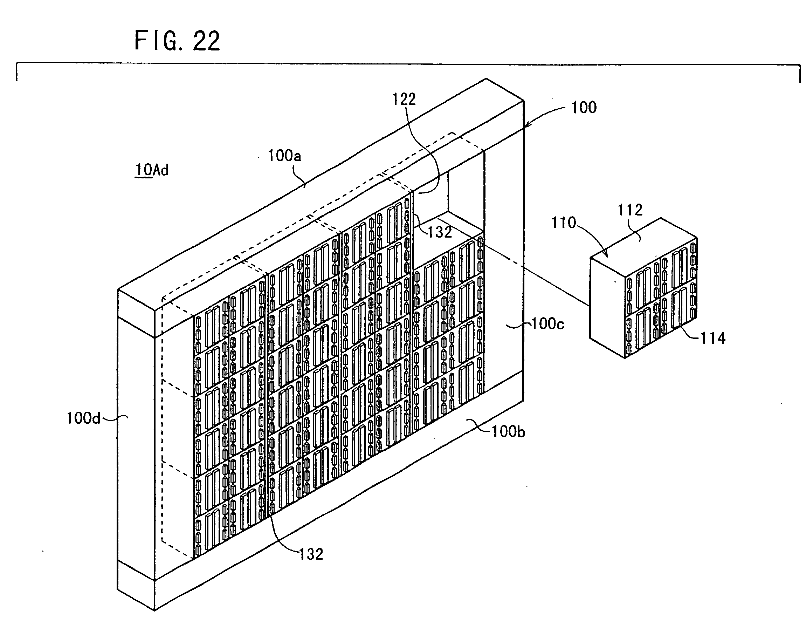

As shown in FIG. 22, a display device 10Ad according to a fourth modified embodiment is constructed in approximately the same manner as the display device 10Ac according to the third modified embodiment described above. However, the former is different from the latter in that a plurality of plate-shaped support members 132 are installed in the vertical direction respectively in place of the lattice-shaped support member 136.

In this embodiment, the discrepancy of the arrangement in the horizontal direction is canceled owing to the presence of the support members 132. Thus, it is possible to further decrease the cumulative pitch error.

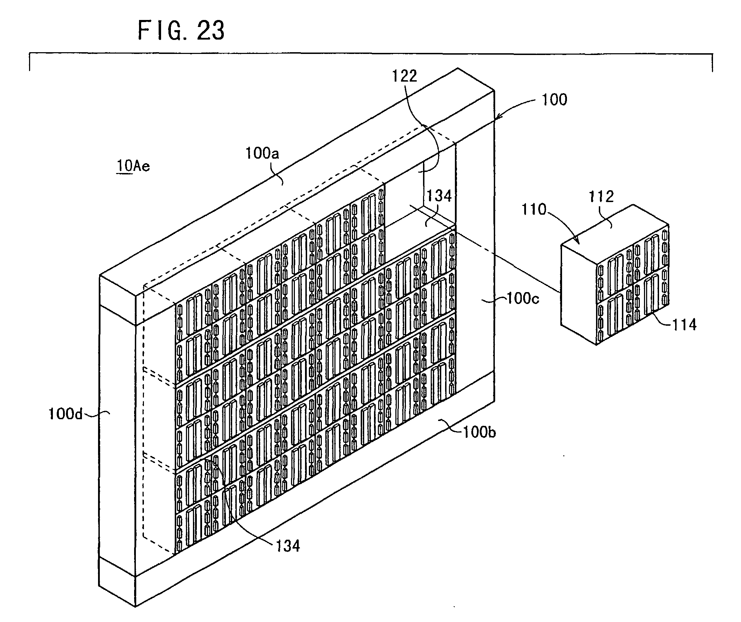

As shown in FIG. 23, a display device 10Ae according to a fifth modified embodiment is constructed in approximately the same manner as the display device 10Ac according to the third modified embodiment described above. However, the former is different from the latter in that a plurality of plate-shaped support members 134 are installed in the lateral direction respectively in place of the lattice-shaped support member 136.

In this embodiment, the discrepancy of the arrangement in the vertical direction during the stacking is canceled owing to the presence of the support members 134. Thus, it is possible to further decrease the cumulative pitch error.

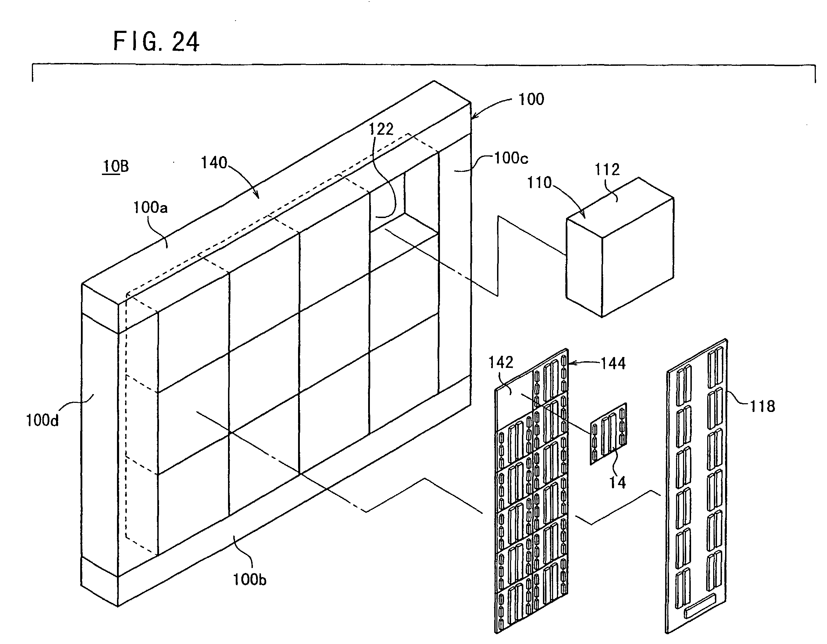

Next, a display device 10B according to a second embodiment will be explained with reference to FIG. 24.

As shown in FIG. 24, the display device 10B according to the second embodiment is constructed in approximately the same manner as the display device 10A according to the first embodiment described above. However, the former is different from the latter principally in that the display block 110 is constructed by only the divided optical guide plate 112.

That is, one large optical guide plate 140 is completed by a frame 100 and a large number of divided optical guide plates 112 by stacking the divided optical guide plates 112 in an opening 122 of the frame. One module 144 is constructed by sticking a plurality of display components 14 to a module optical waveguide plate 142. The display device 10B according to the second embodiment is constructed by sticking the modules 144 to the large optical guide plate 140. Also in this arrangement, for example, a flexible type adhesive 130 is allowed to intervene between the frame 100 and the divided optical guide plates 112 and between end surfaces of the divided optical guide plates 112.

The module optical waveguide plate 142 has a size obtained by multiplying the size of the divided optical guide plate 112 or the display component 14 by an integer. Preferably, it is desirable that the multiplication by the integer is selected such that the juncture between the module optical guide plates 142 is superimposed on the juncture between the divided optical guide plates 112. In the embodiment shown in FIG. 24, the module optical guide plate 142 has substantially the same thickness as that of the optical waveguide plate 20 for constructing the display component 14, and it has a size as obtained by arranging the divided optical guide plates 112 in an amount corresponding to one array in the vertical direction. Therefore, one module 144 is allotted and secured to the divided optical guide plates 112 corresponding to the amount of one array arranged in the vertical direction.

Also in the display device 10B according to the second embodiment, in the same manner as in the display device 10A according to the first embodiment described above, when the plurality of display blocks 110 are arranged to produce the display device 10B, it is possible to obtain the display device 10B in which the juncture portion between the display blocks 110 is scarcely conspicuous. Further, the repair performance is excellent, the display device 10B can be assembled at a working side, and it is possible to effectively reduce the production cost.

The display components 14 are secured to the module optical waveguide plate 142, for example, with the adhesive of the completely solidifying type. Accordingly, it is possible to absorb any warpage of the display component 14, and it is possible to tightly secure the display component 14 to the module optical waveguide plate 142.

Especially, in the display device 10B according to the second embodiment, the large optical guide plate 140 is produced by stacking the divided optical guide plates 112, and then the modules 144 are secured thereto. Therefore, the cumulative pitch error, which is involved in the stacking of the divided optical guide plates 112, does not affect the arrangement of the display components 14. Thus, it is possible to improve the image quality.

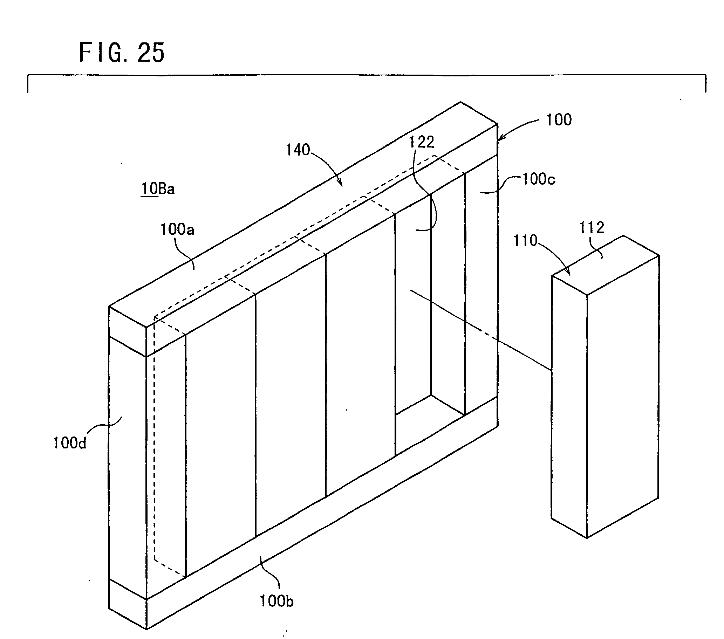

Next, explanation will be made with reference to FIGS. 25 to 29 for several modified embodiments of the display device 10B according to the second embodiment. In the following explanation, the description of the module 144 and the driver board 118 will be omitted.

As shown in FIG. 25, a display device 10Ba according to a sixth modified embodiment is constructed in approximately the same manner as the display device 10B according to the second embodiment described above. However, the former is different from the latter in that the length of the divided optical guide plate 112 in the vertical direction is substantially the same as the length of the opening 122 of the frame 100 in the perpendicular direction (vertical direction). In this arrangement, it is enough to use a small number of display blocks 110 as compared with the display device 10B according to the second embodiment. Therefore, it is possible to greatly reduce the number of assembling steps.

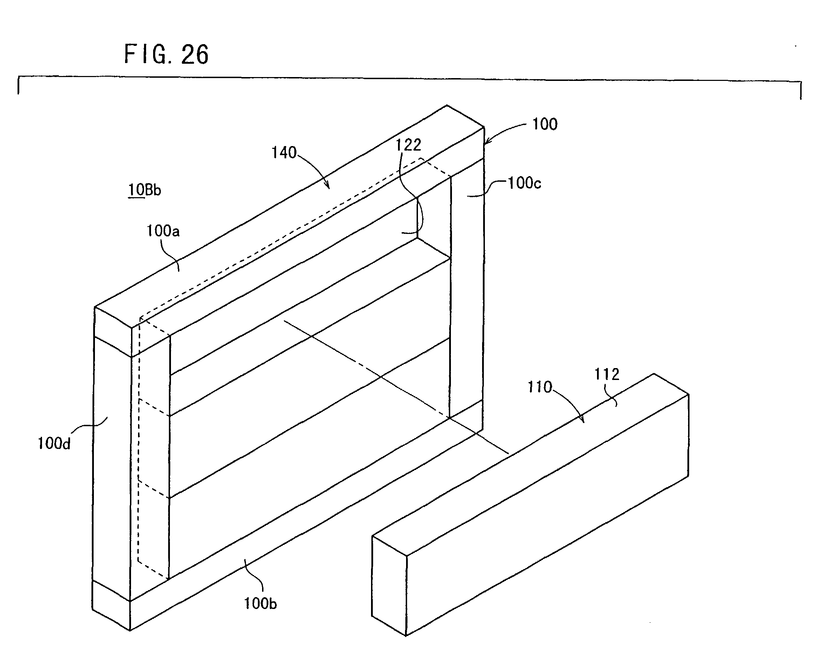

As shown in FIG. 26, a display device 10Bb according to a seventh modified embodiment is constructed in approximately the same manner as the display device 10B according to the second embodiment described above. However, the former is different from the latter in that the length of the divided optical guide plate 112 in the lateral direction is substantially the same as the length of the opening 122 of the frame 100 in the horizontal direction (lateral direction). Also in this arrangement, it is possible to greatly reduce the number of assembling steps.

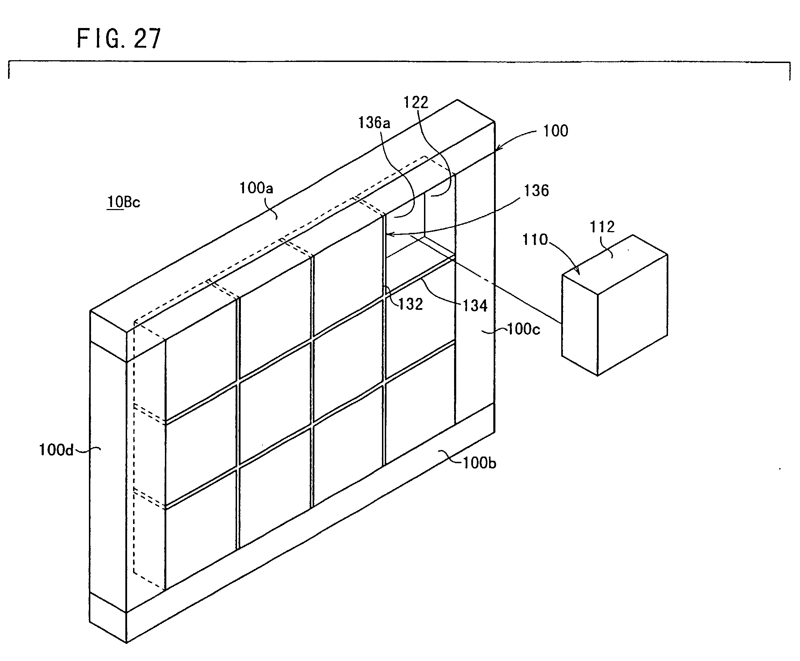

As shown in FIG. 27, a display device 10Bc according to an eighth modified embodiment is constructed in approximately the same manner as the display device 10B according to the second embodiment described above. However, the former is different from the latter in that a lattice-shaped support member 136 is arranged in the opening 122 of the frame 100, and the divided optical guide plates 112 are inserted into lattice windows 136a of the lattice-shaped support member 136, in the same manner as in the display device 10Ac according to the third modified embodiment. Of course, for example, a flexible type adhesive 130 intervenes between the frame 100 and the divided optical guide plates 112 and between the lattice-shaped support member 136 and the end surfaces of the divided optical guide plates 112. In this case, it is easy to perform the stacking operation for the display blocks 110, and it is possible to shorten the working time.

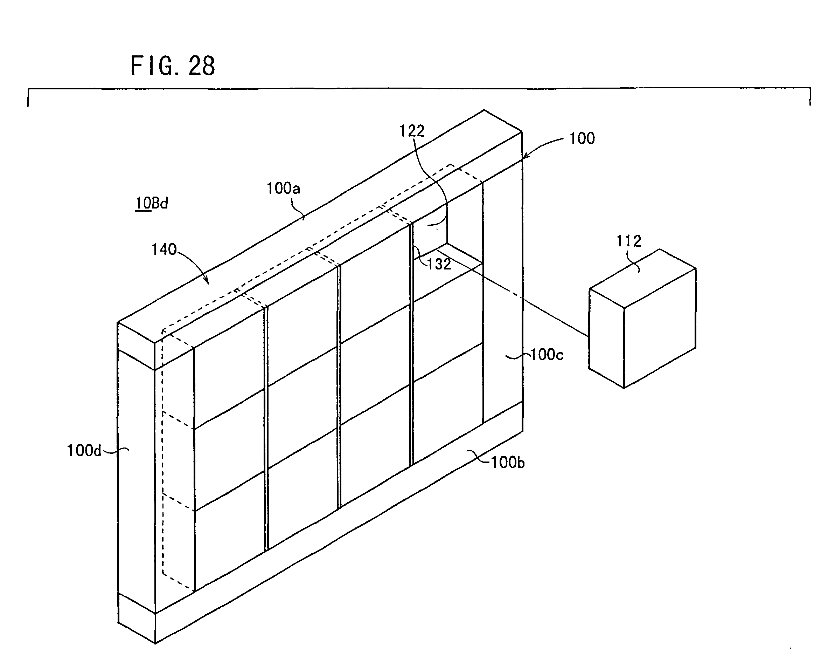

As shown in FIG. 28, a display device 10Bd according to a ninth modified embodiment is constructed in approximately the same manner as the display device 10Bc according to the eighth modified embodiment described above. However, the former is different from the latter in that a plurality of plate-shaped support members 132 are installed in the vertical direction respectively in place of the lattice-shaped support member 136.

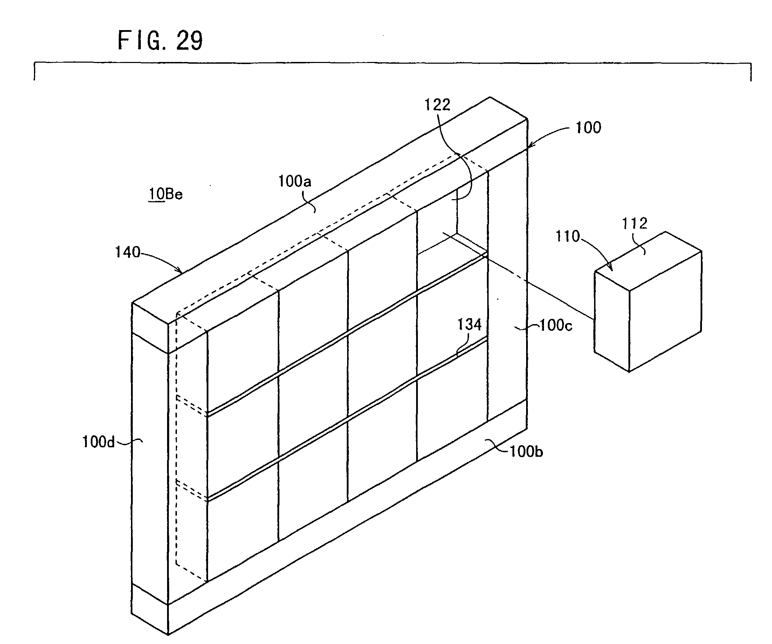

As shown in FIG. 29, a display device 10Be according to a tenth modified embodiment is constructed in approximately the same manner as the display device 10Bc according to the eighth modified embodiment described above. However, the former is different from the latter in that a plurality of plate-shaped support members 132 are installed in the horizontal direction respectively in place of the lattice-shaped support member 136.

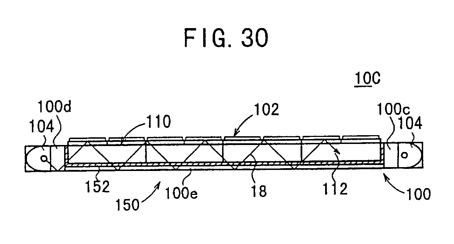

Next, explanation will be made with reference to FIGS. 30 to 34 for a display device 10C according to a third embodiment.

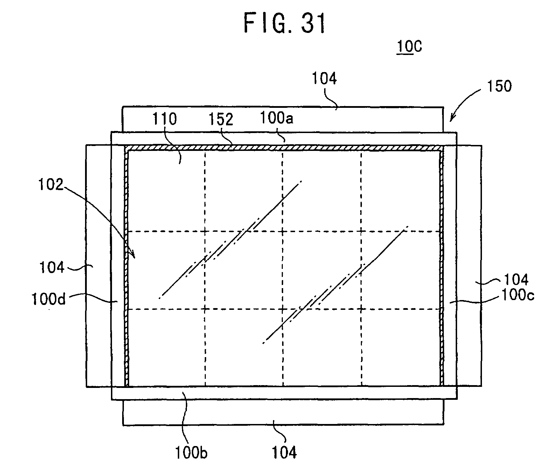

As shown in FIGS. 30 and 31, the display device 10C according to the third embodiment is constructed such that a main display device body 102, which is constructed, for example, by arranging, in a matrix configuration, a large number of display blocks 110 of the display device 10A according to the first embodiment, is accommodated in a casing 150 with a back opening composed of an upper plate 100a, a lower plate 100b, side plates 100c, 100d, and a front panel 100e each of which is made of an acrylic material.

The casing 150 is constructed such that the front panel 100e is secured, for example, with an adhesive of the completely solidifying type, to the frame 100 composed of the upper plate 100a, the lower plate 100b, and the side plates 100c, 100d.

The main display device body 102 is accommodated so that its display surface is opposed to the front panel 100e. A substance 152 having a light-transmitting property adjusted for its refractive index is allowed to intervene between the display surface and the front panel 100e and between the end surfaces of the respective display blocks 110. The display surface tightly contacts with the front panel 100e by the aid of the substance 152 intervening therebetween. Further, the end surfaces of the respective display blocks 110 tightly contact with each other by the aid of the substance 152 intervening therebetween.

That is, the display device 10C according to the third embodiment has such a structure that the front panel 100e of the casing 150 is arranged at the front surfaces (display surfaces) of the respective display blocks 110, and thus the divided optical guide plates 112 for constructing the respective display blocks 110 are allowed to have the plate thickness required to introduce the light.

The matching oil described above can be used as the substance 152. The matching oil is in a form of liquid or grease. The matching oil may be made of either an inorganic material or an organic material, provided that the light transmittance is satisfactory at the wavelength in the visible light region. It is preferable to use those which have high insulating performance and low ignitability. It is more preferable to use those which are excellent in wettability with respect to the optical guide plate and which are stable for a long period of time, for example, against heat, light, and moisture. Specifically, the matching oil includes, for example., dimethyl silicone oil, methyl phenyl silicone oil, glycerol, di-2-ethylhexyl phthalate, silicone grease, and optical gel.

When the matching oil in a liquid form is used, it is preferable that the viscosity is 100 to 1000 cSt, in order to simultaneously satisfy the two factors, i.e., the bubble generated upon application is easily released, and the liquid neither flow nor trickle excessively.

On the other hand, the front panel 100e of the casing 150 may be made of either an inorganic material or an organic material, provided that the light-transmitting property is satisfactory at the wavelength in the visible light region. Specifically, it is possible to use a simple substance or a combined material composed of, for example, glass, quartz, light-transmitting alumina, acrylic resin, methacrylic resin, polycarbonate, vinyl chloride resin, phenol resin, vinyl acetate resin, ABS, fluororesin, and unsaturated polyester resin.

It is preferable that the front panel 100e of the casing 150 is made of the same material as that for the divided optical guide plate 112, for example, in view of the fact that the refractive index is identical, and the coefficient of thermal expansion is identical. As for the light-transmitting property, it is preferable that the transmittance is not less than 50 % for the perpendicular incident light at the wavelength in the visible light region. It is more preferable that the transmittance is not less than 70 %. The thickness of the front panel 100e is preferably 0.5 to 100 mm in view of the assembling performance.

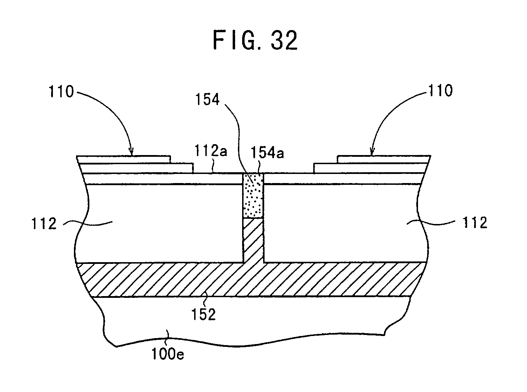

As shown in FIG. 32, a seal member 154, which has substantially the same refractive index as that of the divided optical guide plate 112, is applied between the substance 152 and the atmospheric air between the end surfaces of the respective display blocks 110.

The seal member 154 includes adhesive, glue or sticker, adhesive to be solidified after curing, adhesive to be flexible after curing, rubber-like adhesive, and gel-like adhesive. Alternatively, the seal member 154 may be obtained by depositing such a material on a film-shaped member.

The material may be either an inorganic material or an organic material. It is preferable to use a material which does not cause any reaction with a substance to make contact therewith. Specifically, for example, it is possible to use those based on silicone, modified silicone, polysulfide, polyurethane, acrylic, epoxy, SBR, and butyl rubber. In this embodiment, the seal member 154 is preferably flexible, in view of the repair performance and the mitigation of thermal expansion.

It is preferable that the end 154a of the seal member 154, which contacts with the atmospheric air, is subjected to surface adjustment with respect to (flushed with) the back surface 112a of the divided optical guide plate 112 as shown in FIG. 32, in order that the light 18 traveling in the divided optical guide plate 112 is reflected at an appropriate angle.

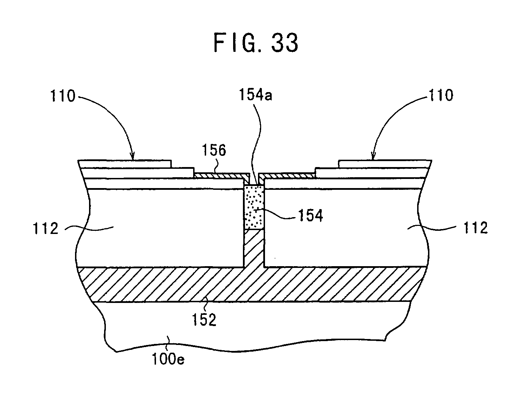

In order to avoid the invasion of light from the back, as shown in FIG. 33, it is preferable that the adhesive 154 is applied between the end surfaces of the display blocks 110, and a light-absorbing material 156 is applied at the circumferential portions of the divided optical guide plates 112.

In this embodiment, the light-absorbing material 156 is applied to the end 154a of the seal member 154. Accordingly, the light, which incomes at an unsuitable angle, can be absorbed. Therefore, it is possible to improve the image quality. In this case, it is unnecessary to make the surface adjustment for the end 154a with respect to the optical guide plate 112. Accordingly, the degree of freedom of design is increased. Those usable as the light-absorbing material 156 include, for example, pigments and dyes.

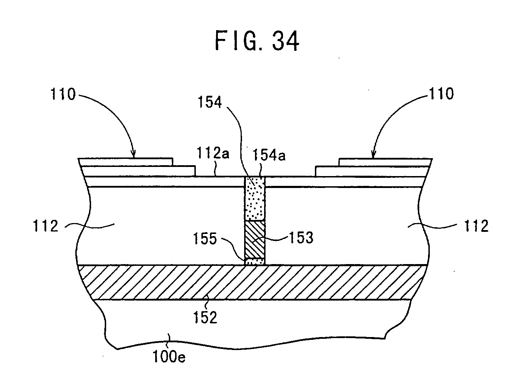

As shown in FIG. 34, it is not necessarily indispensable that the substance 152 having the light-transmitting property adjusted for its refractive index (conveniently referred to as "first substance 152"), which is allowed to exist between the front panel 100e and the divided optical guide plate 112, is identical with the substance 153 having the light-transmitting property adjusted for its refractive index (conveniently referred to as "second substance 153") which is allowed to exist at the end surface portion of the divided optical guide plate 112.

When the first and second substances 152, 153 to be used are composed of different materials, it is preferable that the refractive index $N_3$ of the first substance 152 satisfies the following expression, provided that the refractive index of the divided optical guide plate 112 of the display block 110 is $N_1$, and the refractive index of the front panel 100e is $N_2$:

$$0.9N_1 \leq N_3 \leq 1.1N_2 \ (N_1 \leq N_2) \text{ or}$$

$$0.9N_2 \leq N_3 \leq 1.1N_1 \ (N_2 \leq N_1)$$

Accordingly, the light 18 can be sufficiently introduced into the display component 14, and it is possible to ensure the display brightness of the screen. Further, in order to efficiently introduce the light 18 into the display component 14 and suppress the electric power consumption, it is preferable that the transmittance is not less than 50 % for the perpendicular incident light at the wavelength in the visible light region. It is more preferable that the transmittance is not less than 70 %.

When the first and second substances 152, 153 to be used are composed of mutually different materials, and when the both are liquid, it is possible to prevent them from being mixed with each other by allowing the seal member 155 to intervene between the both. When any one of them is solid or when both of them are solid, they are not mixed with each other. Therefore, it is possible to omit the installation of the seal member 155. When the foregoing conditions are satisfied, the first and second substances 152, 153 may be in any form including gas, liquid, and solid, or they may be a mixture thereof.

When the display device 10C according to the third embodiment is produced, the casing 150 having the front panel 100e is prepared. The display device 10C can be produced with ease by allowing the display surfaces of the respective display blocks 110 to be opposed to the first principal surface of the front panel 100e, and allowing the substance 152 to intervene between the surfaces, wherein the respective display blocks 110 are arranged along the first principal surface of the front panel 100e.

As described above, the display device 10C according to the third embodiment is effective as follows in the same manner as the display device 10A according to the first embodiment described above. That is, in the display device 10C, when the plurality of display blocks 110 are arranged to produce the display device 10C, the juncture portion between the display blocks 110 is scarcely conspicuous. Further, the display device 10C is excellent in repair performance. Especially, in the display device 10C according to the third embodiment, when the substance 152 is the matching oil, it is possible to decrease the amount of use of the expensive matching oil. Thus, the display device 10C is advantageous to reduce the production cost.

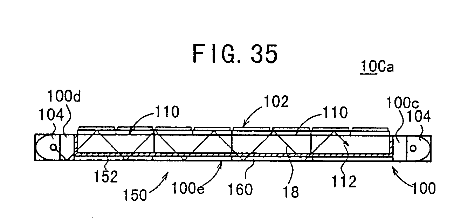

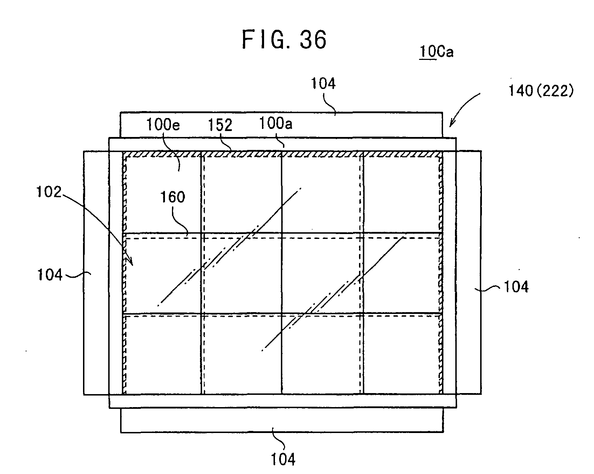

Next, explanation will be made with reference to FIGS. 35 and 36 for a modified embodiment of the display device 10C according to the third embodiment.

As shown in FIGS. 35 and 36, a display device 10Ca according to this eleventh modified embodiment is constructed in approximately the same manner as the display device 10C according to the third embodiment described above. However, the former is different from the latter in that a front panel 100e is constructed by arranging a plurality of divided optical guide plates 160 in a matrix configuration, and end surfaces of the respective divided optical guide plates 160 are secured to one another, for example, with an adhesive of the completely solidifying type.

Therefore, when the display device 10Ca according to the eleventh modified embodiment is produced, the process includes a step of producing the front panel 100e, and a step of securing the front panel 100e to the frame 100 to produce the casing 150, followed by the same steps as those of the method for producing the display device 10C according to the third embodiment described above.

In the display device 10Ca according to the eleventh modified embodiment, the same effect as that of the display device 10C according to the third embodiment described above is obtained. Further, the front panel 100e is constructed by arranging the plurality of divided optical guide plates 160. Therefore, the divided optical guide plate 160 to be used can be compact and inexpensive. Further, it is possible to use the divided optical guide plate having a good quality involving few defects such as bubbles and foreign matters at the inside. The display device 10Ca can be also assembled at a working site.

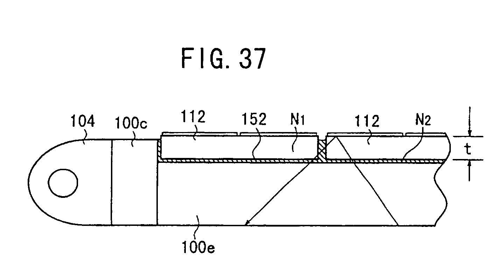

In the display device 10C according to the third embodiment described above and the display device 10Ca according to the eleventh modified embodiment, in order to eliminate the sense of incongruity of the image at the juncture portion between the divided optical guide plates 112, it is necessary to control the difference in refractive index between the divided optical guide plate 112 and the substance 152 and the thickness t of the divided optical guide plate 112 as shown in FIG. 37. The difference in refractive index herein refers to the difference ($N_1 - N_2$) between the refractive index $N_1$ of the divided optical guide plate 112 and the refractive index $N_2$ of the substance 152.

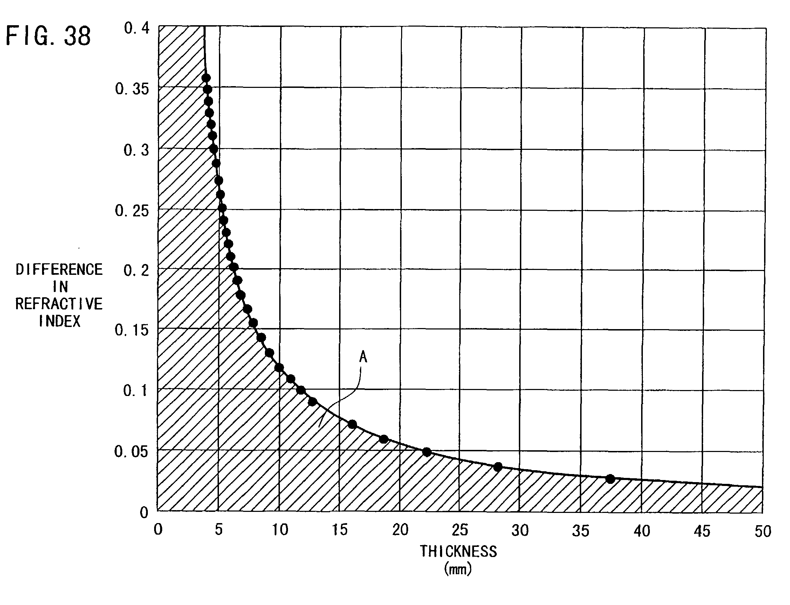

When the thickness t of the divided optical guide plate 112 is thick, the assembling performance is improved. However, it is necessary to strictly decrease the difference in refractive index. The relationship between the thickness t of the divided optical guide plate 112 and the allowable difference in refractive index resides in a relationship as represented by the following expression and illustrated by the region A indicated by hatched lines in FIG. 38. It is assumed that x represents the thickness t of the divided optical guide plate 112, and y represents the allowable difference in refractive index.

$$y \leq (1.46/x)$$

The sense of incongruity at the juncture disappears if the difference in refractive index ($N_1 - N_2$) between the divided optical guide plate 112 and the substance 152 is set to be within the range of the allowable difference in refractive index.

Specifically, if the thickness t of the divided optical guide plate 112 is 20 mm, the difference in refractive index is 0.05 which is severe. If the thickness t is 5 mm, the difference in refractive index is allowed to be up to 0.25. That is, the divided optical guide plate 112 and the difference in refractive index can be arbitrarily selected depending on the assembling performance and the environmental conditions such as the temperature at the installation place for the display device.

In the embodiment of the present invention, an acrylic material having a refractive index of 1.490 at ordinary temperature may be used as the material for the divided optical guide plate 112. In this case, the material for the substance 152 may be obtained by mixing two methyl phenyl silicone oils, i.e., TSF434 produced by GE Toshiba Silicone and SH550 produced by Toray Dow Corning. Thus, the matching oil having a predetermined refractive index (1.485 to 1.500) is successfully obtained.

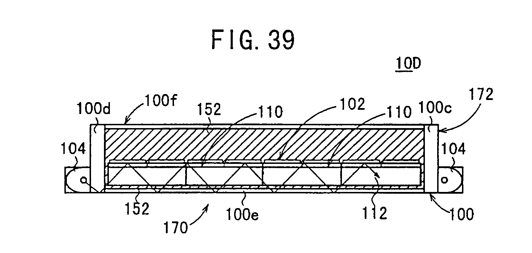

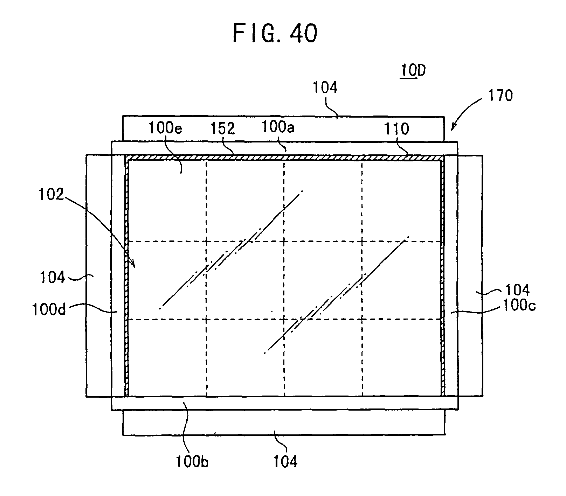

Next, explanation will be made with reference to FIGS. 39 and 40 for a display device 10D according to a fourth embodiment.

As shown in FIGS. 39 and 40, in the display device 10D according to the fourth embodiment, a main display device body 102, which is constructed by arranging, for example, a large number of display blocks 110 of the display device 10A according to the first embodiment in a matrix configuration, is accommodated in a completely closed type vessel 170 comprising an upper plate 100a, a lower plate 100b, side plates 100c, 100d, a front panel 100e, and a back panel 100f each of which is made of an acrylic material. Of course, the upper plate 100a may be omitted.

The vessel 170 is constructed such that the upper plate 100a, the lower plate 100b, the side plates 100c, 100d, the front panel 100e, and the back panel 100f are secured to one another, for example, with an adhesive of the completely solidifying type. It is not necessarily indispensable that the back panel 100f is transparent.

A substance 152, which has a light-transmitting property and which is adjusted for its refractive index, is charged in the vessel 170. As for the main display device body 102, the substance 152 is allowed to intervene between the display surface and the front panel 100e, between the end surfaces of the respective display blocks 110, and between the back surfaces of the display blocks 110 and the back panel 100f. The display surface and the front panel 100e make tight contact with each other by the aid of the substance 152 intervening therebetween. Further, the end surfaces of the respective display blocks 110 make tight contact with each other by the aid of the substance 152 intervening therebetween. Also in the display device 10D according to the fourth embodiment, it is possible to use the matching oil as the substance 152. The matching oil has been already described in detail, duplicate explanation of which is omitted in this section.

When the display device 10D according to the fourth embodiment is produced, at first, a case 172, which comprises the lower plate 100b, the side plates 100c, 100d, the front panel 100e, and the back panel 100f except for the upper plate 100a, is produced. After that, the main display device body 102, which is constructed by arranging the large number of display blocks 110, is accommodated in the case 172. Subsequently, the inside of the case 172 is filled with the substance 152, and then the upper plate 100a is secured. Thus, the display device 10D can be produced with ease.

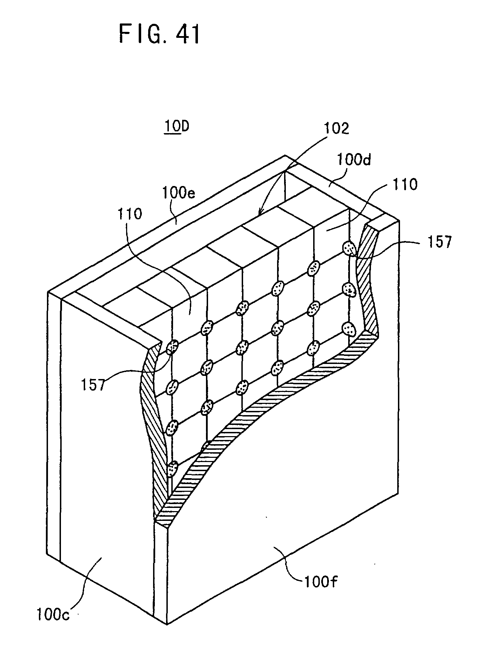

Another method is available. That is, for example, the display surfaces of the display blocks 110 are allowed to be opposed to the first principal surface of the front panel 100e, and the substance 152 is allowed to intervene therebetween, while the plurality of display blocks 110 are arranged in a tight contact manner along the first principal surface of the front panel 100e. After that, as shown in FIG. 41, contact point portions at the corners of the respective display blocks 110 are secured with an adhesive 157. The adhesive 157 is preferably of the flexible type in view of the mitigation of thermal expansion as well.

After that, the lower plate 100b, the side plates 100c, 100d, and the back panel 100f are secured to the front panel 100e to produce the case 172. Subsequently, the inside of the case 172 is filled with the substance 152, and then the upper plate 100a is secured. Thus, the display device 10D can be produced with ease.

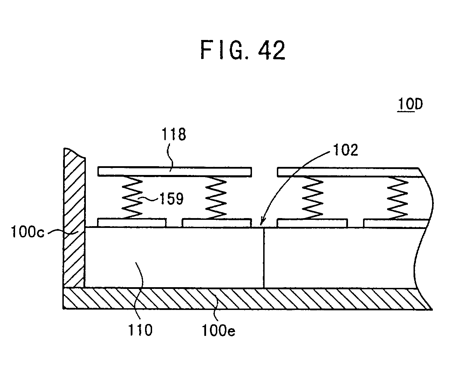

Other than the method shown in FIG. 41, another method is available for fixing the display blocks 110 as shown in FIG. 42. That is, a resilient material 159 may be installed between the display block 110 and the driver board 118, and the display block 110 may be fixed by being pressed against the front panel 100e. Those usable as the resilient material 159 include, for example, coil spring, plate spring, rubber, and compressed air (cylinder).

As described above, the display device 10D according to the fourth embodiment is effective in the same manner as the display device 10A according to the first embodiment described above. That is, in the display device 10D, when the plurality of display blocks 110 are arranged to produce the display device 10D, the juncture portion between the display blocks 110 is scarcely conspicuous. Further, the display device 10D is excellent in repair performance.

Usually, when the matching oil is allowed to intervene between the end surfaces of the objects, it is necessary to fix any seal member so that the matching oil is not leaked. However, in this embodiment, a state is given, in which the main display device body 102 is accommodated in the substance 152 charged in the vessel 170. Therefore, even when the matching oil is used as the substance 152, then the seal member is unnecessary, and it is possible to realize the simplification of the production steps. Further, this embodiment is also advantageous in that any bubble is not generated, which would be otherwise caused by the presence of the seal member. However, the circuit board 114, the driver board 118, and the display controller exist in the case 172 which is filled with the substance 152. Therefore, it is preferable to use the substance 152 having high insulating performance.

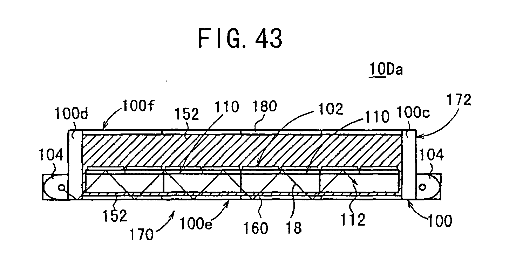

Next, explanation will be made with reference to FIGS. 43 to 55 for several modified embodiments of the display device 10D according to the fourth embodiment.

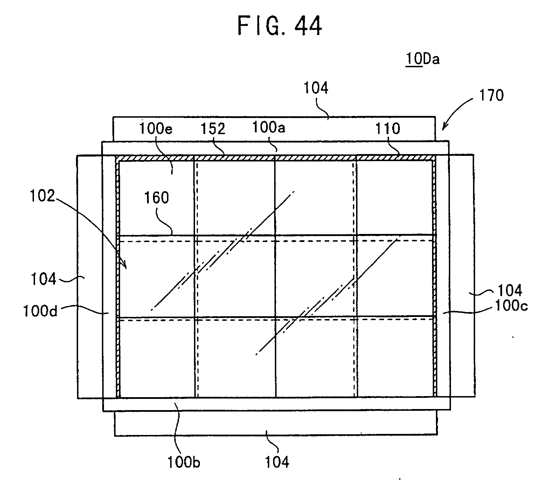

At first, as shown in FIGS. 43 and 44, a display device 10Da according to a twelfth modified embodiment is constructed in approximately the same manner as the display device 10D according to the fourth embodiment described above. However, the former is different from the latter in that the front panel 100e for constructing the vessel 170 is constructed by arranging a plurality of divided optical guide plates 160 in a matrix configuration, and end surfaces of the respective divided optical guide plates 160 are secured to one another, for example, with an adhesive of the completely solidifying type. In this embodiment, the back panel 100f is constructed by arranging a plurality of divided plates 180 in a matrix configuration, and end surfaces of the respective divided plates 180 are secured to one another, for example, with an adhesive of the completely solidifying type.

Therefore, when the display device 10Da according to the twelfth modified embodiment is produced, the process includes a step of producing the front panel 100e and the back panel 100f, and a step of producing the vessel 170, followed by the same steps as those of the method for producing the display device 10D according to the fourth embodiment described above.

In the display device 10Da according to the twelfth modified embodiment, the same effect as that of the display device 10D according to the fourth embodiment described above is obtained. Further, the front panel 100e is constructed by arranging the plurality of divided optical guide plates 160. Therefore, the divided optical guide plate 160 to be used can be compact and inexpensive. Further, it is possible to use the divided optical guide plate 160 having a good quality involving few defects such as bubbles and foreign matters at the inside. The display device 10Da can be also assembled at a working site.

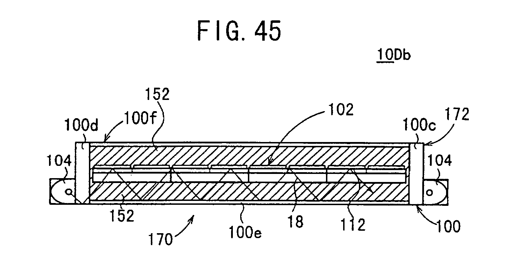

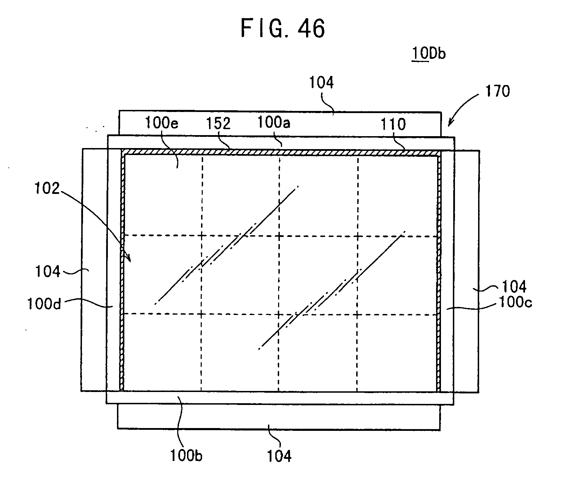

As shown in FIGS. 45 and 46, a display device 10Db according to a thirteenth modified embodiment is constructed in approximately the same manner as the display device 10D according to the fourth embodiment described above. However, the former is different from the latter in that each of the divided optical guide plates 112 for constructing the respective display blocks 110 is composed of a thin plate. The main display device body 102 is preferably accommodated at a central portion in the thickness direction of the vessel 170, as compared with the case in which the main display device body 102 is accommodated so that it makes tight contact with the front panel 100e. Accordingly, the light 18 from the light source 104 passes through the substance 152 more dominantly. Therefore, the display device 10Db is scarcely affected by the defect and the dirt in the front panel 100e and the thin divided optical guide plate 112. Thus, it is possible to improve the image quality.

When the display device 10Db according to the thirteenth embodiment is produced, especially when the main display device body 102 is positioned at the center in the thickness direction of the vessel 170, for example, the arrangement can be easily made by arranging, in the vessel 170, the lattice-shaped support member 136 as used, for example, in the display device 10Ac according to the third modified embodiment (see FIG. 21). For example, a case with a back opening is produced by securing a front panel 100e, an upper plate 100a, a lower plate 100b, and side plates 100c, 100d. The lattice-shaped support member 136 is arranged in the case. The case is placed so that the front panel 100e serves as a bottom surface, and a predetermined amount of the substance 152 is poured into the case. During this process, the substance 152 is poured to such an extent that the main display device body 102 is positioned at the central portion in the thickness direction of the vessel 170.

Subsequently, the respective display blocks 110 are inserted, for example, into the lattice windows 136a of the lattice-shaped support member 136. During this process, the display block 110 is inserted so that the display surface of the display block 110 is opposed to the substance 152. Subsequently, the inside of the case is filled with the substance 152. The back panel 100f is secured to construct the vessel 170 to be placed so that the lower plate 100b serves as a bottom surface. Thus, the display device 10Db according to the thirteenth modified embodiment is completed.

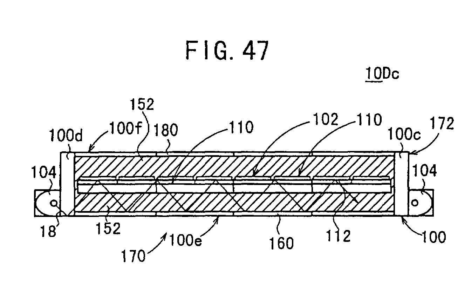

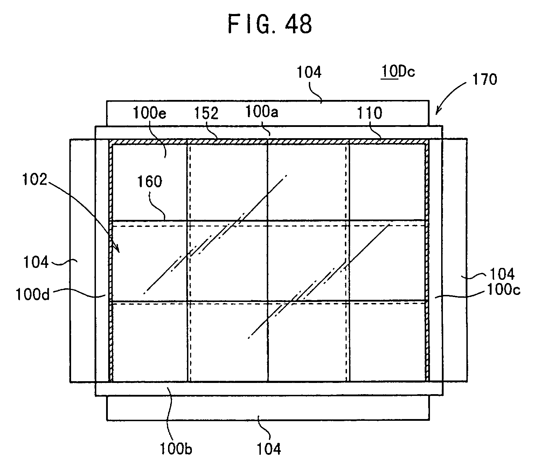

Next, as shown in FIGS. 47 and 48, a display device 10Dc according to a fourteenth modified embodiment is constructed in approximately the same manner as the display device 10Db according to the thirteenth modified embodiment described above. However, the former is different from the latter in that the front panel 100e and the back panel 100f for constructing the vessel 170 are respectively constructed by arranging a plurality of divided optical guide plates 160 and a plurality of divided plates 180 in a matrix configuration, and end surfaces of the respective divided optical guide plates 160 and end surfaces of the respective divided plates 180 are secured to one another, for example, with an adhesive of the completely solidifying type.

Therefore, when the display device 10Dc according to the fourteenth modified embodiment is produced, the process includes a step of producing the front panel 100e and the back panel 100f, followed by the same steps as those of the method for producing the display device 10Db according to the thirteenth modified embodiment described above.

In the display device 10Dc according to the fourteenth modified embodiment, the same effect as that of the display device 10Db according to the thirteenth modified embodiment described above is obtained. However, the front panel 100e is constructed by arranging the plurality of divided optical guide plates 160. Therefore, the divided optical guide plate 160 to be used can be compact and inexpensive. Further, it is possible to use the divided optical guide plate 160 having a good quality involving few defects such as bubbles and foreign matters at the inside. The display device 10Dc can be also assembled at a working site.

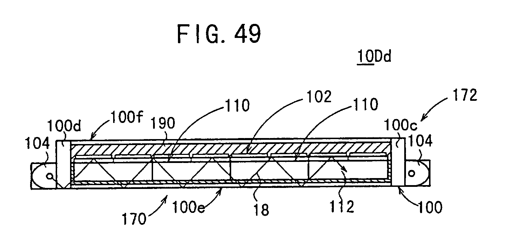

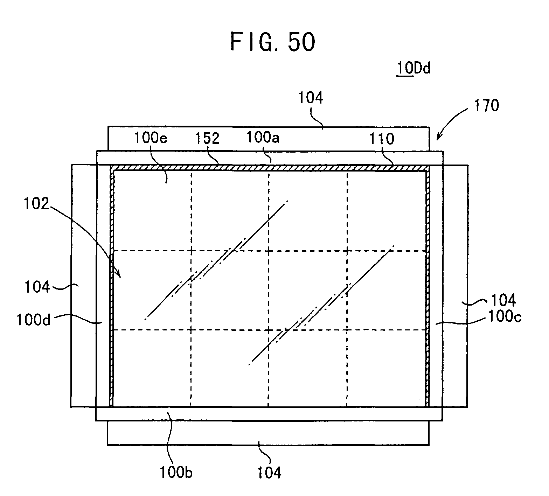

Next, as shown in FIGS. 49 and 50, a display device 10Dd according to a fifteenth modified embodiment is constructed in approximately the same manner as the display device 10D according to the fourth embodiment described above. However, the former is different from the latter in that the substance 152 is allowed to intervene between the display surface and the front panel 100e and between the end surfaces of the display blocks 110 respectively, and a substance 190, which is different from the substance 152, is allowed to intervene between the back surface of the display block 110 and the back panel 100f.

The substance 190 is in a form of liquid or grease. It is preferable to use those which have high insulating performance and low ignitability, because the driving circuit for the main display device body 102 is also immersed in the substance 190.

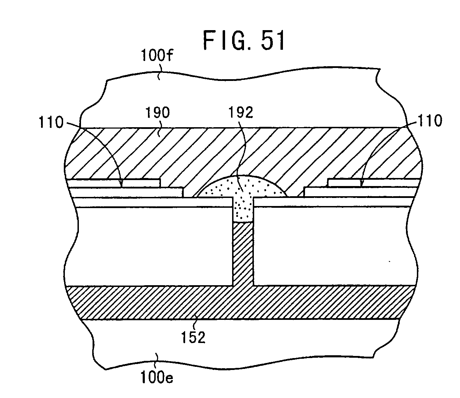

Further, as shown in FIG. 51, a seal member 192 for preventing the substances 152, 190 from being mixed with each other is applied between the substance 152 which is allowed to intervene between the end surfaces of the respective display blocks 110 and the substance 190 which is allowed to intervene between the back surface of the display block 110 and the back panel 100f.

Therefore, when the display device 10Dd according to the fifteenth modified embodiment is produced, for example, the display surfaces of the display blocks 110 are allowed to be opposed to the first principal surface of the front panel 100e, and the substance 152 is allowed to intervene between the surfaces, while the plurality of display blocks 110 are tightly contacted and arranged along the first principal surface of the front panel 100e, and then the display blocks 110 are fixed by using, for example, the technique shown in FIG. 41 or 42. Subsequently, the case 172 is produced by securing the lower plate 100b, the side plates 100c, 100d, and the back panel 100f to the front panel 100e, and then the substance 190 is charged to the inside of the case 172. Subsequently, the upper plate 100a is secured. Thus, the display device 10Dd can be produced with ease.

The display device 10Dd according to the fifteenth modified embodiment provides substantially the same effect as that of the display device 10D according to the fourth embodiment described above. Especially, when the substance 152 is the matching oil, it is possible to decrease the amount of use of the expensive matching oil 152. Further, an oil, which is inexpensive and which has high insulation resistance, can be used as the substance 190. Thus, the display device 10Dd is advantageous to reduce the production cost.

It is preferable that the substance 190 to be used has a specific gravity which is equivalent to that of the substance 152, since the pressure, which is exerted on the display block 110, is uniform without being affected by the depth.

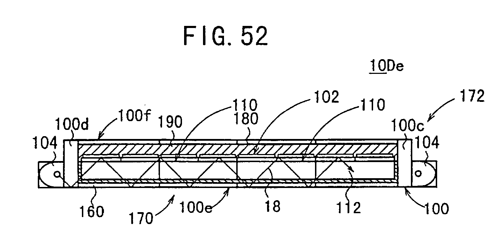

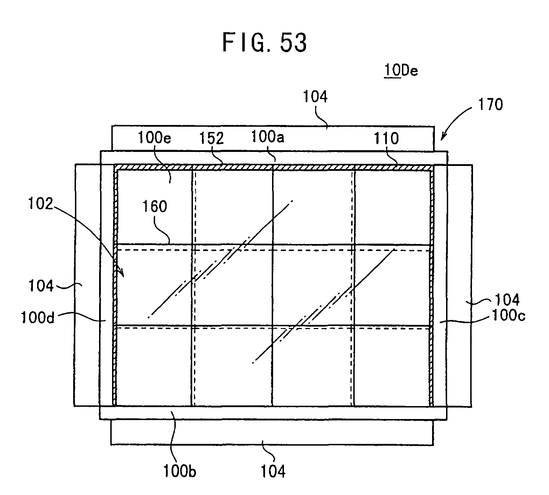

As shown in FIGS. 52 and 53, a display device 10De according to a sixteenth modified embodiment is constructed in approximately the same manner as the display device 10Dd according to the fifteenth modified embodiment described above. However, the former is different from the latter in that the front panel 100e and the back panel 100f for constructing the vessel 170 are respectively constructed by arranging a plurality of divided optical guide plates 160 and a plurality of divided plates 180 in a matrix configuration, and end surfaces of the respective divided optical guide plates 160 and end surfaces of the respective divided plates 180 are secured to one another, for example, with an adhesive of the completely solidifying type.

Therefore, when the display device 10De according to the sixteenth modified embodiment is produced, the process includes a step of producing the front panel 100e and the back panel 100f, followed by the same steps as those of the method for producing the display device 10Dd according to the fifteenth modified embodiment described above.

In the display device 10De according to the sixteenth modified embodiment, the same effect as that of the display device 10Dd according to the fifteenth modified embodiment described above is obtained. However, the front panel 100e is constructed by arranging the plurality of divided optical guide plates 160. Therefore, the divided optical guide plate 160 to be used can be compact and inexpensive. Further, it is possible to use the divided optical guide plate 160 having a good quality involving few defects such as bubbles and foreign matters at the inside. The display device 10De can be also assembled at a working site.

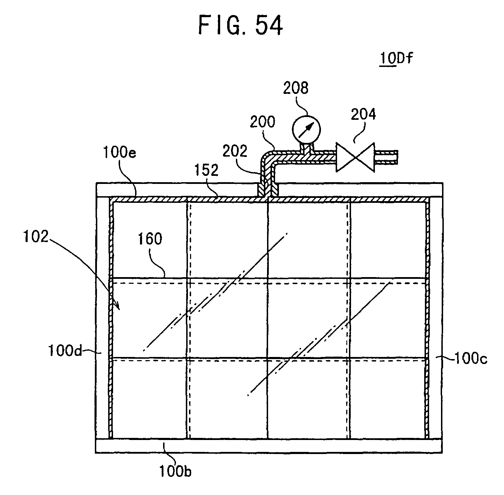

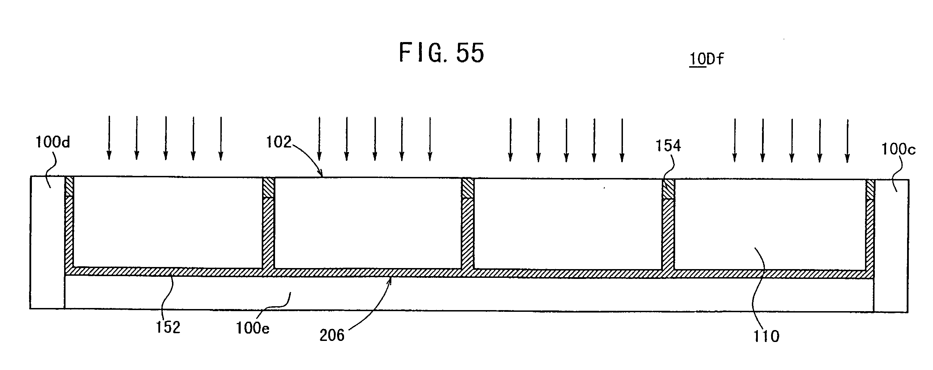

Concerning the display device 10C according to the third embodiment or the display device 10Dd according to the fifteenth modified embodiment described above, it is also possible to realize a modified embodiment (display device 10Df according to a seventeenth embodiment) as shown in FIGS. 54 and 55.

That is, as shown in FIGS. 54 and 55, for example, the display device 10Df according to the seventeenth modified embodiment is provided with a through-hole 202 to be connected to a conduit 200 at a predetermined position of the upper plate 100a (or optionally the side plates 100c, 100d or the lower plate 100b). The through-hole 202 is formed at the position which faces the space between the display surface of the main display device body 102 and the front panel 100e. The conduit 200 is connected to the through-hole 202. An unillustrated vacuum pump is connected to the conduit 200 via a valve 204.

The space between the display surface of the main display device body 102 and the front panel 100e is filled with the substance 152, and the substance 152 is sealed, for example, with a seal member 154. After that, the vacuum pump is operated to reduce the pressure in the region (region 206 charged with the substance 152) between the display surface of the main display device body 102 and the front panel 100e to be lower than the atmospheric pressure. Subsequently, the valve 204 is closed to maintain the reduced pressure state. At this stage, the vacuum pump can be separated off.

By doing so, as shown in FIG. 55, the pressure of the region 206 charged with the substance 152 is lower than the surrounding pressure (atmospheric pressure). Therefore, the display block 110 is pressed toward the front panel 100e owing to the difference in pressure. In other words, the fixation of the display block 110, which is otherwise effected by only the strength of the seal member 154 or the like, can be supplemented by the difference in pressure. Thus, it is possible to improve the assembling performance and the rigidity. In this arrangement, the deterioration state of the seal member 154 can be recognized by managing the pressure of the region 208 charged with the substance 152 by using a pressure gauge 208 (see FIG. 54). Therefore, this arrangement is preferably adopted.

As having been explained above, in order to eliminate the sense of congruity of the image at the juncture portion between the divided optical guide plates 112 in the display device 10D according to the fourth embodiment and the display devices 10Da to 10Df according to the various modified embodiments described above, it is preferable to control the difference in refractive index between the divided optical guide plate 112 and the substance 152 and the thickness t of the divided optical guide plate 112 so that the relationship as shown in FIG. 38 is satisfied.

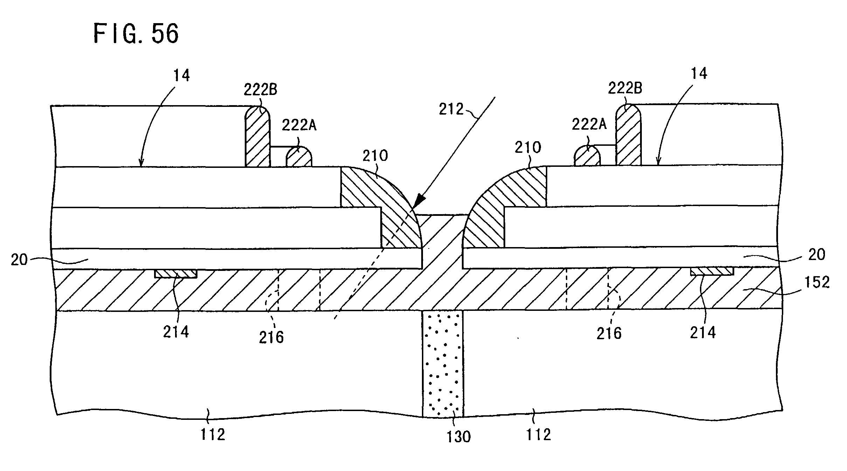

In the respective display devices described above, a light-absorbing member 210 may be provided at a circumferential portion of the display component 14 as shown in FIG. 56 before sticking the display component 14 to the divided optical guide plate 112. Accordingly, it is possible to reduce the leakage light 212 coming into the divided optical guide plate from the back of the display component 14 via the juncture of the display component 14. Thus, it is possible to reduce the sense of incongruity at the juncture, and it is possible to improve the contrast.

In this arrangement, when the light-absorbing member 210 also serves as an enclosing member for enclosing or sealing the circumferential portion of the display component 14, it is possible to avoid any invasion of the substance 152 such as the adhesive and the matching oil existing between the divided optical guide plate 112 and the display component 14 into the display component 14. Thus, it is possible to avoid the deterioration of the image quality.

Those usable as the light-absorbing member 210 which also serves as the enclosing member include, for example, a mixture of epoxy adhesive, fine powder of silica, and black pigment or black dye. Among them, the epoxy adhesive has a function to improve the tight contact performance of the light-absorbing member 210 with respect to the display component 14 (tight contact performance). The fine powder of silica has a function to maintain the shape of the light-absorbing member 210 (non-fluidity). The black pigment or the black dye has a function to absorb the leakage light (light-absorbing performance). The fine powder of silica preferably has a size of 0.1 to 10 μm, and more preferably 1 to 5 μm.

The composition of the light-absorbing member 210, which is represented by the ratio among the epoxy adhesive, the fine powder of silica, and the black pigment or the black dye, is preferably, for example, 1: 0.5 to 2: 0.005 to 0.1, and more preferably 1: 1.4 to 1.8: 0.01 to 0.05. Other then the epoxy adhesive, it is possible to use those based on silicone, modified silicone, polysulfide, polyurethane, acrylic, epoxy, SBR, and butyl rubber. Other than the fine powder of silica, it is possible to use, for example, fine powder of resin, fine powder of ceramics, and fine powder of carbon.

In order to provide the property to repel the substance 152 such as the matching oil and the property to cause no deterioration by the substance 152 such as the matching oil, it is preferable that the surface of the light-absorbing member 210 is coated with an oil-repelling agent such as those based on silicone and fluorine.

Those preferably used as the method for forming the light-absorbing member 210 include, for example, the printing method, the dispenser, and the stamping.

In the respective display devices described above, it is preferable that a light-absorbing layer 214 is stuck to a portion corresponding to a bright defect as shown in FIG. 56 before sticking the display component 14 to the divided optical guide plate 210. The bright defect resides in a bright portion which is recognized as a white dot, for example, when the black color is displayed or when a dark background is displayed. Accordingly, the light spot caused by the bright defect is absorbed by the light-absorbing layer 214, and it is inconspicuous from the display surface.

The bright defect includes, for example, those based on the fact that the upper surface of the picture element assembly 30 is always contacts with the optical waveguide plate 20, for example, while the displacement driving of the actuator element 22 does not function, those based on the defect existing in the optical waveguide plate 20 as one of the constitutive members for the display component 14 or the defect existing in the divided optical guide plate 112, and those based on any foreign matter with which the substance 152 such as the matching oil is contaminated.

When the light-absorbing layer 214 is stuck to the portion of the bright defect, for example, the display surface side of the display component 14 is visually observed with a microscope or measured with a luminance meter while driving the display component 14, and the position of the bright defect is detected on the basis of the information obtained by the visual observation or the information on the luminance or brightness. The light-absorbing layer 214 is stuck to a portion corresponding to the position of the detected bright defect, of the surface of the optical waveguide plate 20 of the display component 14, for example, by using a sticking apparatus. Of course, the light-absorbing layer 214 may be manually stuck while performing the visual observation with the microscope or performing the measurement with the luminance meter.

In the embodiment described above, the light-absorbing layer 214 is stuck to the optical waveguide plate 20 of the display component 14. Alternatively, the light-absorbing layer 214 may be stuck to the surface of the divided optical guide plate 112 opposed to the display component 14.

The bright defect, which is based on the defect of the divided optical guide plate 112, can be hidden by sticking the light-absorbing layer 214 to the surface (display surface) of the divided optical guide plate 112.

It is preferable that the material for the light-absorbing layer 214 described above involves less scattering of light, and the material is not deteriorated by the substance 152 such as the adhesive and the matching oil. For example, it is possible to use a resin or the like containing black pigment or black dye and a metal film. In this case, it is preferable that the wettability with respect to the base material (optical waveguide plate 20 and the divided optical guide plate 112) is satisfactory, and the adhering performance is good.

The thickness of the light-absorbing layer 214 is desirably 0.1 to 100 μm, and preferably 1 to 50 μm. Those usable as the method for sticking the light-absorbing layer 214 include, for example, the printing method, the dispenser, the stamping, and the photolithography.

Next, explanation will be made for preferred exemplary arrangements of the display component 14. At first, a first exemplary arrangement is shown in FIGS. 56 to 57C. That is, protruding sections 216 are provided on the surface opposed to the large optical guide plate 140, of the optical waveguide plate 20 as one of the constitutive members of the display component 14.

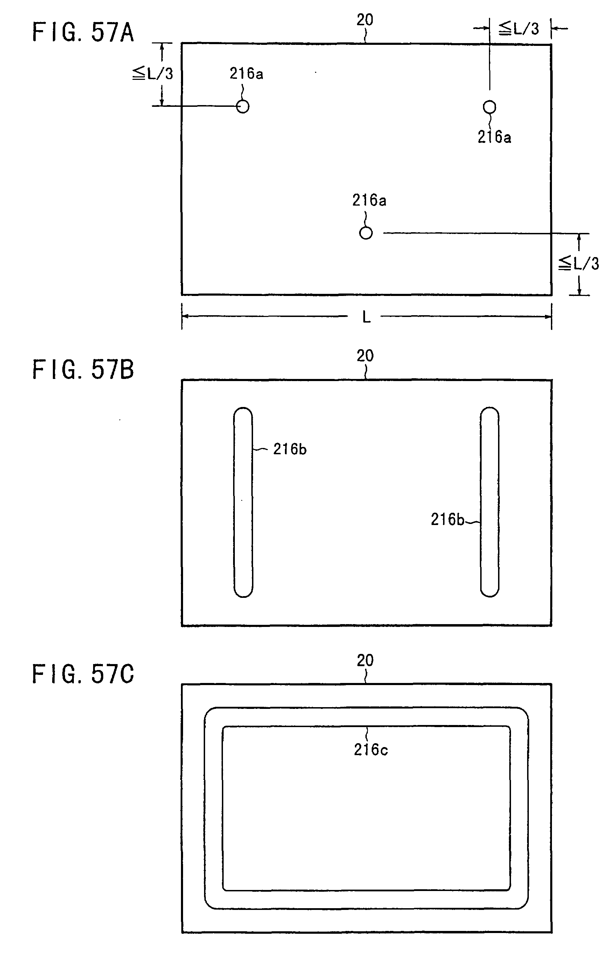

The arrangement of the protruding section 216 includes, for example, projections 216a as shown in FIG. 57A, protruding sections 216b extending in a band-shaped configuration as shown in FIG. 57B, and a frame-shaped protruding section 216c as shown in FIG. 57C.

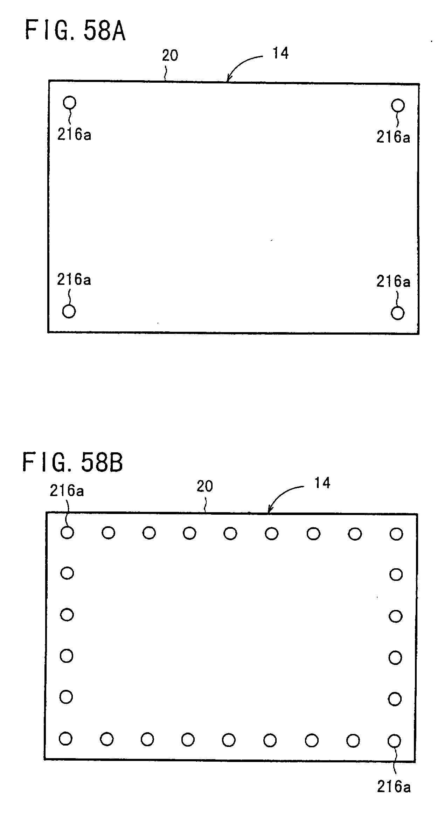

When the projection 216a is provided as the protruding section 216, it is preferable that three or more projections 216a are provided as shown in FIG. 57A. Specifically, for example, as shown in FIG. 58A, there are a method in which four projections 216a are provided corresponding to four corners of the optical waveguide plate 20 of the display component 14 respectively as shown in FIG. 58A, and a method in which a large number of projections 216a are formed along the sides of the optical waveguide plate 20 as shown in FIG. 58B.

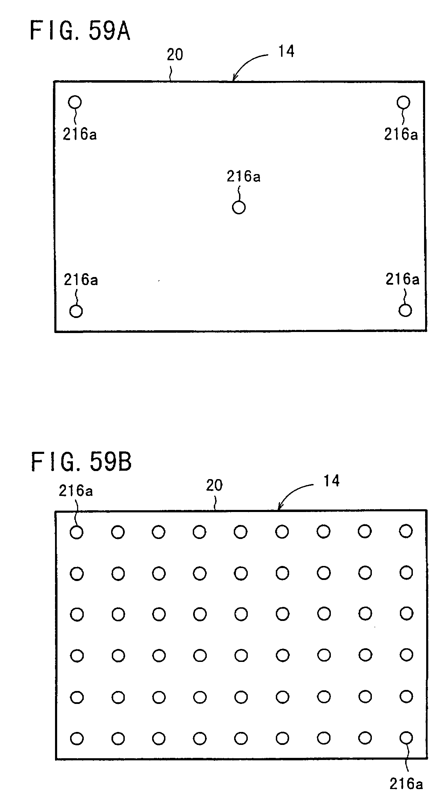

Other methods are available, including, for example, a method in which four projections 216a are provided corresponding to four corners of the optical waveguide plate 20 and another projection 216a is provided at the center of the optical waveguide plate 20 as shown in FIG. 59A, and a method in which a large number of projections 216a are provided in a matrix form as shown in FIG. 59B. When the number of the projections 216a is decreased, then the fluidity of the substance 130 such as the matching oil is improved, and it is possible to undergo little influence of local irregularities of the large optical guide plate 140 and foreign matters with which the substance 130 such as the matching oil is contaminated. When the number of the projections 216a is increased, it is possible to disperse the stress received due to the deformation of the large optical guide plate 140.

When the protruding section 216b, which extends in the band-shaped configuration, is provided as the protruding section 216, it is also allowable to provide one protruding section 216b. However, it is preferable that two or more protruding sections 216b are provided with a spacing distance intervening therebetween to a certain extent as shown in FIG. 57B.

Next, a second exemplary arrangement will be explained. Although not shown, three or more of the protruding sections 216 are provided in a comparted area corresponding to one display component 14 on the surface of the large optical guide plate 140 opposed to the display component 14.

In the exemplary arrangements described above, especially when the projections 216a are provided as the protruding sections 216, the following arrangement is preferably adopted as shown in FIG. 57A. That is, assuming that L represents the length of the long side of the display component 14, the three or more projections 216a are provided at positions each corresponding to a distance of not more than L/3 from the closest side of the respective sides of the display component 14.

More preferably, it is desirable that the projections 216a are provided at positions corresponding to the positions of formation of the crosspieces 42 (see FIG. 1) provided in the display component 14, because of the following reason. That is, in this arrangement, as described later on, even when the pressing force is applied to the projection 216a due to the deformation of the large optical guide plate 140, the force is supported by the crosspiece 42. Therefore, the optical waveguide plate 20 is not deformed. Further, there is no fear of partial scattering of the light emitted from the picture element, by the projection 216a.

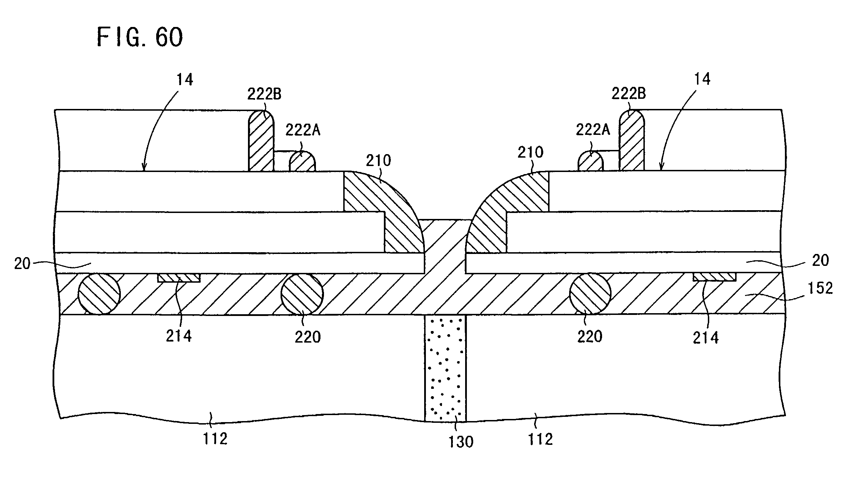

Next, a third exemplary arrangement is shown in FIG. 60, in which beads 220 are mixed in the substance 152 such as the matching oil existing between the divided optical guide plate 112 and the display component 14. The shape of the bead 220 is not specifically limited, but the shape may include, for example, spherical, columnar, and prism-shaped configurations. However, it is preferable to use those having spherical or columnar configurations. It is preferable that the specific gravity of the bead 220 is equivalent to that of the substance 152 such as the matching oil.

In the respective display devices described above, any warpage occasionally occurs in the divided optical guide plate 112 due to the heat generated by the absorption of the light 18 from the light source 16 by the black matrix or the like and the driving of the display component 14. In this situation, any difference arises between the circumferential portion and the central portion of the display component 14, in the internal pressure exerted on the substance 152 such as the matching oil existing between the display component 14 and the divided optical guide plate 112.

For this reason, it is feared that a phenomenon occurs such that any bubble invades, from the outside, the portion at which the pressure is small, of the substance 152 such as the matching oil existing between the display component 14 and the divided optical guide plate 112. If the bubble invades the space between the display component 14 and the divided optical guide plate 112, the light, which passes from the display component 14 through the substance 152 such as the matching oil, hits the bubble. As a result, the light is scattered or refracted, resulting in the occurrence of the black dot defect and the so-called crosstalk in which the light emission is recognized as caused, for example, by any adjoining picture element not by the rightful picture element.

However, in the embodiment of the present invention, the protruding sections 216 are formed for the optical waveguide plate 20 or the large optical guide plate 140, or the beads 220 are mixed in the substance 152 such as the matching oil. Accordingly, the gap is generated between the display component 14 and the divided optical guide plate 112. Therefore, the fluidity is improved for the substance 152 such as the matching oil existing between the display component 14 and the divided optical guide plate 112. As a result, even when the difference in pressure occurs at the inside of the substance 152 such as the matching oil, for example, due to the deformation of the divided optical guide plate 112 during the driving of the display device, the substance 152 such as the matching oil flows to mitigate the difference in pressure. The invasion of the bubble into the substance 152 such as the matching oil is not caused.

Further, the display component 14 is easily detached, because of the good fluidity of the substance 152 such as the matching oil. Thus, it is easy to repair the display component 14.

It is preferable that the protruding section 216 and the bead 220 have a good light transmitting property at a wavelength in the visible light region, and they have a refractive index approximately equivalent to that of the substance 152 such as the matching oil. The height is preferably several μm to 1 mm, and more preferably 20 μm to 500 μm.

The material for these components may be either an inorganic material or an organic material. For example, it is possible to use a simple substance, a combined material, or a mixture composed of, for example, glass, quartz, light-transmitting alumina, acrylic resin, epoxy resin, silicone resin, methacrylic resin, polycarbonate, vinyl chloride resin, phenol resin, vinyl acetate resin, ABS, fluororesin, and unsaturated polyester resin. The material is exemplified by those which are not swelled by the substance 152 such as the matching oil.

The materials may be bonded and fixed. Alternatively, the protruding section 216 may be formed by curing after applying a precursor in a form of liquid. In the case of the latter, in order to maintain the shape (height) and the tight contact performance with respect to the base material (optical guide plate 20 and the divided optical guide plate 112), the precursor for the protruding section 216 preferably has the thixotropy.

When the protruding section 216 is constructed by a member having a light-absorbing property, it has a function to serve as a black matrix, in which it is possible to improve the contrast.

The following method is available to form the protruding section 216. That is, the precursor for the protruding section 216 is formed by means of the printing method, the dispenser, or the stamping, and then the precursor is cured to successfully form the protruding section 216.

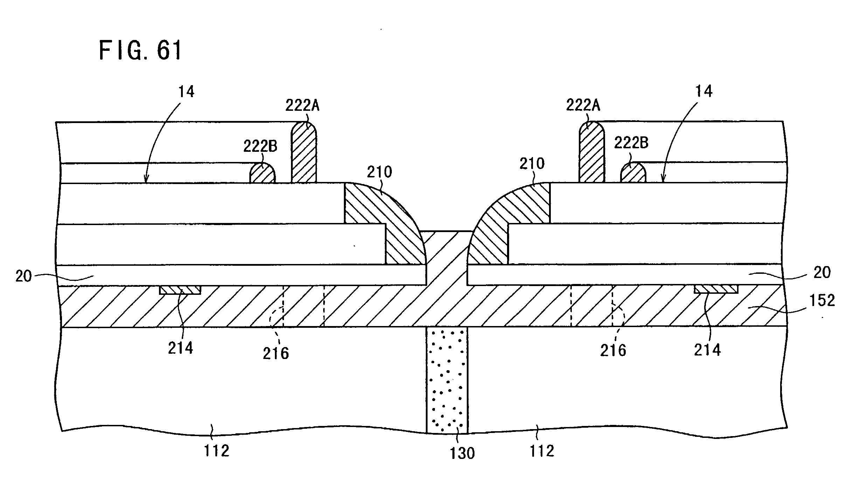

Next, in a fourth exemplary arrangement, dams 222A, 222B are provided on the back surfaces of the respective display components 14 in order to avoid such a situation that the substance 152 such as the matching oil and the adhesive existing between the divided optical guide plate 112 and the display component 14 is moved in a roundabout way to the back surface side of the display component 14. The dams 222A, 222B are formed on the circumferential portion of the back surface of the display component 14 along the circumferential edge of the display component 14. Especially, examples shown in FIGS. 56, 60, and 61 are illustrative of the case in which the double dams 222A, 222B are provided. As for the heights of the dams 222A, 222B, the outer dam 222A may be low, and the inner dam 222B may be high as shown in FIGS. 56 and 60. On the contrary, as shown in FIG. 61, the outer dam 222A may be high, and the inner dam 222B may be low.

In order to effectively avoid the roundabout movement of the substance 152 such as the matching oil, it is preferable that the plurality of dams 222A, 222B are provided. However, when the plurality of dams 222A, 222B are provided, for example, when a sealing structure as shown in FIG. 61a is adopted as described later on, if a second seal member 226 enters the space between the first dam 222A and the second dam 222B, then any bubble tends to remain at that portion. Especially, when the bubble is moved to the surface of the optical waveguide plate 20, it is feared that the image quality is deteriorated. Therefore, in order to easily remove the bubble, it is importance to provide the difference between the respective heights of the plurality of dams 222A, 222B, for example, as shown in FIGS. 56 and 61.

As described above, when the dams 222A, 222B are provided, the substance 130 such as the matching oil and the adhesive, which inhibits the sealing performance of the second seal member 226, is prevented from being moved in the roundabout way to the back surface side of the display component 14. It is possible to ensure the sealing performance of the display component 14. Further, it is possible to protect IC or the like mounted on the back surface of the display component 14 from immersion in the substance 130 such as the matching oil. Further, the display component 14 is easily detached by picking up the dams 222A, 222B. Thus, it is easy to perform the repair.

The material for the dams 222A, 222B includes those which are based on, for example, silicone or epoxy resin and which are not swelled by the substance 152 such as the matching oil. It is preferable to use those which have no fluidity, because it is necessary to form the high shape.

Those preferably used for the method for forming the dams 222A, 222B include, for example, the dispenser and the stamping. Alternatively, the dams 222A, 222B may be constructed by bonding and fixing wall-shaped structural members.

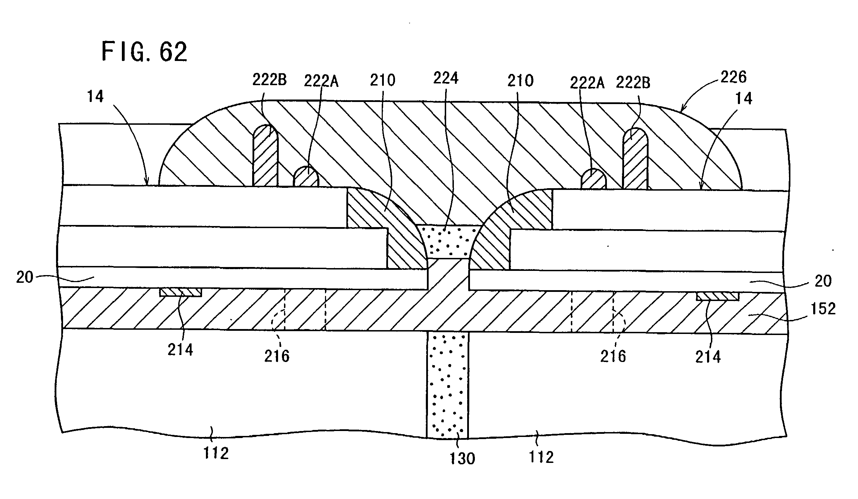

When the space between the display components is actually sealed, for example, the following procedure is adopted as shown in FIG. 62. That is, a first seal member 224 is provided between the light-absorbing members 210 provided at the circumferential portions of the respective display components 14 to seal the space between the display components 14. Further, the second seal member 226 is provided at circumferential portions of the display components 14 including the first seal member 224 (portions including the dams 222A, 222B in the example shown in FIG. 62) to doubly seal the space between the display components 14.

In order to suppress the mixing with the substance 152 such as the matching oil to be minimum, the first seal member 224 is preferably made of a material which is lighter in specific gravity than the substance 152 such as the matching oil and which has a relatively fast curing speed when irradiated with ultraviolet light or visible light. Further, in order that the material is inconspicuous even when the substance 152 such as the matching oil is mixed therewith, it is preferable to use the material which is transparent and which has a refractive index equivalent to that of the substance 152 such as the matching oil.

On the other hand, as for the second seal member 226, the seepage of the substance 152 such as the matching oil is avoided by the first seal member 224. Therefore, it is possible to select a material which can be applied to cover portions up to a part of the back surface of the display component 14 and which is excellent in tight contact performance and mechanical strength, irrelevant to the feature of the optical characteristics.

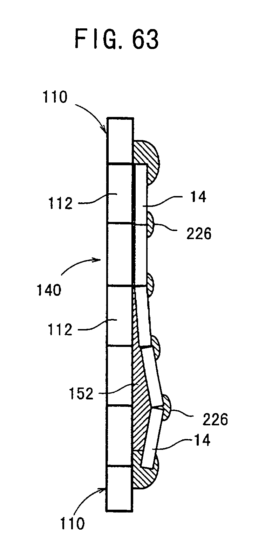

As shown in FIG. 63, when the display device 10 comprising a large number of the arranged display blocks 110 is installed in vertical placement, the substance 152 such as the matching oil existing between the divided optical guide plate 112 and the display component 14 is lowered by its self-weight. Any expansion, which is caused by the substance 152 such as the matching oil, appears at a lower portion of the large optical guide plate 140 constructed by arranging a large number of the divided optical guide plates 112. In this situation, it is feared that the internal pressure is lowered at an upper portion of the large optical guide plate 140, and the air makes invasion from any portion at which the sealing is weak.

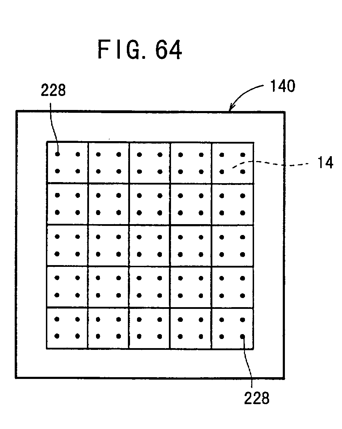

Accordingly, it is preferable to adopt first and second countermeasure arrangements as shown in FIGS. 64 to 65B. In the first countermeasure arrangement, as shown in FIG. 63, the respective display components 14 are fixed with the adhesive to the large optical guide plate 140 to such an extent that the repair performance is not affected thereby. For example, one display component 14 is fixed with the adhesive while setting about four bonding points 228. Accordingly, it is possible to mitigate the expansion caused by the substance 152 such as the matching oil at the lower portion of the large optical guide plate 140.

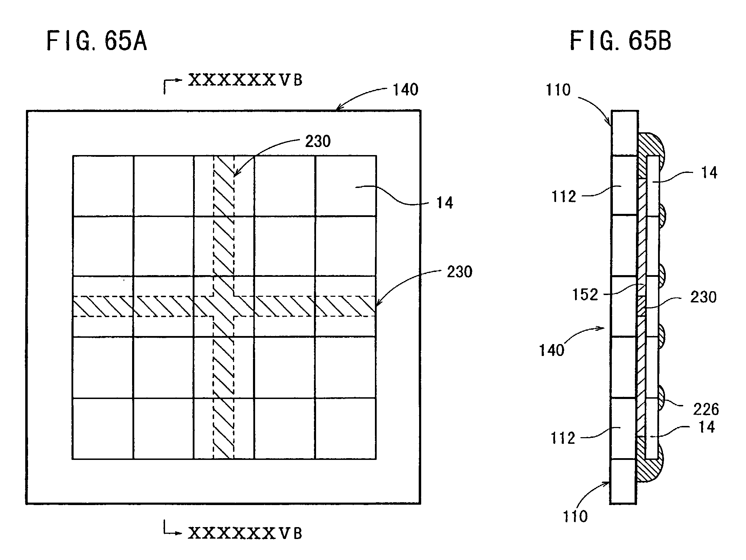

In the second countermeasure arrangement, as shown in FIGS. 65A and 65B, the area between the large optical guide plate 140 and the display components 14, in which the substance 152 such as the matching oil exists, is separated into a plurality of individuals by using an adhesive layer 230. The example shown in FIGS. 65A and 65B is illustrative of the case in which the area, in which the substance 152 such as the matching oil exists, is divided into four by providing the adhesive layer 230 in a cross-shaped configuration. The repair performance can be sufficiently ensured by decreasing the application area of the adhesive layer 230. Further, it is possible to mitigate the expansion caused by the substance 152 such as the matching oil at the lower portion of the large optical guide plate 140.

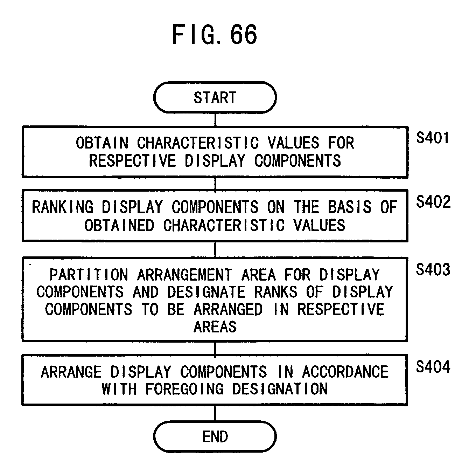

It is now assumed that the respective display devices described above are correctively referred to as the display device 10. When the display device 10 is constructed by arranging a large number of the display components 14, it is preferable to make arrangement with certain regularity. The method for determining the arrangement will be explained with reference to FIGS. 66 to 70B.

In this arrangement determination method, as shown in FIG. 66, at first, in the step S1, characteristic values are obtained for the respective display components 14 respectively. The characteristic value includes, for example, an average luminance of a plurality of dots 26 for constructing the display component 14, and a number of deficiencies of dots 26. For example, the luminance is measured for several dots 26 in the display component 14 to obtain an average value. The average value is regarded as the average luminance.

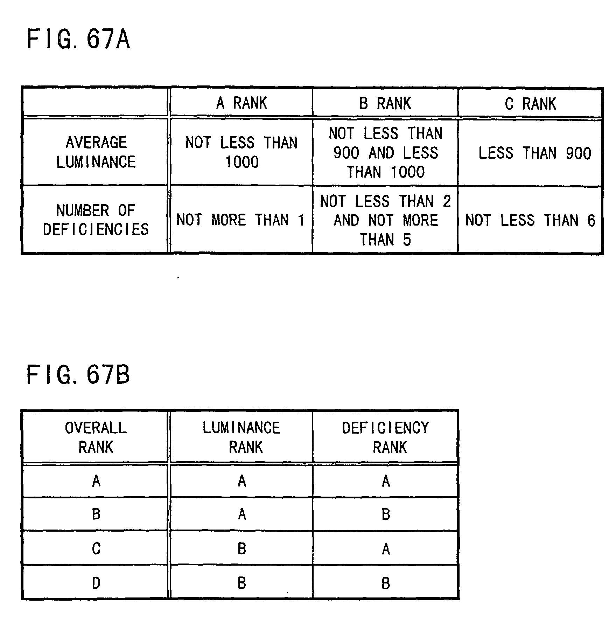

After that, in the step S2, the display components 14 are ranked on the basis of the obtained characteristic values. The ranking is performed, for example, as shown in FIG. 67A. That is, those having the average luminance of not less than 1000 and the number of deficiencies of not more than 1 belong to the A rank. Those having the average luminance of not less than 900 and less than 1000 and the number of deficiencies of not less than 2 and not more than 5 belong to the B rank. Those having the average luminance of less than 900 and the number of deficiencies of not less than 6 belong to the C rank.

Further, the display components 14 are ranked on the basis of the obtained ranks (individual ranks) into those belonging the overall ranks which are determined while giving the priority to the average luminance. For example, as shown in FIG. 67B, those selected for the overall rank A are those in which the rank based on the average luminance is the A rank and the rank based on the number of deficiencies is the A rank. Those selected for the overall rank B are those in which the rank based on the average luminance is the A rank and the rank based on the number of deficiencies is the B rank. Similarly, those selected for the overall rank C are those in which the rank based on the average luminance is the B rank and the rank based on the number of deficiencies is the A rank. Those selected for the overall rank D are those in which the rank based on the average luminance is the B rank and the rank based on the number of deficiencies is the B rank.

After that, in the step S3 shown in FIG. 66, the arrangement area for the plurality of display components 14 on the display device 10 is partitioned to designate the ranks of the display components 14 to be arranged in the respective areas. Subsequently, in the step S4, the display components 14 are arranged in accordance with the designation to manufacture the display device 10.

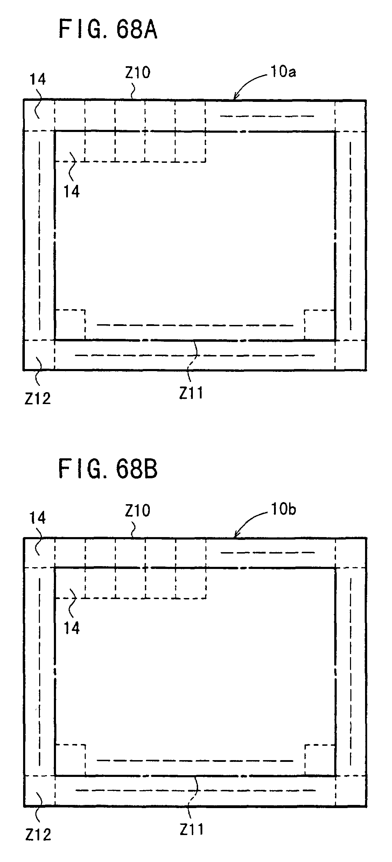

For example, as shown in FIGS. 68A and 68B, the arrangement area Z10 for the display components 14 on the display device 10 (10a and 10b) is partitioned into a central portion Z11 and a peripheral portion Z12. The display components 14, which have the high rank based on the number of deficiencies, are arranged in the central portion Z11. The display components 14, which have the low rank based on the number of deficiencies, are arranged in the peripheral portion Z12.

For example, as for the first display device 10a, the display components 14, which have the overall rank A, are arranged in the central portion Z11, and the display components 14, which have the overall rank B, are arranged in the peripheral portion Z12. As for the second display device 10b, the display components 14, which have the overall rank C, are arranged in the central portion Z11, and the display components 14, which have the overall rank D, are arranged in the peripheral portion Z12.

The first display device 10a is standardized with the display components 14 which have the rank based on the average luminance of the A rank. The second display device 10B is standardized with the display components 14 which have the rank based on the average luminance of the B rank. Therefore, the dispersion of the luminance distribution is suppressed in each of the display devices 10a, 10b. It is possible to improve the image quality, and the juncture between the display components 14 is inconspicuous.

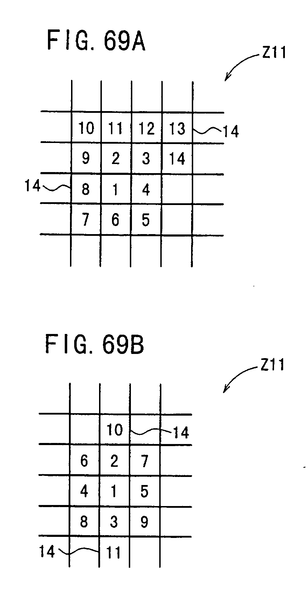

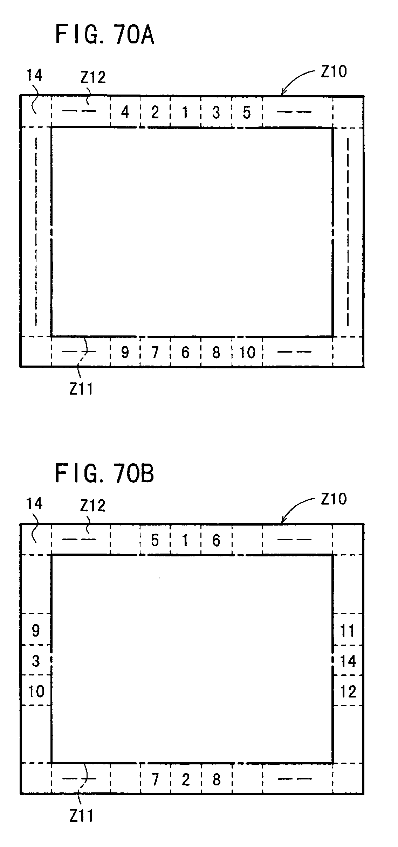

When the display components 14 are arranged, for example, in the central portion Z11, it is preferable that the display components 14 are arranged from the center in a spiral configuration, for example, as shown in FIG. 69A, or the display components 14 are arranged in a order to follow a cross-shaped configuration as shown in FIG. 69B. In FIGS. 69A and 69B, the consecutive numbers are numbers which are ordered on the basis of the overall rank, and they are numbers which indicate the order of the arrangement of the display components 14. On the other hand, when the display components 14 are arranged in the peripheral portion Z12, it is preferable that a method is adopted in which the display components 14 are aligned in an order starting from one side as shown in FIG. 70A, or the display components 14 are arranged in a cross-like order as shown in FIG. 70B.

As described above, when the ranked display components 14 are arranged in the designated area, the display components 14, which are ordered in the identical rank, are arranged in accordance with the predetermined rule. Accordingly, it is possible to obtain a smooth luminance distribution when the display device 10 is viewed as a whole.

Especially, the technique is adopted, in which the arrangement area Z10 for the display components 14 are partitioned into the central portion Z11 and the peripheral portion Z12, the display components 14 having the high rank are arranged in the central portion Z11, and the display components 14 having the low rank are arranged in the peripheral portion Z12. This technique utilizes such a characteristic that it is difficult for human eyes to perceive the fact even when the periphery is dark. This technique is effective to exclude the sense of incongruity for human eyes.

The characteristic value described above is not limited to the average luminance and the number of deficiencies, for which it is also possible to utilize, for example, the dispersion of the luminances or the like of the dots in the display component 14. As for the area partition, a variety of ways of partition may be available, other than the partition into the two of the central portion Z11 and the peripheral portion Z12.

Each of the display devices 10 described above is a display based on the so-called divided panel system in which a large number of display components 14 are arranged. Therefore, it is possible to realize the following illustrative arrangements and forms of use.

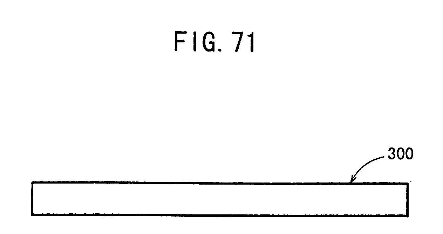

At first, as shown in FIG. 71, a first illustrative arrangement resides in a case in which a display 300 which is slender in the lateral direction or the longitudinal direction is provided. A form of use based on the display 300 is such that the display 300 is installed, for example, on a wall of a passage, and a sensor for sensing a passing person is also installed.

A person passing beside the display 300 is sensed by the sensor. A message such as an advertisement is scroll-displayed in conformity with the advancing direction of the person. Accordingly, a form is realized, in which the message displayed on the display 300 follows in conformity with the advance of the person.

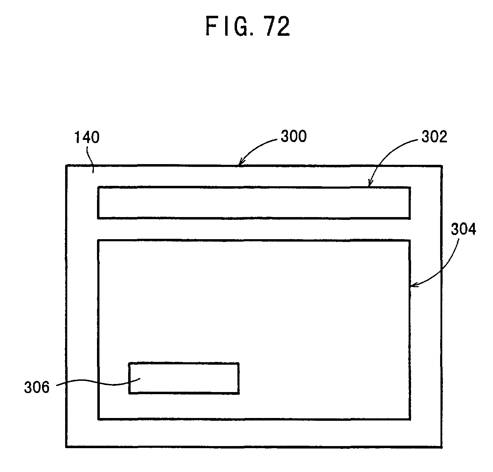

As shown in FIG. 72, a second illustrative arrangement resides in a case in which a large number of display components 14 are stuck, in a variety of combinations, to a large-sized optical waveguide plate 140. The case shown in FIG. 72 is illustrative of an example in which a laterally long display block 302 constructed by combining a large number of display components 14, and a display block 304, for example, of a wide type of 16:9 obtained by combining a large number of display components 14 are stuck to a large-sized optical waveguide plate 140. A small-sized laterally long display block 306, which is constructed by combining several tens of displays, may be fitted to an arbitrary position of the wide type display block 304.

The laterally long display block 302 and the small-sized laterally long display block 306 are used, for example, as message display areas of single color (for example, white color). The wide type display block 304 is used, for example, as a high definition color animation image display area.

In this case, in the laterally long display block 302 and the small-sized laterally long display block 306, it is possible to obtain a high luminance even when the row scanning is performed, because the white picture element has a high light emission efficiency. Therefore, it is enough to incorporate the driver IC's of 1/(number of row scanning). As for the interface, RS-422 or 485 or LAN may be used to display a still image based on JPEG. When the high definition is unnecessary, the picture element size may be increased.

On the other hand, the wide type display block 304 displays the high definition animation image. Therefore, as for the interface, those corresponding to the video signal and the RGB signal can be used. Further, an animation image based on MPEG may be displayed by means of LAN.

In place of the small-sized laterally long display block 306, a simple display board (for example, a board on which a logotype of an advertisement owner is displayed) may be stuck.

Conventionally, in order to obtain a message display area and an animation image area with one large screen display, it is necessary to combine three of an LED display for displaying letters, a high definition PDP for color animation image, and a fixed message advertisement board. However, in the second illustrative arrangement described above, it is possible to easily manufacture the display which simultaneously has both of the message display area and the animation image area by combining the large number of display components 14 in various forms.

In the display of the so-called divided panel system constructed by sticking the large number of display components 14 to the large-sized optical guide plate 140 as in the display device 10 according to the embodiment of the present invention, it is possible to freely design the number, the amount, and the sticking positions of the display components 14 stuck to the large-sized optical guide plate 140. Therefore, for example, the size of the display, the aspect ratio, and the shape can be freely designed.

The embodiment described above is illustrative of the case in which the large optical guide plate 140 having the flat principle surface is used as the large-sized optical waveguide plate 140, for example, as shown in FIG. 24. Alternatively, an optical waveguide plate, in which the principle surface has a curved surface, may be used.

When such an optical waveguide plate is used, it is possible to respond to the shape standard for the display principally based on the curved surface or the installation space. For example, the curved surface is required for a large screen display for displaying celestial bodies in the planetarium. It is also possible to respond to such a display. In this case, it is necessary to control the angle of incidence so that the light incoming from the end surface of the optical guide plate does not leak from the principal surface having the curved surface configuration.

It is a matter of course that the display device and the method for producing the same according to the present invention are not limited to the embodiments described above, which may be embodied in other various forms without deviating from the gist or essential characteristics of the present invention.

**Claims**

1. A display device comprising two or more arranged display blocks, wherein:

   a substance having a light-transmitting property adjusted for its refractive index exists at least at end surface portions of said respective display blocks.

2. The display device according to claim 1, wherein said display block itself is used as an optical waveguide plate, and said display block serves as a constitutive component of a display component.

3. The display device according to claim 1, wherein said display block is an optical guide plate for introducing light from a light source thereinto with its first principal surface on which display components are fixed.

4. The display device according to claim 1, wherein said display block includes an optical guide plate for introducing light from a light source thereinto, and one or more display components fixed to a first principal surface of said optical guide plate.

5. The display device according to claim 3 or 4, wherein said display component is secured to said optical guide plate with an adhesive.

6. The display device according to any one of claims 1 to 5, wherein said substance having said light-transmitting property adjusted for its refractive index is at least an adhesive.

7. The display device according to any one of claims 1 to 5, wherein said substance having said light-transmitting property adjusted for its refractive index is at least matching oil.

8. The display device according to any one of claims 1 to 7, wherein:

   when said plurality of display blocks are arranged in a matrix configuration; vertically ruled and/or horizontally ruled support members are allowed to intervene between at least two of said display blocks.

9. The display device according to claim 8, wherein said support members are formed to have a lattice-shaped configuration.

10. The display device according to any one of claims 1 to 9, further comprising:

    another optical guide plate arranged for a display surface formed by arranging first principal surfaces of said plurality of display blocks, wherein:

       a substance having a light-transmitting property adjusted for its refractive index is allowed to exist between said display surface and said another optical guide plate.

11. The display device according to claim 10, wherein said substance having said light-transmitting property adjusted for its refractive index is matching oil.

12. The display device according to claim 11, wherein a seal member is allowed to intervene between said matching oil and atmospheric air.

13. The display device according to any one of claims 10 to 12, wherein said another optical guide plate is constructed such that a plurality of divided optical guide plates are arranged in a matrix configuration, and said divided optical guide plates are secured to one another with an adhesive having a light-transmitting property adjusted for its refractive index.

14. The display device according to any one of claims 1 to 9, wherein:

    a main display device body, which is constructed by arranging said plurality of display blocks, is accommodated in a vessel with its at least one surface having transparency; and a substance having a light-transmitting property adjusted for its refractive index is allowed to exist at least between a display surface formed by arranging first principal surfaces of said plurality of display blocks and said surface of said vessel having said transparency.

15. The display device according to claim 14, wherein said vessel is filled therein with said substance having said light-transmitting property adjusted for its refractive index.

16. The display device according to claim 14, wherein another substance, which is different from said substance having said light-transmitting property adjusted for its refractive index, exists between said vessel and a surface opposite to said display surface of said main display device body.

**17.** The display device according to any one of claims 14 to 16, wherein said substance having said light-transmitting property adjusted for its refractive index is matching oil.

**18.** The display device according to claim 16, wherein:

when said substance having said light-transmitting property adjusted for its refractive index is matching oil;
a seal member is allowed to intervene between said matching oil and said another substance.

**19.** The display device according to any one of claims 14 to 18, wherein said vessel has at least a plate member for constructing said surface of said vessel having said transparency, said plate member including a plurality of divided plates arranged in a matrix configuration and secured to one another with an adhesive having a light-transmitting property adjusted for its refractive index.

**20.** The display device according to any one of claims 2 to 19, wherein a light-absorbing member is provided at a circumferential portion of said display component.

**21.** The display device according to claim 20, wherein said light-absorbing member also serves as an enclosing member for enclosing said circumferential portion of said display component.

**22.** The display device according to any one of claims 1 to 21, wherein a light-absorbing layer is stuck to a portion corresponding to a bright defect of said display block.

**23.** The display device according to claim 22, wherein:

said display component is a display component comprising an optical waveguide plate for introducing light from a light source thereinto, and a driving section provided opposingly to a first plate surface of said optical waveguide plate and arranged with actuator elements of a number corresponding to a large number of picture elements, wherein a screen image corresponding to an image signal is displayed on said optical waveguide plate by controlling a displacement action of said actuator element in a direction to make contact or separation with respect to said optical waveguide plate in accordance with an attribute of said image signal to be inputted so that leakage light is controlled at a predetermined portion of said optical waveguide plate; and
said bright defect is based on the fact that said actuator element is always displaced in a direction to make contact with said optical waveguide plate.

**24.** The display device according to claim 22, wherein said bright defect is based on a defect existing in said optical waveguide plate which is one of constitutive members of said display component, or said bright defect is based on a defect existing in said optical guide plate for introducing said light from said light source thereinto.

**25.** The display device according to any one of claims 22 to 24, wherein said light-absorbing layer is stuck onto said optical waveguide plate of said display component.

**26.** The display device according to any one of claims 2 to 25, wherein a dam, which serves to prevent said substance having said light-transmitting property from being moved in a roundabout way to a back surface side of said display component, is provided on a back surface of said display component.

**27.** A method for producing a display device, comprising:

arranging two or more display blocks, wherein:

said display blocks are stacked to produce said display device while allowing a substance having a light-transmitting property adjusted for its refractive index to intervene at least at end surface portions of said respective display blocks.

**28.** The method for producing said display device according to claim 27, wherein:

when said display block is used as an optical waveguide plate, and said display block serves as a constitutive component of a display component;
said display component is constructed by using said display block; and then
said plurality of display components are arranged to produce said display device.

**29.** The method for producing said display device according to claim 27, wherein:

when said display block is an optical guide plate for introducing light from a light source thereinto with its first principal surface on which said display components are fixed;
a large optical guide plate is produced by arranging said plurality of optical guide plates; and
a plurality of units are secured to a first principal surface of said large optical guide plate to produce said display device, said unit including one or more display components.

30. The method for producing said display device according to claim 27, wherein:

when said display block includes an optical guide plate for introducing light from a light source thereinto, and one or more display components fixed to a first principal surface of said optical guide plate;
said plurality of display blocks are arranged to produce said display device.

31. The method for producing said display device according to any one of claims 28 to 30, wherein a surface of said optical guide plate or said display block to serve as said optical waveguide plate of said display component is coated with a hard coating material.

32. The method for producing said display device according to any one of claims 28 to 31, wherein an end surface of said optical guide plate or said display block to serve as said optical waveguide plate of said display component is mirror-finished so that Rmax is not more than 0.3.

33. The method for producing said display device according to any one of claims 28 to 32, wherein:

when said optical guide plate or said display block to serve as said optical waveguide plate of said display component is machined;
dimensional accuracy of said optical guide plate or said display block is not more than ±0.1 mm with respect to a reference dimension of 100 mm, perpendicularity between end surfaces and between said end surface and a flat surface is not more than 0.1 mm, and parallelism between said end surfaces and between said flat surfaces is not more than 0.1 mm.

34. The method for producing said display device according to any one of claims 27 to 33, wherein at least an adhesive is used as said substance having said light-transmitting property adjusted for its refractive index.

35. The method for producing said display device according to any one of claims 27 to 34, wherein at least matching oil is used as said substance having said light-transmitting property adjusted for its refractive index.

36. The method for producing said display device according to any one of claims 27 to 35, wherein:

before said plurality of display blocks are arranged in a matrix configuration;
vertically ruled and/or horizontally ruled support members are installed, and said support members are arranged so that said support member is interposed between at least two of said display blocks to produce said display device.

37. The method for producing said display device according to claim 36, wherein at least a surface of said support member, to which an end surface of said display block is opposed, is mirror-finished so that Rmax is not more than 0.3.

38. The method for producing said display device according to any one of claims 27 to 37, wherein:

another optical guide plate having a large size is prepared; and
a display surface of said display block is allowed to be opposed to a first principal surface of said another optical guide plate, and a substance having a light-transmitting property adjusted for its refractive index is allowed to intervene between said surfaces, while said display blocks are arranged along said first principal surface to produce said display device thereby.

39. The method for producing said display device according to claim 38, wherein said another optical guide plate having said large size is produced by arranging a plurality of divided optical guide plates in a matrix configuration, and securing said divided optical guide plates to one another with an adhesive having a light-transmitting property adjusted for its refractive index.

40. The method for producing said display device according to any one of claims 27 to 37, wherein:

a main display device body, which is constructed by arranging said plurality of display blocks, is accommodated in a vessel with at least one surface having transparency; and
said vessel is filled therein with a substance having a light-transmitting property adjusted for its refractive index to produce said display device.

41. The method for producing said display device according to any one of claims 27 to 37, wherein:

a display surface of said display block is allowed to be opposed to a first principal surface of a plate member having transparency, and a substance having a light-transmitting property adjusted for its refractive index is allowed to intervene between said surfaces, while said display blocks are arranged along said first principal surface;
a vessel including said plate member as one constitutive component is produced; and
said vessel is filled therein with said substance having said light-transmitting property adjusted for its refractive index to produce said display device.

**42.** The method for producing said display device according to any one of claims 27 to 37, wherein:

a display surface of said display block is allowed to be opposed to a first principal surface of a plate member having transparency, and a substance having a light-transmitting property adjusted for its refractive index is allowed to intervene between said surfaces, while said display blocks are arranged along said first principal surface;
a vessel including said plate member as one constitutive component is produced; and
said vessel is filled therein with another substance which is different from said substance having said light-transmitting property adjusted for its refractive index to produce said display device.

**43.** The method for producing said display device according to claim 41 or 42, wherein said plate member is produced by arranging a plurality of divided plates in a matrix configuration, and securing said divided plates to one another with an adhesive having a light-transmitting property adjusted for its refractive index.

**44.** The method for producing said display device according to any one of claims 28 to 43, further comprising a step of providing a light-absorbing member at a circumferential portion of said display component.

**45.** The method for producing said display device according to claim 44, wherein said light-absorbing member also serves as an enclosing member for enclosing said circumferential portion of said display component.

**46.** The method for producing said display device according to any one of claims 27 to 45, further comprising a step of sticking a light-absorbing layer to a portion corresponding to a bright defect of said display block.

# FIG. 1

EP 1 199 696 A1

# FIG. 2

FIG. 3

FIG. 4

FIG. 5A

48a —      48b

46

FIG. 5B

48a —      48b

46

## FIG. 6A

## FIG. 6B

FIG. 7

EP 1 199 696 A1

FIG. 8

EP 1 199 696 A1

# FIG. 9

EP 1 199 696 A1

# FIG. 10

EP 1 199 696 A1

FIG. 11

FIG. 12

FIG. 13

| OFFSET POTENTIAL | ON SIGNAL | OFF SIGNAL |
|---|---|---|
| | 60V | 0V |
| 50V | −10V (LIGHT EMISSION) | 50V (LIGHT OFF) |

FIG. 14

EP 1 199 696 A1

# FIG. 15

# FIG. 16

FIG. 17

# FIG. 18

$$Pa < Pc < Pb$$
$$Pa < Pd < Pb$$

FIG. 19

FIG. 20

FIG. 21

FIG. 22

FIG. 23

EP 1 199 696 A1

FIG. 24

EP 1 199 696 A1

FIG. 25

FIG. 26

EP 1 199 696 A1

FIG. 27

EP 1 199 696 A1

FIG. 28

EP 1 199 696 A1

FIG. 29

FIG. 30

FIG. 31

FIG. 32

FIG. 33

# FIG. 34

FIG. 35

FIG. 36

10Ca

104

140 (222)

100e     152     100a

102

160

104

104

104

104

FIG. 37

FIG. 38

DIFFERENCE IN REFRACTIVE INDEX

THICKNESS (mm)

EP 1 199 696 A1

# FIG. 39

FIG. 40

# FIG. 41

FIG. 42

FIG. 43

## FIG. 44

# FIG. 45

10Db

# FIG. 46

10Db

# FIG. 47

10Dc

FIG. 48

104    10Dc    170

100e    152    100a    110

102    160

104

100d

104
100c

104

100b    104

# FIG. 49

# FIG. 50

# FIG. 51

# FIG. 52

FIG. 53

## FIG. 54

FIG. 55

FIG. 56

FIG. 57A

20

≦L/3

216a

216a

≦L/3

216a

≦L/3

L

FIG. 57B

20

216b

216b

FIG. 57C

20

216c

FIG. 58A

FIG. 58B

FIG. 59A

FIG. 59B

EP 1 199 696 A1

FIG. 60

FIG. 61

EP 1 199 696 A1

EP 1 199 696 A1

FIG. 62

## FIG. 63

## FIG. 64

# FIG. 65A

## XXXXXXVB

140

230

14

230

## XXXXXXVB

# FIG. 65B

110

112

14

152

230

140

226

14

112

110

EP 1 199 696 A1

# FIG. 66

```
          ┌─────────────┐
          │    START    │
          └──────┬──────┘
                 │
┌───────────────┴────────────────┐
│   OBTAIN CHARACTERISTIC VALUES FOR   │  S401
│    RESPECTIVE DISPLAY COMPONENTS     │
└───────────────┬────────────────┘
                 │
┌───────────────┴────────────────┐
│ RANKING DISPLAY COMPONENTS ON THE BASIS OF │  S402
│    OBTAINED CHARACTERISTIC VALUES    │
└───────────────┬────────────────┘
                 │
┌───────────────┴────────────────┐
│   PARTITION ARRANGEMENT AREA FOR DISPLAY   │  S403
│ COMPONENTS AND DESIGNATE RANKS OF DISPLAY  │
│  COMPONENTS TO BE ARRANGED IN RESPECTIVE   │
│                 AREAS                │
└───────────────┬────────────────┘
                 │
┌───────────────┴────────────────┐
│ ARRANGE DISPLAY COMPONENTS IN ACCORDANCE   │  S404
│     WITH FOREGOING DESIGNATION       │
└───────────────┬────────────────┘
                 │
          ┌──────┴──────┐
          │     END     │
          └─────────────┘
```

FIG. 67A

| | A RANK | B RANK | C RANK |
|---|---|---|---|
| AVERAGE LUMINANCE | NOT LESS THAN 1000 | NOT LESS THAN 900 AND LESS THAN 1000 | LESS THAN 900 |
| NUMBER OF DEFICIENCIES | NOT MORE THAN 1 | NOT LESS THAN 2 AND NOT MORE THAN 5 | NOT LESS THAN 6 |

FIG. 67B

| OVERALL RANK | LUMINANCE RANK | DEFICIENCY RANK |
|---|---|---|
| A | A | A |
| B | A | B |
| C | B | A |
| D | B | B |

FIG. 68A

FIG. 68B

## FIG. 69A

Z11

| | | | |
|---|---|---|---|
| 10 | 11 | 12 | 13 |
| 9 | 2 | 3 | 14 |
| 8 | 1 | 4 | |
| 7 | 6 | 5 | |

~14

14~

## FIG. 69B

Z11

| | | | |
|---|---|---|---|
| | 10 | | |
| 6 | 2 | 7 | |
| 4 | 1 | 5 | |
| 8 | 3 | 9 | |
| | 11 | | |

~14

14~

FIG. 70A

FIG. 70B

FIG. 71

300

FIG. 72

140   300   302

304

306

FIG. 73

## INTERNATIONAL SEARCH REPORT

| International application No. |
| --- |
| PCT/JP01/02499 |

| A. CLASSIFICATION OF SUBJECT MATTER |
| --- |
| Int.Cl$^7$   G09F9/40, G02B26/08 |

According to International Patent Classification (IPC) or to both national classification and IPC

| B. FIELDS SEARCHED |
| --- |

Minimum documentation searched (classification system followed by classification symbols)
Int.Cl$^7$   G09F9/30-9/40, G02B26/08

Documentation searched other than minimum documentation to the extent that such documents are included in the fields searched

| Jitsuyo Shinan Koho | 1926-1996 | Toroku Jitsuyo Shinan Koho | 1994-2001 |
| --- | --- | --- | --- |
| Kokai Jitsuyo Shinan Koho | 1971-2001 | Jitsuyo Shinan Toroku Koho | 1996-2001 |

Electronic data base consulted during the international search (name of data base and, where practicable, search terms used)

| C. DOCUMENTS CONSIDERED TO BE RELEVANT |
| --- |

| Category* | Citation of document, with indication, where appropriate, of the relevant passages | Relevant to claim No. |
| --- | --- | --- |
| A | JP, 10-307542, A (NGK Insulators, Ltd.), 17 November, 1998 (17.11.98), & US, 6108479, A | 1-46 |
| A | JP, 11-73142, A (NGK Insulators, Ltd.), 16 March, 1999 (16.03.99), & EP, 841708, A     & EP, 851260, A & EP, 853252, A     & US, 6091182, A | 1-46 |

☐ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 19 June, 2001 (19.06.01) | 26 June, 2001 (26.06.01) |

| Name and mailing address of the ISA/ | Authorized officer |
| --- | --- |
| Japanese Patent Office | |
| Facsimile No. | Telephone No. |

Form PCT/ISA/210 (second sheet) (July 1992)

112